# FASCICULE DE BREVET EUROPEEN

(11) **EP 1 412 838 B1**
(45) Date de publication et mention de la délivrance du brevet: **19.11.2014**
(21) Numéro de dépôt: 02762528.4
(22) Date de dépôt: 04.07.2002
(51) Int. Cl.: G06F 21/12

(54) **PROCEDE POUR PROTEGER UN LOGICIEL A L'AIDE DE "DETECTION ET COERCITION" CONTRE SON UTILISATION NON AUTORISEE**
VERFAHREN ZUM SCHUTZ VON SOFTWARE MITTELS "DETEKTION UND ZWANG" GEGEN UNBEFUGTE BENUTZUNG
METHOD FOR PROTECTING A SOFTWARE USING A SO-CALLED DETECTION AND COERCION PRINCIPLE AGAINST ITS UNAUTHORISED USE

(30) Priorité: 31.07.2001 FR 0110244
(43) Date de publication de la demande: 28.04.2004
(73) Titulaire: VALIDY, 26100 Romans sur Isère (FR)
(72) Inventeur: CUENOD, Jean-Christophe, F-78360 Montesson (FR); SGRO, Gilles, F-26300 Bourg de Peage (FR)
(74) Mandataire: Thibault, Jean-Marc
(86) Numéro de dépôt international: PCT/FR2002/002343
(87) Numéro de publication internationale: WO 2003/012571

(56) Documents cités:
- WO-A-99/66387
- FR-A- 2 634 917
- US-A- 5 754 646

## Description

La présente invention concerne le domaine technique des systèmes de traitement de données au sens général et elle vise, plus précisément, les moyens pour protéger, contre son utilisation non autorisée, un logiciel fonctionnant sur lesdits systèmes de traitement de données.

L'objet de l'invention vise, plus particulièrement, les moyens pour protéger un logiciel contre son utilisation non autorisée, à partir d'une unité de traitement et de mémorisation, une telle unité étant communément matérialisée par une carte à puce ou par une clé matérielle sur port USB.

Dans le domaine technique ci-dessus, le principal inconvénient concerne l'emploi non autorisé de logiciels par des utilisateurs n'ayant pas acquitté des droits de licence. Cette utilisation illicite de logiciels cause un préjudice manifeste pour les éditeurs de logiciels, les distributeurs de logiciels et/ou toute personne intégrant de tels logiciels dans des produits. Pour éviter de telles copies illicites, il a été proposé dans l'état de la technique, diverses solutions pour protéger des logiciels.

Ainsi, il est connu une solution de protection consistant à mettre en oeuvre un système matériel de protection, tel qu'un élément physique appelé clé de protection ou "dongle" en terminologie anglo-saxonne. Une telle clé de protection devrait garantir l'exécution du logiciel uniquement en présence de la clé. Or, il doit être constaté qu'une telle solution est inefficace car elle présente l'inconvénient d'être facilement contournable. Une personne mal intentionnée ou pirate peut, à l'aide d'outils spécialisés, tels que des désassembleurs, supprimer les instructions de contrôle de la clé de protection. Il devient alors possible de réaliser des copies illicites correspondant à des versions modifiées des logiciels n'ayant plus aucune protection. De plus, cette solution ne peut pas être généralisée à tous les logiciels, dans la mesure où il est difficile de connecter plus de deux clés de protection sur un même système.

Il est connu aussi par le document WO 99/66387, un procédé de protection d'un programme d'ordinateur consistant à scinder le programme en au moins deux parties respectivement publique et secrète, et à exécuter dans la partie secrète, après réception de paramètres, au moins une partie du programme, puis à retransmettre les résultats à la partie publique.

Le brevet US 5 754 646 décrit un procédé de protection d'un logiciel consistant à le scinder en deux parties dont au moins une partie s'exécute dans une clé matérielle. La partie s'exécutant dans la clé matérielle est téléchargée à partir d'un réseau. La connexion au réseau est réalisée lors du démarrage du logiciel protégé.

La demande de brevet FR 2 634 917 décrit un procédé de protection d'un logiciel consistant à enregistrer une partie essentielle du logiciel dans une mémoire reliée à un microprocesseur et à enfermer l'ensemble mémoire-microprocesseur dans un boîtier de type inviolable comprenant des moyens de connexion entre ledit microprocesseur et un microprocesseur extérieur d'un système d'utilisation du logiciel.

L'objet de l'invention vise justement à remédier aux inconvénients énoncés ci-dessus en proposant un procédé pour protéger un logiciel contre son utilisation non autorisée, à partir d'une unité de traitement et de mémorisation ad hoc, dans la mesure où la présence d'une telle unité est nécessaire pour que le logiciel soit complètement fonctionnel.

Pour atteindre un tel objectif, l'objet de l'invention concerne un procédé pour protéger, à partir d'au moins une unité vierge comportant au moins des moyens de traitement et des moyens de mémorisation, un logiciel vulnérable contre son utilisation non autorisée, ledit logiciel vulnérable fonctionnant sur un système de traitement de données. Le procédé selon l'invention consiste :
→ dans une phase de protection :
   - à définir :
      - au moins une caractéristique d'exécution de logiciel, susceptible d'être surveillée au moins en partie dans une unité,
      - au moins un critère à respecter pour au moins une caractéristique d'exécution de logiciel,
      - des moyens de détection à mettre en oeuvre dans une unité et permettant de détecter qu'au moins une caractéristique d'exécution de logiciel ne respecte pas au moins un critère associé,
      - et des moyens de coercition à mettre en oeuvre dans une unité et permettant d'informer le système de traitement de données et/ou de modifier l'exécution d'un logiciel lorsqu'au moins un critère n'est pas respecté,
   - à construire des moyens d'exploitation permettant de transformer l'unité vierge en une unité capable de mettre en oeuvre les moyens de détection et les moyens de coercition,
   - à créer un logiciel protégé :
      - en choisissant au moins une caractéristique d'exécution de logiciel à surveiller, parmi les caractéristiques d'exécution susceptibles d'être surveillées,
      - en choisissant au moins un critère à respecter pour au moins une caractéristique d'exécution de logiciel choisie,
      - en choisissant, au moins un traitement algorithmique qui, lors de l'exécution du logiciel vulnérable, utilise au moins un opérande et permet d'obtenir au moins un résultat, et pour lequel au moins une caractéristique d'exécution de logiciel choisie, est à surveiller,
      - en choisissant au moins une portion du source du logiciel vulnérable contenant, au moins un traitement algorithmique choisi,
      - en produisant le source du logiciel protégé à partir du source du logiciel vulnérable, en modifiant au moins une portion choisie du source du logiciel vulnérable pour obtenir au moins une portion modifiée du source du logiciel protégé, cette modification étant telle que :
         ➢ lors de l'exécution du logiciel protégé une première partie d'exécution est exécutée dans le système de traitement de données et une seconde partie d'exécution est exécutée dans une unité, obtenue à partir de l'unité vierge après chargement d'informations,
         ➢ la seconde partie d'exécution exécute au moins la fonctionnalité d'au moins un traitement algorithmique choisi,
         ➢ et lors de l'exécution du logiciel protégé, au moins une caractéristique d'exécution choisie est surveillée au moyen de la seconde partie d'exécution et le non respect d'un critère aboutit à une modification de l'exécution du logiciel protégé,
      - et en produisant :
         ➢ une première partie objet du logiciel protégé, à partir du source du logiciel protégé, cette première partie objet étant telle que lors de l'exécution du logiciel protégé, apparaît une première partie d'exécution qui est exécutée dans le système de traitement de données et dont au moins une portion prend en compte qu'au moins une caractéristique d'exécution de logiciel choisie est surveillée,
         ➢ et une seconde partie objet du logiciel protégé, contenant les moyens d'exploitation mettant en oeuvre les moyens de détection et les moyens de coercition, cette seconde partie objet étant telle que, après chargement dans l'unité vierge et lors de l'exécution du logiciel protégé, apparaît la seconde partie d'exécution au moyen de laquelle au moins une caractéristique d'exécution de logiciel est surveillée et au moyen de laquelle le non respect d'un critère aboutit à une modification de l'exécution du logiciel protégé,
   - et à charger la seconde partie objet dans l'unité vierge, en vue d'obtenir l'unité,
→ et dans une phase d'utilisation au cours de laquelle est exécuté le logiciel protégé:
   - en présence de l'unité :
      - et tant que tous les critères correspondant à toutes les caractéristiques d'exécution surveillées de toutes les portions modifiées du logiciel protégé sont respectés, à permettre le fonctionnement nominal de ces portions du logiciel protégé et par conséquent à permettre le fonctionnement nominal du logiciel protégé,
      - et si au moins un des critères correspondant à une caractéristique d'exécution surveillée d'une portion du logiciel protégé n'est pas respecté, à en informer le système de traitement de données et/ou à modifier le fonctionnement de la portion du logiciel protégé, de sorte que le fonctionnement du logiciel protégé est modifié,
   - et en l'absence de l'unité, malgré la demande d'une portion de la première partie d'exécution de déclencher l'exécution dans l'unité, de la fonctionnalité d'un traitement algorithmique choisi, à ne pas pouvoir répondre correctement à cette demande, de sorte qu'au moins cette portion n'est pas exécutée correctement et que, par conséquent, le logiciel protégé n'est pas complètement fonctionnel.

Selon une variante de réalisation, le procédé selon l'invention consiste :
→ dans la phase de protection :
   - à définir :
      - en tant que caractéristique d'exécution de logiciel susceptible d'être surveillée, une variable de mesure de l'utilisation d'une fonctionnalité d'un logiciel,
      - en tant que critère à respecter, au moins un seuil associé à chaque variable de mesure,
      - et des moyens d'actualisation permettant de mettre à jour au moins une variable de mesure,
   - à construire les moyens d'exploitation permettant à l'unité de mettre aussi en oeuvre les moyens d'actualisation,
   - et à modifier le logiciel protégé :
      - en choisissant en tant que caractéristique d'exécution de logiciel à surveiller, au moins une variable de mesure de l'utilisation d'une fonctionnalité d'un logiciel,
      - en choisissant :
         ➢ au moins une fonctionnalité du logiciel protégé dont l'utilisation est susceptible d'être surveillée grâce à une variable de mesure,
         ➢ au moins une variable de mesure servant à quantifier l'utilisation de ladite fonctionnalité,
         ➢ au moins un seuil associé à une variable de mesure choisie correspondant à une limite d'utilisation de ladite fonctionnalité,
         ➢ et au moins une méthode de mise à jour d'une variable de mesure choisie en fonction de l'utilisation de ladite fonctionnalité,
      - et en modifiant au moins une portion choisie du source du logiciel protégé, cette modification étant telle que, lors de l'exécution du logiciel protégé, la variable de mesure est actualisée au moyen de la seconde partie d'exécution, en fonction de l'utilisation de ladite fonctionnalité et au moins un dépassement de seuil est pris en compte,
→ et dans la phase d'utilisation, en présence de l'unité, et dans le cas où il est détecté au moins un dépassement de seuil correspondant à au moins une limite d'utilisation, à en informer le système de traitement de données et/ou à modifier le fonctionnement de la portion du logiciel protégé, de sorte que le fonctionnement du logiciel protégé est modifié.

Selon une variante de réalisation, le procédé selon l'invention consiste :
→ dans la phase de protection :
   - à définir :
      - pour au moins une variable de mesure, plusieurs seuils associés,
      - et des moyens de coercition différents correspondant à chacun de ces seuils,
   - et à modifier le logiciel protégé :
      - en choisissant dans le source du logiciel protégé, au moins une variable de mesure choisie à laquelle doivent être associés plusieurs seuils correspondants à des limites différentes d'utilisation de la fonctionnalité,
      - en choisissant au moins deux seuils associés à la variable de mesure choisie,
      - et en modifiant au moins une portion choisie du source du logiciel protégé, cette modification étant telle que, lors de l'exécution du logiciel protégé, les dépassements des divers seuils sont pris en compte, au moyen de la seconde partie d'exécution, de manière différente,
→ et dans la phase d'utilisation :
   - en présence de l'unité :
      - dans le cas où il est détecté le dépassement d'un premier seuil, à enjoindre le logiciel protégé de ne plus utiliser la fonctionnalité correspondante,
      - et dans le cas où il est détecté le dépassement d'un deuxième seuil, à rendre inopérante la fonctionnalité correspondant et/ou au moins une portion du logiciel protégé.

Selon une variante de réalisation, le procédé selon l'invention consiste :
→ dans la phase de protection :
   - à définir des moyens de rechargement permettant de créditer au moins une utilisation supplémentaire pour au moins une fonctionnalité de logiciel surveillée par une variable de mesure,
   - à construire les moyens d'exploitation permettant aussi à l'unité de mettre en oeuvre les moyens de rechargement,
   - et à modifier le logiciel protégé :
      - en choisissant dans le source du logiciel protégé, au moins une variable de mesure choisie permettant de limiter l'utilisation d'une fonctionnalité à laquelle au moins une utilisation supplémentaire doit pouvoir être créditée,
      - et en modifiant au moins une portion choisie, cette modification étant telle que dans une phase dite de rechargement, au moins une utilisation supplémentaire d'au moins une fonctionnalité correspondant à une variable de mesure choisie peut être créditée,
→ et dans la phase de rechargement :
   - à réactualiser au moins une variable de mesure choisie et/ou au moins un seuil associé, de manière à permettre au moins une utilisation supplémentaire de la fonctionnalité.

Selon une variante de réalisation, le procédé selon l'invention consiste :
→ dans la phase de protection :
   - à définir :
      - en tant que caractéristique d'exécution de logiciel susceptible d'être surveillée, un profil d'utilisation de logiciel,
      - et en tant que critère à respecter, au moins un trait d'exécution de logiciel,
   - et à modifier le logiciel protégé :
      - en choisissant en tant que caractéristique d'exécution de logiciel à surveiller au moins un profil d'utilisation de logiciel,
      - en choisissant au moins un trait d'exécution qu'au moins un profil d'utilisation choisi doit respecter,
      - et en modifiant au moins une portion choisie du source du logiciel protégé, cette modification étant telle que, lors de l'exécution du logiciel protégé, la seconde partie d'exécution respecte tous les traits d'exécution choisis,
→ et dans la phase d'utilisation en présence de l'unité, et dans le cas où il est détecté qu'au moins un trait d'exécution n'est pas respecté, à en informer le système de traitement de données et/ou à modifier le fonctionnement de la portion du logiciel protégé, de sorte que le fonctionnement du logiciel protégé est modifié.

Selon une variante de réalisation, le procédé selon l'invention consiste :
→ dans la phase de protection :
   - à définir :
      - un jeu d'instructions dont les instructions sont susceptibles d'être exécutées dans l'unité,
      - un jeu de commandes d'instructions pour ce jeu d'instructions, ces commandes d'instructions étant susceptibles d'être exécutées dans le système de traitement de données et de déclencher dans l'unité l'exécution des instructions,
      - en tant que profil d'utilisation, l'enchaînement des instructions,
      - en tant que trait d'exécution, un enchaînement souhaité pour l'exécution des instructions,
      - en tant que moyens de détection, des moyens permettant de détecter que l'enchaînement des instructions ne correspond pas à celui souhaité,
      - et en tant que moyens de coercition, des moyens permettant d'informer le système de traitement de données et/ou de modifier le fonctionnement de la portion de logiciel protégé lorsque l'enchaînement des instructions ne correspond pas à celui souhaité,
   - à construire les moyens d'exploitation permettant aussi à l'unité d'exécuter les instructions du jeu d'instructions, l'exécution de ces instructions étant déclenchée par l'exécution dans le système de traitement de données, des commandes d'instructions,
   - et à modifier le logiciel protégé :
      - en modifiant au moins une portion choisie du source du logiciel protégé, cette modification étant telle que :
         ➢ au moins un traitement algorithmique choisi est décomposé de manière que lors de l'exécution du logiciel protégé, ce traitement algorithmique est exécuté au moyen de la seconde partie d'exécution, en utilisant des instructions,
         ➢ pour au moins un traitement algorithmique choisi, des commandes d'instructions sont intégrées dans le source du logiciel protégé, de manière que lors de l'exécution du logiciel protégé, chaque commande d'instruction est exécutée par la première partie d'exécution et déclenche dans l'unité, l'exécution au moyen de la seconde partie d'exécution, d'une instruction,
         ➢ un ordonnancement des commandes d'instructions est choisi parmi l'ensemble des ordonnancements permettant l'exécution du logiciel protégé,
         ➢ et l'enchaînement que doivent respecter au moins certaines des instructions lors de leur exécution dans l'unité est spécifié,
→ et dans la phase d'utilisation, en présence de l'unité, dans le cas où il est détecté que l'enchaînement des instructions exécutées dans l'unité ne correspond pas à celui souhaité, à en informer le système de traitement de données et/ou à modifier le fonctionnement de la portion du logiciel protégé, de sorte que le fonctionnement du logiciel protégé est modifié.

Selon une variante de réalisation, le procédé selon l'invention consiste :
→ dans la phase de protection :
   - à définir :
      - en tant que jeu d'instructions, un jeu d'instructions dont au moins certaines instructions travaillent sur des registres et utilisent au moins un opérande en vue de rendre un résultat,
      - pour au moins une partie des instructions travaillant sur des registres :
         ➢ une partie définissant la fonctionnalité de l'instruction,
         ➢ et une partie définissant l'enchaînement souhaité pour l'exécution des instructions et comportant des champs de bits correspondant à :
            ◇ un champ d'identification de l'instruction,
            ◇ et pour chaque opérande de l'instruction :
               * un champ drapeau,
               * et un champ d'identification prévue de l'opérande,
      - pour chaque registre appartenant aux moyens d'exploitation et utilisé par le jeu d'instructions, un champ d'identification générée dans lequel est automatiquement mémorisée l'identification de la dernière instruction ayant rendu son résultat dans ce registre,
      - en tant que moyens de détection, des moyens permettant, lors de l'exécution d'une instruction, pour chaque opérande, lorsque le champ drapeau l'impose, de contrôler l'égalité entre le champ d'identification générée correspondant au registre utilisé par cet opérande, et le champ d'identification prévue de l'origine de cet opérande,
      - et en tant que moyens de coercition, des moyens permettant de modifier le résultat des instructions, si au moins une des égalités contrôlées est fausse.

Selon une forme préférée de réalisation, le procédé selon l'invention consiste :
→ dans la phase de protection :
   - à modifier le logiciel protégé:
      - en choisissant au moins une variable utilisée dans au moins un traitement algorithmique choisi, qui lors de l'exécution du logiciel protégé, définit partiellement l'état du logiciel protégé,
      - en modifiant au moins une portion choisie du source du logiciel protégé, cette modification étant telle que lors de l'exécution du logiciel protégé, au moins une variable choisie ou au moins une copie de variable choisie réside dans l'unité,
      - et en produisant :
         ➢ la première partie objet du logiciel protégé, cette première partie objet étant telle que lors de l'exécution du logiciel protégé, au moins une portion de la première partie d'exécution prend aussi en compte qu'au moins une variable ou au moins une copie de variable réside dans l'unité,
         ➢ et la seconde partie objet du logiciel protégé, cette seconde partie objet étant telle que, après chargement dans l'unité et lors de l'exécution du logiciel protégé, apparaît la seconde partie d'exécution au moyen de laquelle au moins une variable choisie, ou au moins une copie de variable choisie réside aussi dans l'unité,
→ et dans la phase d'utilisation :
   - en présence de l'unité à chaque fois qu'une portion de la première partie d'exécution l'impose, à utiliser une variable ou une copie de variable résidant dans l'unité, de sorte que cette portion est exécutée correctement et que, par conséquent, le logiciel protégé est complètement fonctionnel,
   - et en l'absence de l'unité, malgré la demande d'une portion de la première partie d'exécution d'utiliser une variable ou une copie de variable résidant dans l'unité, à ne pouvoir répondre correctement à cette demande, de sorte qu'au moins cette portion n'est pas exécutée correctement et que, par conséquent, le logiciel protégé n'est pas complètement fonctionnel.

Selon une autre forme préférée de réalisation, le procédé selon l'invention consiste :
→ dans la phase de protection :
   - à définir :
      - en tant qu'une commande déclenchante, une commande d'instruction,
      - en tant qu'une fonction dépendante, une instruction,
      - en tant qu'une consigne, au moins un argument pour une commande déclenchante, correspondant au moins en partie à l'information transmise par le système de traitement de données à l'unité, afin de déclencher l'exécution de la fonction dépendante correspondante,
      - une méthode de renommage des consignes permettant de renommer les consignes afin d'obtenir des commandes déclenchantes à consignes renommées,
      - et des moyens de rétablissement destinés à être mis en oeuvre dans l'unité au cours de la phase d'utilisation, et permettant de retrouver la fonction dépendante à exécuter, à partir de la consigne renommée,
   - à construire des moyens d'exploitation permettant à l'unité de mettre aussi en oeuvre les moyens de rétablissement,
   - et à modifier le logiciel protégé :
      - en choisissant dans le source du logiciel protégé, des commandes déclenchantes,
      - en modifiant au moins une portion choisie du source du logiciel protégé en renommant les consignes des commandes déclenchantes choisies, afin de dissimuler l'identité des fonctions dépendantes correspondantes,
      - et en produisant :
         ➢ la première partie objet du logiciel protégé, cette première partie objet étant telle que lors de l'exécution du logiciel protégé, les commandes déclenchantes à consignes renommées sont exécutées,
         ➢ et la seconde partie objet du logiciel protégé contenant les moyens d'exploitation mettant aussi en oeuvre les moyens de rétablissement, cette seconde partie objet étant telle que, après chargement dans l'unité et lors de l'exécution du logiciel protégé, l'identité des fonctions dépendantes dont l'exécution est déclenchée par la première partie d'exécution est rétablie au moyen de la seconde partie d'exécution, et les fonctions dépendantes sont exécutées au moyen de la seconde partie d'exécution,
→ et dans la phase d'utilisation :
   - en présence de l'unité et à chaque fois qu'une commande déclenchante à consigne renommée, contenue dans une portion de la première partie d'exécution l'impose, à rétablir dans l'unité, l'identité de la fonction dépendante correspondante et à exécuter celle-ci, de sorte que cette portion est exécutée correctement et que, par conséquent, le logiciel protégé est complètement fonctionnel,
   - et en l'absence de l'unité, malgré la demande d'une portion de la première partie d'exécution, de déclencher l'exécution d'une fonction dépendante dans l'unité, à ne pas pouvoir répondre correctement à cette demande, de sorte qu'au moins cette portion n'est pas exécutée correctement et que, par conséquent, le logiciel protégé n'est pas complètement fonctionnel.

Selon une variante de réalisation, le procédé selon l'invention consiste :
→ dans la phase de protection :
   - à définir pour au moins une fonction dépendante, une famille de fonctions dépendantes algorithmiquement équivalentes, mais déclenchées par des commandes déclenchantes dont les consignes renommées sont différentes,
   - et à modifier le logiciel protégé :
      - en choisissant dans le source du logiciel protégé au moins une commande déclenchante à consigne renommée,
      - et en modifiant au moins une portion choisie du source du logiciel protégé en remplaçant au moins la consigne renommée d'une commande déclenchante à consigne renommée choisie, par une autre consigne renommée, déclenchant une fonction dépendante de la même famille.

Selon une variante de réalisation, le procédé selon l'invention consiste :
→ dans la phase de protection, à définir, pour au moins une fonction dépendante, une famille de fonctions dépendantes algorithmiquement équivalentes :
   - en concaténant un champ de bruit à l'information définissant la partie fonctionnelle de la fonction dépendante à exécuter dans l'unité,
   - ou en utilisant le champ d'identification de l'instruction et les champs d'identification prévue des opérandes.

Selon une variante de réalisation, le procédé selon l'invention consiste :
→ dans la phase de protection :
   - à définir :
      - en tant que méthode de renommage des consignes, une méthode de chiffrement pour chiffrer les consignes,
      - et en tant que moyens de rétablissement, des moyens mettant en oeuvre une méthode de déchiffrement pour déchiffrer les consignes renommées et rétablir ainsi l'identité des fonctions dépendantes à exécuter dans l'unité.

Selon une autre forme préférée de réalisation, le procédé selon l'invention consiste :
→ dans la phase de protection :
   - à modifier le logiciel protégé :
      - en choisissant dans le source du logiciel protégé, au moins un branchement conditionnel effectué dans au moins un traitement algorithmique choisi,
      - en modifiant au moins une portion choisie du source du logiciel protégé, cette modification étant telle que lors de l'exécution du logiciel protégé, la fonctionnalité d'au moins un branchement conditionnel choisi, est exécutée, au moyen de la seconde partie d'exécution, dans l'unité,
      - et en produisant :
         ➢ la première partie objet du logiciel protégé, cette première partie objet étant telle que lors de l'exécution du logiciel protégé, la fonctionnalité d'au moins un branchement conditionnel choisi est exécutée dans l'unité,
         ➢ et la seconde partie objet du logiciel protégé, cette seconde partie objet étant telle que, après chargement dans l'unité et lors de l'exécution du logiciel protégé, apparaît la seconde partie d'exécution au moyen de laquelle la fonctionnalité d'au moins un branchement conditionnel choisi est exécutée,
→ et dans la phase d'utilisation :
   - en présence de l'unité et à chaque fois qu'une portion de la première partie d'exécution l'impose, à exécuter la fonctionnalité d'au moins un branchement conditionnel dans l'unité, de sorte que cette portion est exécutée correctement et que, par conséquent, le logiciel protégé est complètement fonctionnel,
   - et en l'absence de l'unité et malgré la demande d'une portion de la première partie d'exécution d'exécuter la fonctionnalité d'un branchement conditionnel dans l'unité, à ne pas pouvoir répondre correctement à cette demande, de sorte qu'au moins cette portion n'est pas exécutée correctement et que par conséquent, le logiciel protégé n'est pas complètement fonctionnel.

Selon une variante de réalisation, le procédé selon l'invention consiste, dans la phase de protection, à modifier le logiciel protégé :
- en choisissant, dans le source du logiciel protégé au moins une série de branchements conditionnels choisis,
- en modifiant au moins une portion choisie du source du logiciel protégé, cette modification étant telle que lors de l'exécution du logiciel protégé, la fonctionnalité globale d'au moins une série choisie de branchements conditionnels est exécutée au moyen de la seconde partie d'exécution, dans l'unité,
- et en produisant :
   ➢ la première partie objet du logiciel protégé, cette première partie objet étant telle que lors de l'exécution du logiciel protégé, la fonctionnalité d'au moins une série choisie de branchements conditionnels est exécutée dans l'unité,
   ➢ et la seconde partie objet du logiciel protégé, cette seconde partie objet étant telle que, après chargement dans l'unité et lors de l'exécution du logiciel protégé, apparaît la seconde partie d'exécution au moyen de laquelle la fonctionnalité globale d'au moins une série choisie de branchements conditionnels est exécutée.

Le procédé selon l'invention permet ainsi de protéger l'utilisation d'un logiciel par la mise en oeuvre d'une unité de traitement et de mémorisation qui présente la particularité de contenir une partie du logiciel en cours d'exécution. Il s'ensuit que toute version dérivée du logiciel tentant de fonctionner sans l'unité de traitement et de mémorisation impose de recréer la partie du logiciel contenue dans l'unité de traitement et de mémorisation lors de l'exécution, sous peine que cette version dérivée du logiciel ne soit pas complètement fonctionnelle.

Diverses autres caractéristiques ressortent de la description faite ci-dessous en référence aux dessins annexés qui montrent, à titre d'exemples non limitatifs, des formes de réalisation et de mise en oeuvre de l'objet de l'invention.

Les **fig. 10** et **11** sont des schémas blocs fonctionnels illustrant les diverses représentations d'un logiciel respectivement non protégé et protégé par le procédé conforme à l'invention.

Les **fig. 20** à **22** illustrent à titre d'exemples, diverses formes de réalisation d'un dispositif de mise en oeuvre du procédé conforme à l'invention.

Les **fig. 30** et **31** sont des schémas blocs fonctionnels explicitant le principe général du procédé conforme à l'invention.

Les **fig. 40** à **43** sont des schémas illustrant le procédé de protection selon l'invention mettant en oeuvre le principe de protection par variable.

Les **fig. 70** à **74** sont des schémas illustrant le procédé de protection selon l'invention mettant en oeuvre le principe de protection par détection et coercition.

Les **fig. 80** à **85** sont des schémas illustrant le procédé de protection selon l'invention mettant en oeuvre le principe de protection par renommage.

Les **fig. 90** à **92** sont des schémas illustrant le procédé de protection selon l'invention mettant en oeuvre le principe de protection par branchement conditionnel.

La **fig. 100** est un schéma illustrant les différentes phases de mise en oeuvre de l'objet de l'invention.

La **fig. 110** illustre un exemple de réalisation d'un système permettant la mise en oeuvre du stade de construction de la phase de protection conforme à l'invention.

La **fig. 120** illustre un exemple de réalisation d'une unité de pré-personnalisation utilisée dans le procédé de protection conforme à l'invention.

La **fig. 130** illustre un exemple de réalisation d'un système permettant la mise en oeuvre du stade de confection d'outils de la phase de protection conforme à l'invention.

La **fig. 140** illustre un exemple de réalisation d'un système permettant la mise en oeuvre du procédé de protection selon l'invention.

La **fig. 150** illustre un exemple de réalisation d'une unité de personnalisation utilisée dans le procédé de protection conforme à l'invention.

Dans la suite de la description, les définitions suivantes seront utilisées :
- Un système de traitement de données **3** est un système capable d'exécuter un programme.
- Une unité de traitement et de mémorisation est une unité capable :
   - d'accepter des données fournies par un système de traitement de données **3**,
   - de restituer des données au système de traitement de données **3**,
   - de stocker des données au moins en partie de manière secrète et de conserver au moins une partie de celles-ci même lorsque l'unité est hors tension,
   - et d'effectuer du traitement algorithmique sur des données, une partie ou la totalité de ce traitement étant secret.
- Une unité **6** est une unité de traitement et de mémorisation mettant en oeuvre le procédé selon l'invention.
- Une unité vierge **60** est une unité qui ne met pas en oeuvre le procédé selon l'invention, mais qui peut recevoir des informations la transformant en une unité **6**.
- Une unité pré-personnalisée **66** est une unité vierge **60** ayant reçue une partie des informations lui permettant, après réception d'informations complémentaires, d'être transformée en une unité **6**.
- Le chargement d'informations dans une unité vierge **60** ou une unité pré-personnalisée **66** correspond à un transfert d'informations dans l'unité vierge **60** ou l'unité pré-personnalisée **66**, et à un stockage desdites informations transférées. Eventuellement, le transfert peut comporter un changement de format des informations.
- Une variable, une donnée ou une fonction contenue dans le système de traitement de données **3** sera indiquée par une majuscule, tandis qu'une variable, une donnée ou une fonction contenue dans l'unité **6** sera indiquée par une minuscule.
- Un "logiciel protégé", est un logiciel ayant été protégé par au moins un principe de protection mis en oeuvre par le procédé conforme à l'invention.
- Un "logiciel vulnérable", est un logiciel n'ayant été protégé par aucun principe de protection mis en oeuvre par le procédé conforme à l'invention.
- Dans le cas où la différenciation entre un logiciel vulnérable et un logiciel protégé n'a pas d'importance, le terme "logiciel" est utilisé.
- Un logiciel se présente sous diverses représentations selon l'instant considéré dans son cycle de vie :
   - une représentation source,
   - une représentation objet,
   - une distribution,
   - ou une représentation dynamique.
- Une représentation source d'un logiciel est comprise comme une représentation qui après transformation, donne une représentation objet. Une représentation source peut se présenter selon différents niveaux, d'un niveau conceptuel abstrait à un niveau exécutable directement par un système de traitement de données ou une unité de traitement et de mémorisation.
- Une représentation objet d'un logiciel correspond à un niveau de représentation qui après transfert dans une distribution puis chargement dans un système de traitement de données ou une unité de traitement et de mémorisation, peut être exécuté. Il peut s'agir, par exemple, d'un code binaire, d'un code interprété, etc.
- Une distribution est un support physique ou virtuel contenant la représentation objet, cette distribution devant être mise à disposition de l'utilisateur pour lui permettre d'utiliser le logiciel.
- Une représentation dynamique correspond à l'exécution du logiciel à partir de sa distribution.
- Une portion de logiciel correspond à une partie quelconque de logiciel et peut, par exemple correspondre, à une ou plusieurs instructions consécutives ou non, et/ou à un ou plusieurs blocs fonctionnels consécutifs ou non, et/ou à une ou plusieurs fonctions, et/ou un ou plusieurs sous programmes, et/ou un ou plusieurs modules. Une portion d'un logiciel peut correspondre aussi à la totalité de ce logiciel.

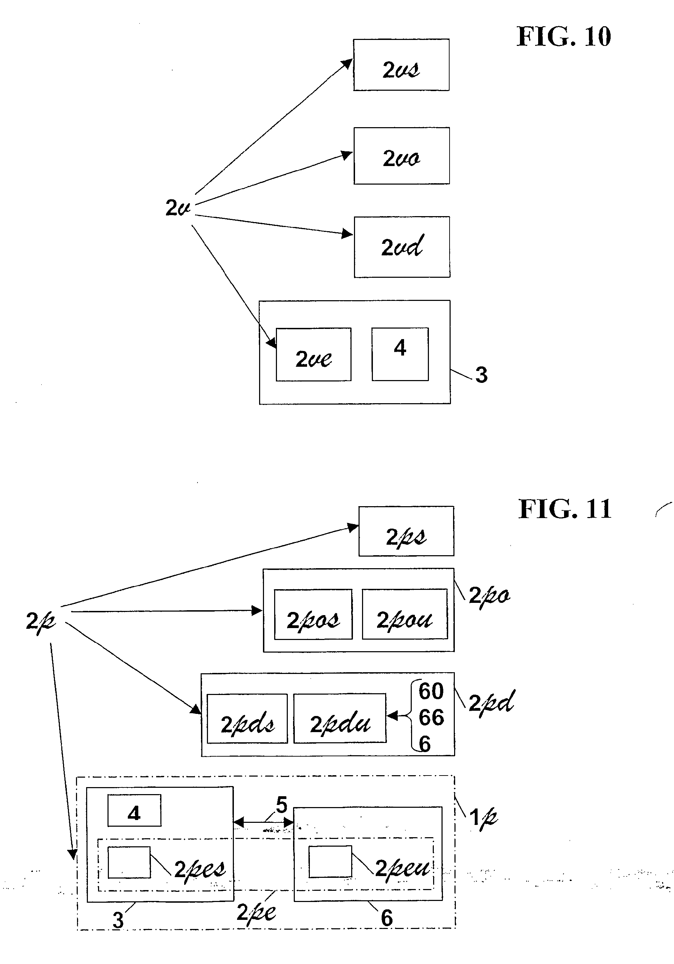

Les **fig. 10** et **11** illustrent les diverses représentations respectivement d'un logiciel vulnérable **2v** au sens général, et d'un logiciel protégé **2p** selon le procédé conforme à l'invention.

La **fig. 10** illustre diverses représentations d'un logiciel vulnérable **2v** apparaissant au cours de son cycle de vie. Le logiciel vulnérable **2v** peut ainsi apparaître sous l'une des représentations suivantes :
- une représentation source **2vs**,
- une représentation objet **2vo**,
- une distribution **2vd**. Cette distribution peut se présenter communément sous la forme d'un moyen de distribution physique tel qu'un CDROM ou sous la forme de fichiers distribués à travers un réseau (GSM, Internet, ...),
- ou d'une représentation dynamique **2ve** correspondant à l'exécution du logiciel vulnérable **2v** sur un système de traitement de données **3** de tous types connus, qui comporte de manière classique, au moins un processeur **4**.

La **fig. 11** illustre diverses représentations d'un logiciel protégé **2p** apparaissant au cours de son cycle de vie. Le logiciel protégé **2p** peut ainsi apparaître sous l'une des représentations suivantes :
- une représentation source **2ps** comportant une première partie source destinée au système de traitement de données **3** et une seconde partie source destinée à l'unité **6**, une partie de ces parties source pouvant communément être contenue dans des fichiers communs,
- une représentation objet **2po** comportant une première partie objet **2pos** destinée au système de traitement de données **3** et une seconde partie objet **2pou** destinée à l'unité **6**,
- une distribution **2pd** comportant :
   - une première partie de distribution **2pds** contenant la première partie objet **2pos**, cette première partie de distribution **2pds** étant destinée au système de traitement de données **3** et pouvant se présenter communément sous la forme d'un moyen de distribution physique tel qu'un CDROM, ou sous la forme de fichiers distribués à travers un réseau (GSM, Internent, ...),
   - et une seconde partie de distribution **2pdu** se présentant sous la forme :
      ➢ d'au moins une unité pré-personnalisée **66** sur laquelle une partie de la seconde partie objet **2pou** a été chargée et pour laquelle l'utilisateur doit terminer la personnalisation en chargeant des informations complémentaires, afin d'obtenir une unité **6**, ces informations complémentaires étant obtenues, par exemple, par chargement ou téléchargement à travers un réseau,
      ➢ ou d'au moins une unité **6** sur laquelle la seconde partie objet **2pou** a été chargée,
- ou une représentation dynamique **2pe** correspondant à l'exécution du logiciel protégé **2p.** Cette représentation dynamique **2pe** comporte une première partie d'exécution **2pes** qui est exécutée dans le système de traitement de données **3** et une seconde partie d'exécution **2peu** qui est exécutée dans l'unité **6**.

Dans le cas où la différenciation entre les différentes représentations du logiciel protégé **2p** n'a pas d'importance, les expressions première partie du logiciel protégé et deuxième partie du logiciel protégé sont utilisées.

La mise en oeuvre du procédé selon l'invention conformément à la représentation dynamique de la **fig**. **11**, utilise un dispositif **1p** comportant un système de traitement de données **3** relié par une liaison **5** à une unité **6**. Le système de traitement de données **3** est de tous types et comporte, de manière classique, au moins un processeur **4**. Le système de traitement de données **3** peut être un ordinateur ou faire partie, par exemple, de diverses machines, dispositifs, produits fixes ou mobiles, ou véhicules au sens général. La liaison **5** peut être réalisée de toute manière possible, telle que par exemple par une ligne série, un bus USB, une liaison radio, une liaison optique, une liaison réseau ou une connexion électrique directe sur un circuit du système de traitement de données **3**, etc. Il est à noter que l'unité **6** peut éventuellement se trouver physiquement à l'intérieur du même circuit intégré que le processeur **4** du système de traitement de données **3**. Dans ce cas, l'unité **6** peut être considérée comme un co-processeur par rapport au processeur **4** du système de traitement de données **3** et la liaison **5** est interne au circuit intégré.

Les **fig**. **20** à **22** montrent de manière illustrative et à titre non limitatif, diverses formes de réalisation du dispositif **1p** permettant la mise en oeuvre du procédé de protection conforme à l'invention.

Dans l'exemple de réalisation illustré à la **fig**. **20**, le dispositif de protection **1p** comporte, en tant que système de traitement de données **3**, un ordinateur et, en tant qu'unité **6**, une carte à puce **7** et son interface **8** communément appelé lecteur de carte. L'ordinateur **3** est relié à l'unité **6** par une liaison **5**. Lors de l'exécution d'un logiciel protégé **2p,** la première partie d'exécution **2pes** qui est exécutée dans l'ordinateur **3** et la seconde partie d'exécution **2peu** qui est exécutée dans la carte à puce **7** et son interface **8,** doivent toutes les deux être fonctionnelles afin que le logiciel protégé **2p** soit complètement fonctionnel.

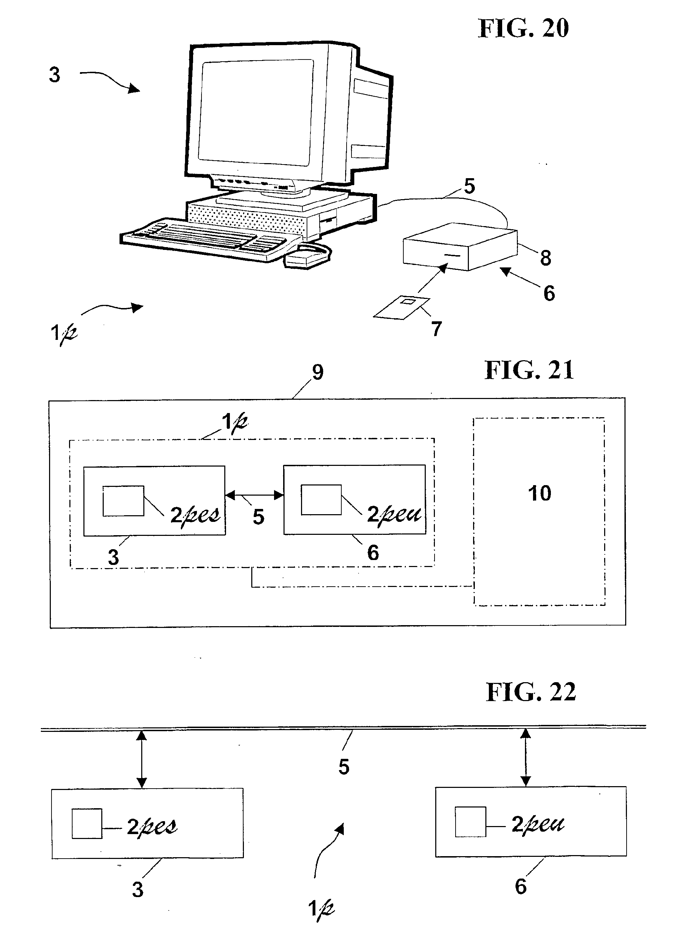

Dans l'exemple de réalisation illustré à la **fig. 21**, le dispositif de protection **1p** équipe un produit **9** au sens général, comportant divers organes **10** adaptés à la ou les fonctions assumées par un tel produit **9**. Le dispositif de protection **1p** comporte, d'une part, un système de traitement de données **3** embarqué dans le produit **9** et, d'autre part, une unité **6** associée au produit **9**. Pour que le produit **9** soit entièrement fonctionnel, le logiciel protégé **2p** doit être complètement fonctionnel. Ainsi, lors de l'exécution du logiciel protégé **2p**, la première partie d'exécution **2pes** qui est exécutée dans le système de traitement de données **3** et la seconde partie d'exécution **2peu** qui est exécutée dans l'unité **6,** doivent toutes les deux être fonctionnelles. Ce logiciel protégé **2p** permet donc de manière indirecte, de protéger contre une utilisation non autorisée, le produit **9** ou l'une de ses fonctionnalités. Par exemple, le produit **9** peut être une installation, un système, une machine, un jouet, un appareil électroménager, un téléphone, etc..

Dans l'exemple de réalisation illustré à la **fig. 22**, le dispositif de protection **1p** inclut plusieurs ordinateurs, ainsi qu'une partie d'un réseau de communication. Le système de traitement de données **3** est un premier ordinateur relié par une liaison **5** de type réseau, à une unité **6** constituée par un deuxième ordinateur. Pour la mise en oeuvre de l'invention, le deuxième ordinateur **6** est utilisé comme un serveur de licences pour un logiciel protégé **2p**. Lors de l'exécution du logiciel protégé **2p**, la première partie d'exécution **2pes** qui est exécutée dans le premier ordinateur **3** et la seconde partie d'exécution **2peu** qui est exécutée dans le deuxième ordinateur **6**, doivent toutes les deux être fonctionnelles afin que le logiciel protégé **2p** soit complètement fonctionnel.

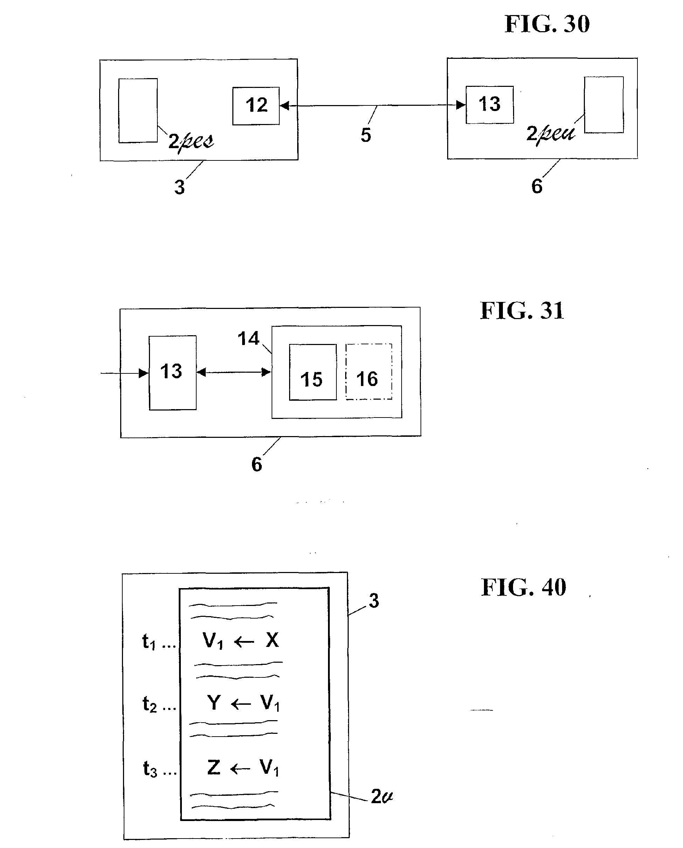

La **fig. 30** permet d'expliciter de manière plus précise, le procédé de protection conforme à l'invention. Il est à noter qu'un logiciel vulnérable **2v** est considéré comme étant exécuté totalement dans un système de traitement de données **3**. Par contre, dans le cas de la mise en oeuvre d'un logiciel protégé **2p**, le système de traitement de données **3** comporte des moyens de transfert **12** reliés par la liaison **5**, à des moyens de transfert **13** faisant partie de l'unité **6** permettant de faire communiquer entre elles, la première partie d'exécution **2pes** et la seconde partie d'exécution **2peu** du logiciel protégé **2p**.

Il doit être considéré que les moyens de transfert **12, 13** sont de nature logicielle et/ou matérielle et sont aptes à assurer et, éventuellement, à optimiser la communication des données entre le système de traitement de données **3** et l'unité **6.** Ces moyens de transfert **12, 13** sont adaptés pour permettre de disposer d'un logiciel protégé **2p** qui est, de préférence, indépendant du type de la liaison **5** utilisée. Ces moyens de transfert **12, 13** ne font pas partie de l'objet de l'invention et ne sont pas décrits plus précisément car ils sont bien connus de l'Homme de l'art. La première partie du logiciel protégé **2p** comporte des commandes. Lors de l'exécution du logiciel protégé **2p**, l'exécution de ces commandes par la première partie d'exécution **2pes** permet la communication entre la première partie d'exécution **2pes** et la seconde partie d'exécution **2peu**. Dans la suite de la description, ces commandes sont représentées par **1N**, **OUT** ou **TRIG.**

Tel qu'illustré à la **fig. 31**, pour permettre la mise en oeuvre de la seconde partie d'exécution **2peu** du logiciel protégé **2p**, l'unité **6** comporte des moyens de protection **14**. Les moyens de protection **14** comportent des moyens de mémorisation **15** et des moyens de traitement **16**.

Par souci de simplification dans la suite de la description, il est choisi de considérer, lors de l'exécution du logiciel protégé **2p**, la présence de l'unité **6** ou l'absence de l'unité **6.** En réalité, une unité **6** présentant des moyens de protection **14** inadaptés à l'exécution de la seconde partie d'exécution **2peu** du logiciel protégé **2p** est aussi considérée comme absente, à chaque fois que l'exécution du logiciel protégé **2p** n'est pas correct. En d'autres termes :
- une unité **6** physiquement présente et comportant des moyens de protection **14** adaptés à l'exécution de la seconde partie d'exécution **2peu** du logiciel protégé **2p**, est toujours considérée comme présente,
- une unité **6** physiquement présente mais comportant des moyens de protection **14** inadaptés, c'est-à-dire ne permettant pas la mise en oeuvre correcte de la seconde partie d'exécution **2peu** du logiciel protégé **2p** est considérée comme présente, lorsqu'elle fonctionnel correctement, et comme absente lorsqu'elle ne fonctionne pas correctement,
- et une unité **6** physiquement absente est toujours considérée comme absente.

Dans le cas où l'unité **6** est constituée par une carte à puce **7** et son interface **8**, les moyens de transfert **13** sont décomposés en deux parties dont l'une se trouve sur l'interface **8** et dont l'autre se trouve sur la carte à puce **7**. Dans cet exemple de réalisation, l'absence de la carte à puce **7** est considérée comme équivalente à l'absence de l'unité **6**. En d'autres termes, en l'absence de la carte à puce **7** et/ou de son interface **8**, les moyens de protection **14** ne sont pas accessibles et ne permettent donc pas l'exécution de la seconde partie d'exécution **2peu** du logiciel protégé, de sorte que le logiciel protégé **2p** n'est pas complètement fonctionnel.

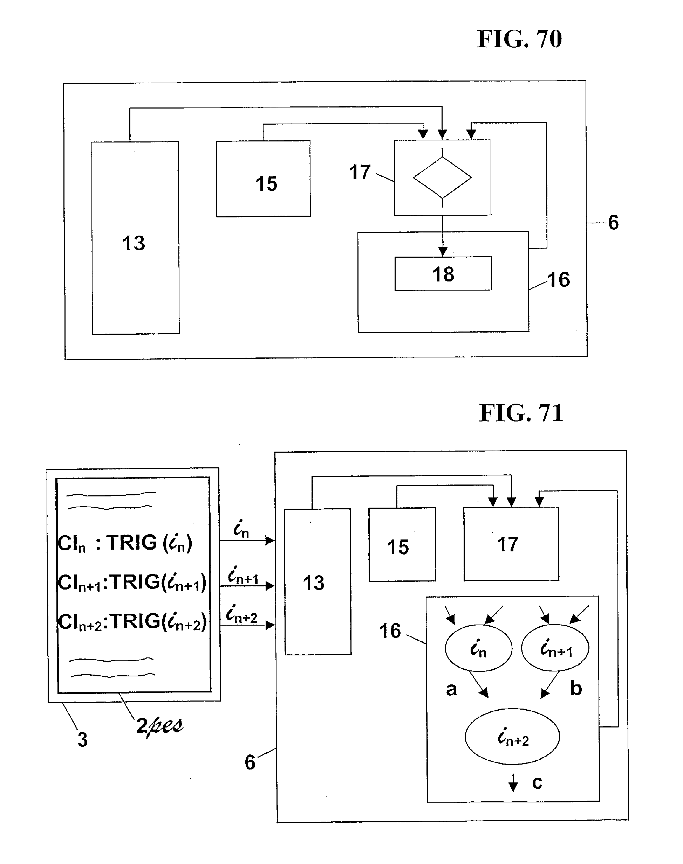

Conformément à l'invention, le procédé de protection vise à mettre en oeuvre un principe de protection, dit par "détection et coercition", dont une description est effectuée en relation des **fig. 70** à **74**.

Pour la mise en oeuvre du principe de protection par détection et coercition, il est défini :
- au moins une caractéristique d'exécution de logiciel susceptible d'être surveillée au moins en partie dans l'unité **6**,
- au moins un critère à respecter pour au moins une caractéristique d'exécution de logiciel,
- des moyens de détection **17** à mettre en oeuvre dans l'unité **6** et permettant, de détecter qu'au moins une caractéristique d'exécution de logiciel ne respecte pas au moins un critère associé,
- et des moyens de coercition **18** à mettre en oeuvre dans l'unité **6** et permettant d'informer le système de traitement de données **3** et/ou de modifier l'exécution d'un logiciel, lorsqu'au moins un critère n'est pas respecté.

Pour la mise en oeuvre du principe de protection par détection et coercition, il est aussi construit des moyens d'exploitation permettant de transformer une unité vierge **60** en une unité **6** mettant au moins en oeuvre les moyens de détection **17** et les moyens de coercition **18**.

La **fig. 70** illustre les moyens nécessaires à la mise en oeuvre de ce principe de protection par détection et coercition. L'unité **6** comporte les moyens de détection **17** et les moyens de coercition **18** appartenant aux moyens de traitement **16.** Les moyens de coercition **18** sont informés du non respect d'un critère par les moyens de détection **17**.

D'une manière plus précise, les moyens de détection **17** utilisent des informations en provenance des moyens de transfert **13** et/ou des moyens de mémorisation **15** et/ou des moyens de traitement **16**, afin de surveiller une ou plusieurs caractéristiques d'exécution de logiciel. A chaque caractéristique d'exécution de logiciel est fixé au moins un critère à respecter.

Dans le cas où il est détecté qu'au moins une caractéristique d'exécution de logiciel ne respecte pas au moins un critère, les moyens de détection **17** en informent les moyens de coercition **18**. Ces moyens de coercition **18** sont adaptés pour modifier, de la manière appropriée, l'état de l'unité **6**.

Pour la mise en oeuvre du principe de protection par détection et coercition, il est aussi choisi :
- au moins une caractéristique d'exécution de logiciel à surveiller, parmi les caractéristiques d'exécution susceptibles d'être surveillées,
- au moins un critère à respecter pour au moins une caractéristique d'exécution de logiciel choisie,
- dans le source du logiciel vulnérable **2vs**, au moins un traitement algorithmique pour lequel au moins une caractéristique d'exécution de logiciel est à surveiller,
- et dans le source du logiciel vulnérable **2vs**, au moins une portion contenant au moins un traitement algorithmique choisi.

Au moins une portion choisie du source du logiciel vulnérable **2vs** est ensuite modifiée, de manière à obtenir le source du logiciel protégé **2ps**. Cette modification est telle que notamment lors de l'exécution du logiciel protégé **2p** :
- au moins une portion de la première partie d'exécution **2pes**, qui est exécutée dans le système de traitement de données **3**, prend en compte qu'au moins une caractéristique d'exécution de logiciel choisie est à surveiller, au moins en partie dans l'unité **6**,
- et la seconde partie d'exécution **2peu**, qui est exécutée dans l'unité **6**, surveille au moins en partie, une caractéristique d'exécution de logiciel choisie.

Lors de l'exécution du logiciel protégé **2p**, protégé par ce principe de protection par détection et coercition, en présence de l'unité **6** :
- tant que tous les critères correspondants à toutes les caractéristiques d'exécution surveillées de toutes les portions modifiées du logiciel protégé **2p** sont respectés, ces portions modifiées du logiciel protégé **2p** fonctionnant de manière nominale et, par conséquent, le logiciel protégé **2p** fonctionnel de manière nominale,
- et si au moins un des critères correspondant à une caractéristique d'exécution surveillée d'une portion du logiciel protégé **2p** n'est pas respecté, le système de traitement de données **3** en est informé et/ou le fonctionnement de la portion du logiciel protégé **2p** est modifié, de sorte que le fonctionnement du logiciel protégé **2p** est modifié.

Bien entendu, en l'absence de l'unité **6**, au moins une demande d'une portion de la première partie d'exécution **2pes** du logiciel protégé **2p** d'utiliser l'unité **6** ne peut pas être satisfaite correctement de sorte qu'au moins cette portion ne s'exécute pas correctement et que par conséquent le logiciel protégé **2p** n'est pas complètement fonctionnel.

Pour la mise en oeuvre du principe de protection par détection et coercition, deux types de caractéristiques d'exécution de logiciel sont utilisées préférentiellement.

Le premier type de caractéristique d'exécution de logiciel correspond à une variable de mesure de l'exécution d'un logiciel et le second type correspond à un profil d'utilisation d'un logiciel. Ces deux types de caractéristiques peuvent être utilisées indépendamment ou en combinaison.

Pour la mise en oeuvre du principe de protection par détection et coercition utilisant, comme caractéristique d'exécution, une variable de mesure de l'exécution de logiciel, il est défini :
- dans les moyens de mémorisation **15**, la possibilité de mémoriser au moins une variable de mesure servant à quantifier l'utilisation d'au moins une fonctionnalité, de logiciel,
- dans les moyens de détection **17**, la possibilité de surveiller au moins un seuil associé à chaque variable de mesure,
- et des moyens d'actualisation permettant de mettre à jour chaque variable de mesure en fonction de l'utilisation de la fonctionnalité à laquelle elle est associée.

Il est aussi construit des moyens d'exploitation mettant en oeuvre, en plus des moyens de détection **17** et des moyens de coercition **18**, les moyens d'actualisation.

Il est aussi choisi, dans le source du logiciel vulnérable **2vs** :
- au moins une fonctionnalité du logiciel vulnérable **2v** dont l'utilisation est susceptible d'être surveillée grâce à une variable de mesure,
- au moins une variable de mesure servant à quantifier l'utilisation de ladite fonctionnalité,
- au moins un seuil associé à la variable de mesure correspondant à une limite d'utilisation de ladite fonctionnalité,
- et au moins une méthode de mise à jour de la variable de mesure en fonction de l'utilisation de ladite fonctionnalité.

Le source du logiciel vulnérable **2vs** est ensuite modifiée, de manière à obtenir le source du logiciel protégé **2ps**, cette modification étant telle que, lors de l'exécution du logiciel protégé **2p**, la seconde partie d'exécution **2peu** :
- actualise la variable de mesure en fonction de l'utilisation de ladite fonctionnalité,
- et prend en compte au moins un dépassement de seuil.

En d'autres termes, lors de l'exécution du logiciel protégé **2p**, la variable de mesure est mise à jour en fonction de l'utilisation de ladite fonctionnalité, et lorsque le seuil est dépassé, les moyens de détection **17** en informent les moyens de coercition **18** qui prennent une décision adaptée pour informer le système de traitement de données **3** et/ou modifier les traitements effectués par les moyens de traitement **16** permettant de modifier le fonctionnement de la portion du logiciel protégé **2p**, de sorte que le fonctionnement du logiciel protégé **2p** est modifié.

Pour la mise en oeuvre d'une première variante préférée de réalisation du principe de protection par détection et coercition utilisant, comme caractéristique, une variable de mesure, il est défini :
- pour au moins une variable de mesure, plusieurs seuils associés,
- et des moyens de coercition différents correspondant à chacun de ces seuils. Il est aussi choisi, dans le source du logiciel vulnérable **2vs** :
- au moins une variable de mesure servant à quantifier l'utilisation d'au moins une fonctionnalité du logiciel et à laquelle doivent être associés plusieurs seuils correspondant à des limites différentes d'utilisation de ladite fonctionnalité,
- et au moins deux seuils associés à la variable de mesure.

Le source du logiciel vulnérable **2vs** est ensuite modifié, de manière à obtenir le source du logiciel protégé **2ps**, cette modification étant telle que, lors de l'exécution du logiciel protégé **2p**, la seconde partie d'exécution **2peu** :
- actualise la variable de mesure en fonction de l'utilisation de ladite fonctionnalité,
- et prend en compte, de manière différente, les dépassements des divers seuils.

En d'autres termes, de manière classique, lors de l'exécution du logiciel protégé **2p**, lorsque le premier seuil est dépassé, l'unité **6** informe le système de traitement de données **3** enjoignant le logiciel protégé **2p** de ne plus utiliser cette fonctionnalité. Si le logiciel protégé **2p** continue d'utiliser cette fonctionnalité, le second seuil pourra être dépassé. Dans le cas où le second seuil est dépassé, les moyens de coercition **18** peuvent rendre inopérante la fonctionnalité choisie et/ou rendre inopérant le logiciel protégé **2p**.

Pour la mise en oeuvre d'une deuxième variante préférée de réalisation du principe de protection par détection et coercition utilisant, comme caractéristique, une variable de mesure, il est défini des moyens de rechargement permettant de créditer au moins une utilisation supplémentaire pour au moins une fonctionnalité de logiciel surveillée par une variable de mesure.

Il est aussi construit des moyens d'exploitation mettant en oeuvre, en plus des moyens de détection **17**, des moyens de coercition **18** et des moyens d'actualisation, les moyens de rechargement.

Il est aussi choisi, dans le source du logiciel vulnérable **2vs**, au moins une variable de mesure servant à limiter l'utilisation d'au moins une fonctionnalité du logiciel et à laquelle au moins une utilisation supplémentaire doit pouvoir être créditée.

Le source du logiciel vulnérable **2vs** est ensuite modifié, de manière à obtenir le source du logiciel protégé **2ps**, cette modification étant telle que, dans une phase dite de rechargement, au moins une utilisation supplémentaire d'au moins une fonctionnalité correspondant à une variable de mesure choisie peut être créditée.

Il est procédé, dans la phase de rechargement, à la réactualisation d'au moins une variable de mesure choisie et/ou d'au moins un seuil associé, de manière à permettre au moins une utilisation supplémentaire de la fonctionnalité correspondante. En d'autres termes, il est possible, dans la phase de rechargement, de créditer des utilisations supplémentaires d'au moins une fonctionnalité du logiciel protégé **2p**.

Pour la mise en oeuvre du principe de protection par détection et coercition utilisant, comme caractéristique, un profil d'utilisation de logiciel, il est défini en tant que critère à respecter pour ce profil d'utilisation, au moins un trait d'exécution de logiciel.

Il est aussi choisi, dans le source du logiciel vulnérable **2vs** :
- au moins un profil d'utilisation à surveiller,
- et au moins un trait d'exécution qu'au moins un profil d'utilisation choisi doit respecter.

Le source du logiciel vulnérable **2vs** est ensuite modifié, de manière à obtenir le source du logiciel protégé **2ps**, cette modification étant telle que, lors de l'exécution du logiciel protégé **2p**, la seconde partie d'exécution **2peu** respecte tous les traits d'exécution choisis. En d'autres termes, l'unité **6** surveille elle-même la manière dont la seconde partie d'exécution **2peu** est exécutée et peut informer le système de traitement de données **3** et/ou modifier le fonctionnement du logiciel protégé **2p**, dans le cas où au moins un trait d'exécution n'est pas respecté.

Lors de l'exécution du logiciel protégé **2p**, protégé par ce principe, en présence de l'unité **6** :
- tant que tous les traits d'exécution de toutes les portions modifiées du logiciel protégé **2p** sont respectés, ces portions modifiées du logiciel protégé **2p** fonctionnent de manière nominale et, par conséquent, le logiciel protégé **2p** fonctionne de manière nominale,
- et si au moins un trait d'exécution d'une portion de logiciel protégé **2p** n'est pas respecté, le système de traitement de données **3** en est informé et/ou le fonctionnement de la portion du logiciel protégé **2p** est modifié, de sorte que le fonctionnement du logiciel protégé **2p** est modifié.

Il peut être envisagé la surveillance de différents traits d'exécution, comme par exemple la surveillance de la présence d'instructions comportant un marqueur ou la surveillance de l'enchaînement d'exécution pour au moins une partie des instructions.

Pour la mise en oeuvre du principe de protection par détection et coercition utilisant comme trait d'exécution à respecter, la surveillance de l'enchaînement d'exécution pour au moins une partie des instructions, il est défini :
- un jeu d'instructions dont les instructions sont susceptibles d'être exécutées dans l'unité **6**,
- un jeu de commandes d'instruction pour ce jeu d'instructions, ces commandes d'instructions sont susceptibles d'être exécutées dans le système de traitement de données **3**. L'exécution de chacune de ces commandes d'instructions dans le système de traitement de données **3** déclenche dans l'unité **6**, l'exécution de l'instruction correspondante,
- des moyens de détection **17** permettant de détecter que l'enchaînement des instructions ne correspond pas à celui souhaité,
- et des moyens de coercition **18** permettant d'informer le système de traitement de données **3** et/ou de modifier l'exécution d'un logiciel lorsque l'enchaînement des instructions ne correspond pas à celui souhaité.

Il est aussi construit des moyens d'exploitation permettant, à l'unité **6**, d'exécuter aussi les instructions du jeu d'instructions, l'exécution de ces instructions étant déclenchée par l'exécution dans le système de traitement de données **3** des commandes d'instructions.

Il est aussi choisi, dans le source du logiciel vulnérable **2vs**, au moins un traitement algorithmique devant être déporté dans l'unité **6** et pour lequel l'enchaînement d'au moins une partie des instructions est à surveiller.

Le source du logiciel vulnérable **2vs** est ensuite modifié de manière à obtenir le source du logiciel protégé **2ps**, cette modification est telle que, lors de l'exécution du logiciel protégé **2p** :
- la seconde partie d'exécution **2peu** exécute au moins la fonctionnalité du traitement algorithmique choisi,
- le traitement algorithmique choisi est décomposé en instructions,
- l'enchaînement que doivent respecter au moins certaines des instructions lors de leur exécution dans l'unité **6** est spécifié,
- et la première partie d'exécution **2pes** du logiciel protégé **2p** exécute des commandes d'instructions qui déclenchent l'exécution des instructions dans l'unité **6**.

Lors de l'exécution du logiciel protégé **2p**, protégé par ce principe, en présence de l'unité **6** :
- tant que l'enchaînement des instructions de toutes les portions modifiées du logiciel protégé **2p** correspond à celui souhaité, ces portions modifiées du logiciel protégé **2p** fonctionnent de manière nominale et, par conséquent, le logiciel protégé **2p** fonctionne de manière nominale,
- et si l'enchaînement des instructions d'une portion de logiciel protégé **2p** exécutées dans l'unité **6** ne correspond pas à celui souhaité, le système de traitement de données **3** en est informé et/ou le fonctionnement de la portion du logiciel protégé **2p** est modifié, de sorte que le fonctionnement du logiciel protégé **2p** est modifié.

La **fig. 71** illustre un exemple de mise en oeuvre du principe de protection par détection et coercition utilisant, comme trait d'exécution à respecter la surveillance de l'enchaînement d'exécution d'au moins une partie des instructions, dans le cas où l'enchaînement souhaité est respecté.

La première partie d'exécution **2pes** du logiciel protégé **2p**, exécutée dans le système de traitement de données **3**, exécute des commandes d'instructions **CIᵢ** déclenchant, dans l'unité **6** l'exécution des instructions **iᵢ** appartenant au jeu d'instructions. Dans le jeu d'instructions, au moins certaines des instructions comportent chacune une partie définissant la fonctionnalité de l'instruction et une partie permettant de vérifier l'enchaînement souhaité pour l'exécution des instructions. Dans cet exemple, les commandes d'instructions **CIᵢ** sont représentées par **TRIG(iᵢ)** et l'enchaînement souhaité pour l'exécution des instructions est **iₙ**, **iₙ₊₁** et **iₙ₊₂**. L'exécution dans l'unité **6**, de l'instruction **i**ₙ donne le résultat **a** et l'exécution de l'instruction **iₙ₊₁** donne le résultat **b**. L'instruction **iₙ₊₂** utilise comme opérande, les résultats **a** et **b** des instructions **iₙ** et **iₙ₊₁** et son exécution donne le résultat **c.**

Compte tenu que cet enchaînement des instructions exécutées dans l'unité **6** correspond à celui souhaité, il en résulte un fonctionnement normal ou nominal du logiciel protégé **2p**.

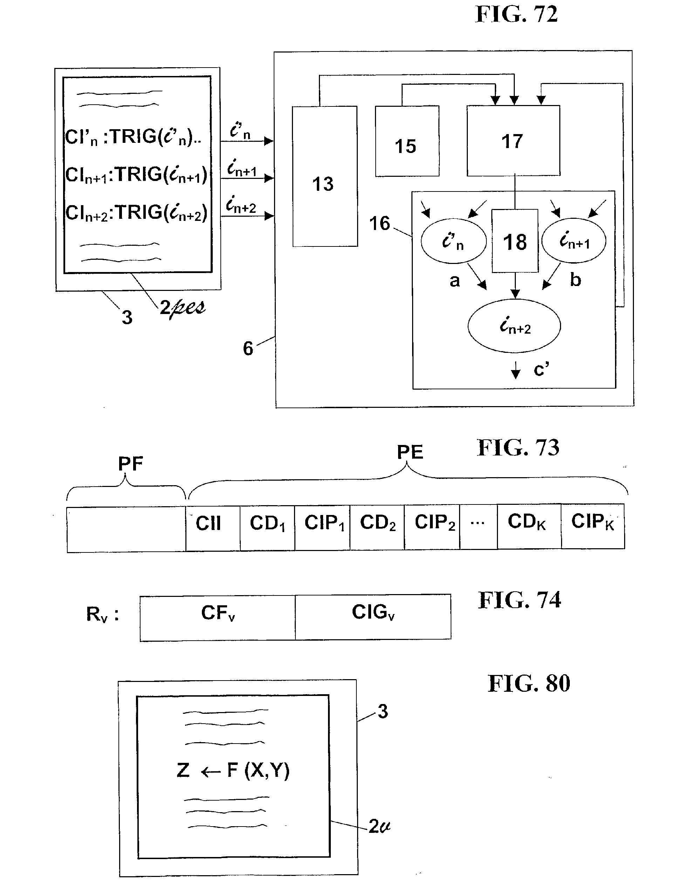

La **fig. 72** illustre un exemple de mise en oeuvre du principe de protection par détection et coercition utilisant, comme trait d'exécution à respecter, la surveillance de l'enchaînement d'exécution d'au moins une partie des instructions, dans le cas où l'enchaînement souhaité n'est pas respecté.

Selon cet exemple, l'enchaînement souhaité pour l'exécution des instructions est toujours **iₙ**, **iₙ₊₁** et **iₙ₊₂**. Toutefois, l'enchaînement d'exécution des instructions est modifié par le remplacement de l'instruction **iₙ** par l'instruction **i'ₙ**, de sorte que l'enchaînement effectivement exécuté est **i'ₙ**, **iₙ₊₁** et **iₙ₊₂**. L'exécution de l'instruction **i'ₙ** donne le résultat **a**, c'est-à-dire le même résultat que l'exécution de l'instruction **iₙ**. Toutefois, au plus tard lors de l'exécution de l'instruction **iₙ₊₂**, les moyens de détection **17** détectent que l'instruction **i'ₙ** ne correspond pas à l'instruction souhaitée pour générer le résultat **a** utilisé comme opérande de instruction **iₙ₊₂**. Les moyens de détection **17** en informent les moyens de coercition **18** qui modifient en conséquence, le fonctionnement de l'instruction **iₙ₊₂**, de sorte que l'exécution de l'instruction **iₙ₊₂** donne le résultat **c'** pouvant être différent de **c**. Bien entendu, si l'exécution de l'instruction **i'ₙ** donne un résultat **a'** différent du résultat **a** de l'instruction **iₙ**, il est clair que le résultat de l'instruction **iₙ₊₂** peut aussi être différent de **c.**

Dans la mesure où l'enchaînement d'exécution des instructions exécutées dans l'unité **6** ne correspond pas à celui souhaité, il peut donc être obtenu une modification du fonctionnement du logiciel protégé **2p.**

Les **fig. 73** et **74** illustrent une variante préférée de réalisation du principe de protection par détection et coercition utilisant, comme trait d'exécution à respecter, la surveillance de l'enchaînement d'exécution d'au moins une partie des instructions. Selon cette variante préférée, il est défini un jeu d'instructions dont au moins certaines instructions travaillent sur des registres et utilisent au moins un opérande en vue de rendre un résultat.

Comme illustré à la **fig. 73**, il est défini pour au moins certaines des instructions travaillant sur des registres, une partie **PF** définissant la fonctionnalité de l'instruction et une partie **PE** définissant l'enchaînement souhaité pour l'exécution des instructions. La partie **PF** correspond au code opération connu de l'Homme de l'art. La partie **PE** définissant l'enchaînement souhaité, comporte des champs de bits correspondant à :
- un champ d'identification de l'instruction **CII**,
- et pour chaque opérande **k** de l'instruction, avec **k** variant de 1 à **K**, et **K** nombre d'opérandes de l'instruction :
   - un champ drapeau **CD**ₖ, indiquant s'il convient de vérifier la provenance de l'opérande **k**,
   - et un champ d'identification prévue **CIP**ₖ de l'opérande, indiquant l'identité attendue de l'instruction ayant généré le contenu de l'opérande **k**.

Comme illustré à la **fig. 74**, le jeu d'instructions comporte **V** registres appartenant aux moyens de traitement **16**, chaque registre étant nommé **Rᵥ**, avec **v** variant de 1 à **V**. Pour chaque registre **Rᵥ**, il est défini deux champs, à savoir :
- un champ fonctionnel **CFᵥ**, connu de l'Homme de l'art et permettant de stocker le résultat de l'exécution des instructions,
- et un champ d'identification générée **CIGᵥ** permettant de mémoriser l'identité de l'instruction ayant généré le contenu du champ fonctionnel **CFᵥ**. Ce champ d'identification générée **CIGᵥ** est mis à jour automatiquement avec le contenu du champ d'identification de l'instruction **CII** ayant généré le champ fonctionnel **CFᵥ**. Ce champ d'identification générée **CIGᵥ** n'est pas accessible, ni modifiable par aucune instruction et sert uniquement aux moyens de détection **17**.

Lors de l'exécution d'une instruction, les moyens de détection **17** effectuent pour chaque opérande **k** les opérations suivantes :
- le champ drapeau **CDₖ** est lu,
- si le champ drapeau **CDₖ** l'impose, le champ d'identification prévue **CIPₖ** et le champ d'identification générée **CIGᵥ** correspondant au registre utilisé par l'opérande **k** sont lus tous les deux,
- l'égalité des deux champs **CIPₖ** et **CICᵥ** est contrôlée,
- et si l'égalité est fausse, les moyens de détection **17** considèrent que l'enchaînement d'exécution des instructions n'est pas respecté.

Les moyens de coercition **18** permettent de modifier le résultat des instructions lorsque les moyens de détection **17** les ont informés d'un enchaînement d'instructions non respecté. Une réalisation préférentielle consiste à modifier la partie fonctionnelle **PF** de l'instruction en cours d'exécution ou la partie fonctionnelle **PF** d'instructions ultérieures.

Selon une autre caractéristique avantageuse de l'invention, le procédé de protection vise à mettre en oeuvre un principe de protection dit par "variable" dont une description est effectuée en relation des **fig. 40** à **43**.

Pour la mise en oeuvre du principe de protection par variable, il est choisi dans le source du logiciel vulnérable **2vs** au moins une variable qui lors de l'exécution du logiciel vulnérable **2v**, définit partiellement l'état de celui-ci. Par état d'un logiciel, il doit être compris l'ensemble des informations, à un instant donné, nécessaires à l'exécution complète de ce logiciel, de sorte que l'absence d'une telle variable choisie nuit à l'exécution complète de ce logiciel. Il est aussi choisi au moins une portion du source du logiciel vulnérable **2vs** contenant au moins une variable choisie.

Au moins une portion choisie du source du logiciel vulnérable **2vs** est alors modifié de manière à obtenir le source du logiciel protégé **2ps**. Cette modification est telle que lors de l'exécution du logiciel protégé **2p**, au moins une portion de la première partie d'exécution **2pes** qui est exécutée dans le système de traitement de données **3**, prend en compte qu'au moins une variable choisie ou au moins une copie de variable choisie réside dans l'unité **6**.

La **fig. 40** illustre un exemple d'exécution d'un logiciel vulnérable **2v**. Dans cet exemple, il apparaît au cours de l'exécution du logiciel vulnérable **2v** dans le système de traitement de données **3** :
- à l'instant **t₁**, l'affectation de la donnée **X** à la variable **V₁**, représentée par **V₁←X**,
- à l'instant **t₂**, l'affectation de la valeur de la variable **V₁** à la variable **Y**, représentée par **Y ← V₁**,
- et à l'instant **t₃**, l'affectation de la valeur de la variable **V₁** à la variable **Z**, représentée par **Z ← V₁**.

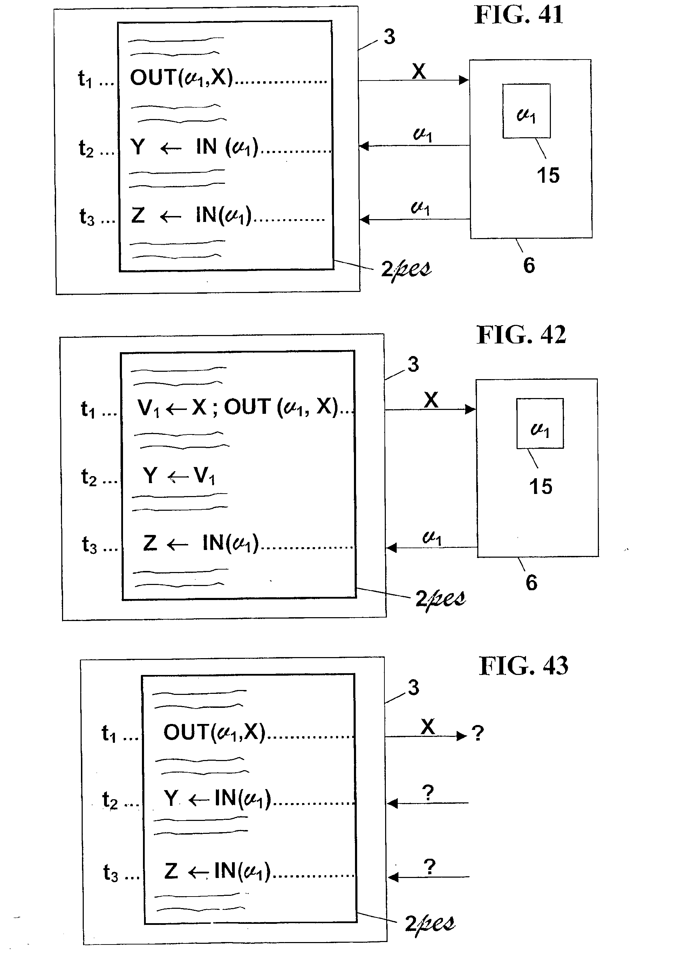

La **fig. 41** illustre un exemple d'une première forme de mise en oeuvre de l'invention pour laquelle la variable réside dans l'unité **6**. Dans cet exemple, lors de l'exécution dans le système de traitement de données **3** de la première partie d'exécution **2pes** du logiciel protégé **2p** , et en présence de l'unité **6**, il apparaît :
- à l'instant **t₁**, l'exécution d'une commande de transfert déclenchant le transfert de la donnée **X** depuis le système de traitement de données **3** vers la variable **v₁** située dans les moyens de mémorisation **15** de l'unité **6,** cette commande de transfert étant représentée par **OUT(v₁, X)** et correspondant au final à l'affectation de la donnée **X** à la variable **v₁**,
- à l'instant **t₂**, l'exécution d'une commande de transfert déclenchant le transfert de la valeur de la variable **v₁** résidant dans l'unité **6** vers le système de traitement de données **3** afin de l'affecter à la variable **Y,** cette commande de transfert étant représentée par **IN(v₁)** et correspondant au final à l'affectation de la valeur de la variable **v₁** à la variable **Y**,
- et à l'instant **t₃**, l'exécution d'une commande de transfert déclenchant le transfert de la valeur de la variable **v₁** résidant dans l'unité **6** vers le système de traitement de données **3** afin de l'affecter à la variable **Z,** cette commande de transfert étant représentée par **IN(v₁)** et correspondant au final à l'affectation de la valeur de la variable **v₁** à la variable **Z**.

Il est à noter que lors de l'exécution du logiciel protégé **2p**, au moins une variable réside dans l'unité **6**. Ainsi, lorsqu'une portion de la première partie d'exécution **2pes** du logiciel protégé **2p** l'impose, et en présence de l'unité **6**, la valeur de cette variable résidant dans l'unité **6** est transférée vers le système de traitement de données **3** pour être utilisée par la première partie d'exécution **2pes** du logiciel protégé **2p**, de sorte que cette portion est exécutée correctement et que, par conséquent, le logiciel protégé **2p** est complètement fonctionnel.

La **fig. 42** illustre un exemple d'une deuxième forme de mise en oeuvre de l'invention pour laquelle une copie de la variable réside dans l'unité **6**. Dans cet exemple, lors de l'exécution dans le système de traitement de données **3** de la première partie d'exécution **2pes** du logiciel protégé **2p**, et en présence de l'unité **6**, il apparaît :
- à l'instant **t₁**, l'affectation de la donnée **X** à la variable **V₁** située dans le système de traitement de données **3**, ainsi que l'exécution d'une commande de transfert déclenchant le transfert de la donnée **X** depuis le système de traitement de données **3** vers la variable **v₁** située dans les moyens de mémorisation **15** de l'unité **6**, cette commande de transfert étant représentée par **OUT(v₁**, **X)**,
- à l'instant **t₂**, l'affectation de la valeur de la variable **V₁** à la variable **Y**,
- et à l'instant t₃, l'exécution d'une commande de transfert déclenchant le transfert de la valeur de la variable **v₁** résidant dans l'unité **6** vers le système de données **3** afin de l'affecter à la variable **Z**, cette commande de transfert étant représentée par **IN(v₁)**.

Il est à noter que lors de l'exécution du logiciel protégé **2p,** au moins une copie d'une variable réside dans l'unité **6**. Ainsi, lorsqu'une portion de la première partie d'exécution **2pes** du logiciel protégé **2p** l'impose, et en présence de l'unité **6**, la valeur de cette copie de variable résidant dans l'unité **6** est transférée vers le système de traitement de données **3** pour être utilisée par la première partie d'exécution **2pes** du logiciel protégé **2p,** de sorte que cette portion est exécutée correctement et que, par conséquent, le logiciel protégé **2p** est complètement fonctionnel.

La **fig. 43** illustre un exemple de tentative d'exécution du logiciel protégé **2p**, alors que l'unité **6** est absente. Dans cet exemple, lors de l'exécution dans le système de traitement de données **3** de la première partie d'exécution **2pes** du logiciel protégé **2p :**
- à l'instant **t₁**, l'exécution de la commande de transfert **OUT(v₁**, **X)** ne peut pas déclencher le transfert de la donnée **X** vers la variable **v₁**, compte tenu de l'absence de l'unité **6**,
- à l'instant **t₂**, l'exécution de la commande de transfert **IN(v₁)** ne peut pas déclencher le transfert de la valeur de la variable **v₁** vers le système de traitement de données **3**, compte tenu de l'absence de l'unité **6**,
- et à l'instant **t₃**, l'exécution de la commande de transfert **IN(v₁)** ne peut pas déclencher le transfert de la valeur de la variable **v₁** vers le système de traitement de données **3**, compte tenu de l'absence de l'unité **6**.

Il apparaît donc qu'en l'absence de l'unité **6**, au moins une demande d'une portion de la première partie d'exécution **2pes** d'utiliser une variable ou une copie de variable résidant dans l'unité **6**, ne peut pas être satisfaite correctement, de sorte qu'au moins cette portion n'est pas exécutée correctement et que, par conséquent, le logiciel protégé **2p** n'est pas complètement fonctionnel.

Il est à noter que les transferts de données entre le système de traitement de données **3** et l'unité **6** illustrés dans les exemples qui précèdent n'utilisent que des affectations simples mais que l'Homme de l'Art saura les combiner avec d'autres opérations pour aboutir à des opérations complexes telles que par exemple **OUT(v1, 2** * **X + 3**) ou bien **Z** ← **(5** * **v1 + v2)**.

Selon une autre caractéristique avantageuse de l'invention, le procédé de protection vise à mettre en oeuvre un principe de protection, dit par "renommage" dont une description est effectuée en relation des **fig**. **80** à **85**.

Pour la mise en oeuvre du principe de protection par renommage, il est défini :
- un ensemble de fonctions dépendantes, dont les fonctions dépendantes sont susceptibles d'être exécutées, au moyen de la seconde partie d'exécution **2peu**, dans l'unité **6**, et éventuellement de transférer des données entre le système de traitement de données **3** et l'unité **6**, cet ensemble de fonctions dépendantes pouvant être fini ou infini,
- un ensemble de commandes déclenchantes pour ces fonctions dépendantes, ces commandes déclenchantes étant susceptibles d'être exécutées dans le système de traitement de données **3** et de déclencher dans l'unité **6**, l'exécution de fonctions dépendantes correspondantes,
- pour chaque commande déclenchante, une consigne correspondant au moins en partie à l'information transmise par la première partie d'exécution **2pes**, à la seconde partie d'exécution **2peu**, afin de déclencher l'exécution de la fonction dépendante correspondante, cette consigne se présentant sous la forme d'au moins un argument de la commande déclenchante,

- une méthode de renommage des consignes destinée à être mise en oeuvre lors de la modification du logiciel vulnérable, une telle méthode permettant de renommer les consignes afin d'obtenir des commandes déclenchantes à consignes renommées permettant de dissimuler l'identité des fonctions dépendantes correspondantes,
- et des moyens de rétablissement **20** destinés à être mis en oeuvre dans l'unité **6** lors de la phase d'utilisation et permettant de retrouver la consigne initiale, à partir de la consigne renommée, afin de retrouver la fonction dépendante à exécuter.

Pour la mise en oeuvre du principe de protection par renommage, il est aussi construit des moyens d'exploitation permettant de transformer une unité vierge **60** en une unité **6** mettant au moins en oeuvre les moyens de rétablissement **20**.

Pour la mise en oeuvre du principe de protection par renommage, il est aussi choisi, dans le source du logiciel vulnérable **2vs** :
- au moins un traitement algorithmique utilisant au moins un opérande et rendant au moins un résultat,
- et au moins une portion du source du logiciel vulnérable **2vs**, contenant au moins un traitement algorithmique choisi.

Le source du logiciel vulnérable **2vs** est ensuite modifié, de manière à obtenir le source du logiciel protégé **2ps**. Cette modification est telle que notamment :
- lors de l'exécution du logiciel protégé **2p,** au moins une portion de la première partie d'exécution **2pes**, qui est exécutée dans le système de traitement de données **3**, prend en compte que la fonctionnalité d'au moins un traitement algorithmique choisi est exécutée dans l'unité **6**,
- lors de l'exécution du logiciel protégé **2p**, la seconde partie d'exécution **2peu**, qui est exécutée dans l'unité **6**, exécute au moins la fonctionnalité d'au moins un traitement algorithmique choisi,
- chaque traitement algorithmique choisi est décomposé de manière que lors de l'exécution du logiciel protégé **2p**, chaque traitement algorithmique choisi est exécuté, au moyen de la seconde partie d'exécution **2peu**, en utilisant des fonctions dépendantes. De préférence, chaque traitement algorithmique choisi est décomposé en fonctions dépendantes **fdₙ** (avec **n** variant de **1** à **N**), à savoir :
   - éventuellement une ou plusieurs fonctions dépendantes permettant la mise à disposition d'un ou de plusieurs opérandes pour l'unité **6**,
   - des fonctions dépendantes dont certaines utilisent la ou les opérandes et qui en combinaison, exécutent la fonctionnalité du traitement algorithmique choisi, utilisant ce ou ces opérandes,
   - et éventuellement une ou plusieurs fonctions dépendantes permettant la mise à disposition par l'unité **6**, pour le système de traitement de données **3** du résultat du traitement algorithmique choisi,
- lors de l'exécution du logiciel protégé **2p**, la seconde partie d'exécution **2peu** exécute les fonctions dépendantes **fdₙ**,
- lors de l'exécution du logiciel protégé **2p**, les fonctions dépendantes sont déclenchées par des commandes déclenchantes à consignes renommées,
- et un ordonnancement des commandes déclenchantes est choisi parmi l'ensemble des ordonnancements permettant l'exécution du logiciel protégé **2p**.

La première partie d'exécution **2pes** du logiciel protégé **2p**, exécutée dans le système de traitement de données **3**, exécute des commandes déclenchantes à consignes renommées transférant vers l'unité **6** des consignes renommées, et déclenchant dans l'unité **6** le rétablissement au moyen des moyens de rétablissement **20**, des consignes, puis l'exécution au moyen de la seconde partie d'exécution **2peu**, de chacune des fonctions dépendantes **fdₙ** précédemment définies.

En d'autres termes, le principe de protection par renommage consiste à renommer les consignes des commandes déclenchantes, de manière à obtenir des commandes déclenchantes à consignes renommées dont l'exécution dans le système de traitement de données **3**, déclenche dans l'unité **6**, l'exécution des fonctions dépendantes qui auraient été déclenchées par les commandes déclenchantes à consignes non renommées, sans toutefois que l'examen du logiciel protégé **2p** ne permette de déterminer l'identité des fonctions dépendantes exécutées.

La **fig**. 80 illustre un exemple d'exécution d'un logiciel vulnérable **2v**. Dans cet exemple, il apparaît au cours de l'exécution du logiciel vulnérable **2v** dans le système de traitement de données **3**, à un instant donné, le calcul de **Z ← F(X, Y)** correspondant à l'affectation à une variable **Z** du résultat d'un traitement algorithmique représenté par une fonction **F** et utilisant les opérandes **X** et **Y**.

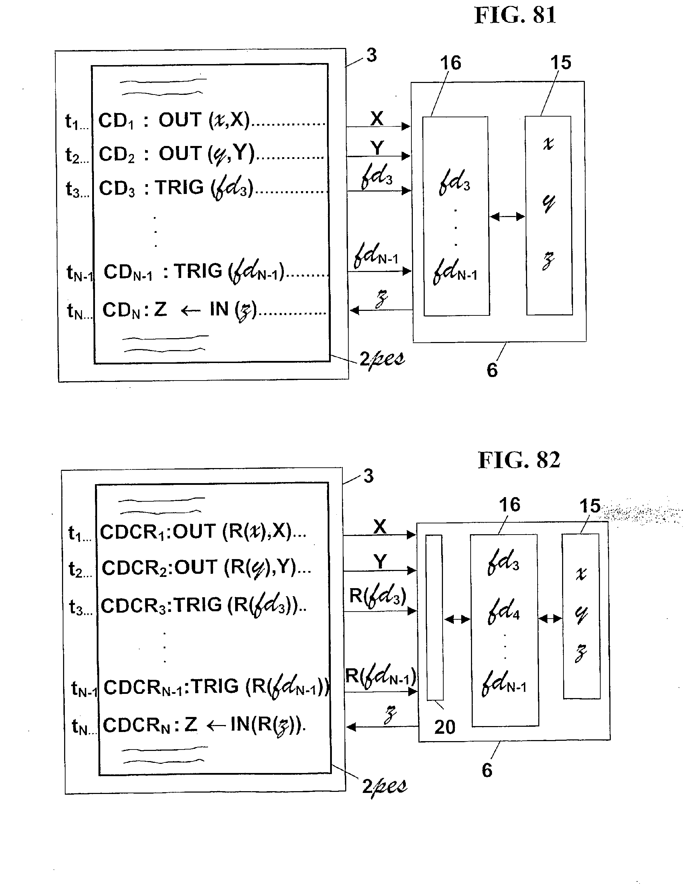

Les **fig. 81** et **82** illustrent un exemple de mise en oeuvre de l'invention.

La **fig. 81** illustre la mise en oeuvre partielle de l'invention. Dans cet exemple, lors de l'exécution dans le système de traitement de données **3** de la première partie d'exécution **2pes** du logiciel protégé **2p** et en présence de l'unité **6**, il apparaît :
- aux instants **t₁**, **t₂**, l'exécution des commandes déclenchantes **CD₁**, **CD₂** déclenchant dans l'unité **6**, l'exécution au moyen de la seconde partie d'exécution **2peu**, des fonctions dépendantes **fd₁**, **fd₂** correspondantes qui assurent le transfert des données **X, Y** depuis le système de traitement de données **3** vers des zones de mémorisation respectivement **x, y** situées dans les moyens de mémorisation **15** de l'unité **6,** ces commandes déclenchantes **CD₁**, **CD₂** étant représentées respectivement par **OUT(x, X), OUT(y, Y),**
- aux instants **t₃** à **t_{N-1}**, l'exécution des commandes déclenchantes **CD₃** à **CD_{N-1}**, déclenchant dans l'unité **6**, l'exécution au moyen de la seconde partie d'exécution **2peu**, des fonctions dépendantes **fd₃** à **fd_{N-1}** correspondantes, ces commandes déclenchantes **CD₃** à **CD_{N-1}** étant représentées, respectivement, par **TPIG(fd₃)** à **TRIG(fd_{N-1}).** La suite des fonctions dépendantes **fd₃** à **fd_{N-1}** exécutées en combinaison est algorithmiquement équivalente à la fonction **F**. Plus précisément, l'exécution de ces commandes déclenchantes conduit à l'exécution dans l'unité **6**, des fonctions dépendantes **fd₃** à **fd_{N-1}** qui se servent du contenu des zones de mémorisation **x**, **y** et rendent le résultat dans une zone de mémorisation **z** de l'unité **6**,
- et à l'instant **t_{N}**, l'exécution d'une commande déclenchante **CD_{N}** déclenchant dans l'unité **6**, l'exécution au moyen de la seconde partie d'exécution **2peu**, de la fonction dépendante **fd_{N}** assurant le transfert du résultat du traitement algorithmique contenu dans la zone de mémorisation **z** de l'unité **6** vers le système de traitement de données **3**, afin de l'affecter à la variable **Z**, cette commande étant représentée par **IN(z)**.

Dans cet exemple, pour mettre en oeuvre complètement l'invention, il est choisi en tant que consigne, le premier argument des commandes déclenchantes **OUT** et l'argument des commandes déclenchantes **TRIG** et **IN**. Les consignes ainsi choisies sont renommées par la méthode de renommage des consignes. De cette manière, les consignes des commandes déclenchantes **CD₁** à **CD_{N}** à savoir **x, y, fd₃, fd_{N-1}**, **z** sont renommées de manière à obtenir respectivement **R(x), R(y), R(fd₃)**..., **R(fd_{N-1})**, **R(z)**.

La **fig. 82** illustre la mise en oeuvre complète de l'invention. Dans cet exemple, lors de l'exécution dans le système de traitement de données **3**, de la première partie d'exécution **2pes** du logiciel protégé **2p**, et en présence de l'unité **6**, il apparaît :
- aux instants **t₁**, **t₂**, l'exécution des commandes déclenchantes à consignes renommées **CDCR₁**, **CDCR₂**, transférant vers l'unité **6**, les consignes renommées **R(x)**, **R(y)** ainsi que les données **X, Y** déclenchant dans l'unité **6** le rétablissement au moyen des moyens de rétablissement **20**, des consignes renommées pour rétablir les consignes à savoir l'identité des zones de mémorisation **x, y,** puis l'exécution au moyen de la seconde partie d'exécution **2peu**, des fonctions dépendantes **fd₁**, **fd₂** correspondantes qui assurent le transfert des données **X**, **Y** depuis le système de traitement de données **3** vers les zones de mémorisation respectivement **x, y** situées dans les moyens de mémorisations **15** de l'unité **6**, ces commandes déclenchantes à consignes renommées **CDCR₁**, **CDCR₂** étant représentées respectivement par **OUT** (**R(x), X)**, **OUT (R**(**y**), **Y)**,
- aux instants **t₃** à **t_{N-1}**, l'exécution des commandes déclenchantes à consignes renommées **CDCR₃** à **CDCR_{N-1}**, transférant vers l'unité **6**, les consignes renommées **R(fd₃)** à **R(fd_{N-1})**, déclenchant dans l'unité **6** le rétablissement au moyen des moyens de rétablissement **20**, des consignes, à savoir **fd₃** à **fd_{N-1}**, puis l'exécution au moyen de la seconde partie d'exécution **2peu**, des fonctions dépendantes **fd₃** à **fd_{N-1}**, ces commandes déclenchantes à consignes renommées **CDCR₃** à **CDCR_{N-1}** étant représentées respectivement par **TRIG (R(fd₃))** à **TRIG (R(fd_{N-1}))**,
- et à l'instant **t**_{N}, l'exécution de la commande déclenchante à consigne renommée **CDCR**_{N} transférant vers l'unité **6**, la consigne renommée **R(z)** déclenchant dans l'unité **6** le rétablissement au moyen des moyens de rétablissement **20**, de la consigne à savoir l'identité de la zone de mémorisation **z**, puis l'exécution au moyen de la seconde partie d'exécution **2peu**, de la fonction dépendante **fd**_{N} assurant le transfert du résultat du traitement algorithmique contenu dans la zone de mémorisation **z** de l'unité **6** vers le système de traitement de données **3**, afin de l'affecter à la variable **Z**, cette commande déclenchante à consigne renommée **CDCR_{N}** étant représentée par **IN (R(z))**.

Dans l'exemple illustré, les commandes déclenchantes à consignes renommées 1 à N sont exécutées successivement. Il est à noter que deux améliorations peuvent être apportées :
- La première amélioration concerne le cas où plusieurs traitements algorithmiques sont déportés dans l'unité **6** et au moins le résultat d'un traitement algorithmique est utilisé par un autre traitement algorithmique. Dans ce cas, certaines commandes déclenchantes à consignes renommées servant au transfert, peuvent être éventuellement supprimées.
- La deuxième amélioration vise à opter pour un ordonnancement pertinent des commandes déclenchantes à consignes renommées parmi l'ensemble des ordonnancements permettant l'exécution du logiciel protégé **2p**. A cet égard, il est préférable de choisir un ordonnancement des commandes déclenchantes à consignes renommées qui dissocie temporellement l'exécution des fonctions dépendantes, en intercalant, entre celles-ci des portions de code exécuté dans le système de traitement de données **3** et comportant ou non des commandes déclenchantes à consignes renommées servant à la détermination d'autres données. Les **fig**. **83** et **84** illustrent le principe d'une telle réalisation.

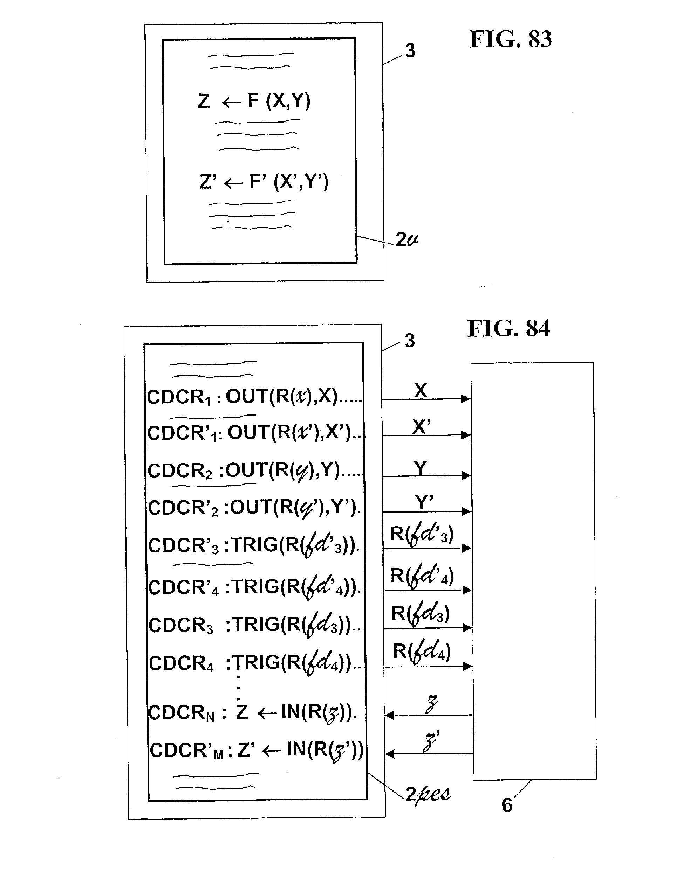

La **fig. 83** montre un exemple d'exécution d'un logiciel vulnérable **2v**. Dans cet exemple, il apparaît, au cours de l'exécution du logiciel vulnérable **2v**, dans le système de traitement de données **3**, l'exécution de deux traitement algorithmiques aboutissant à la détermination de **Z** et **Z'**, telles que **Z ← F (X,** Y) et **Z' ← F' (X', Y'**).

La **fig. 84** illustre un exemple de mise en oeuvre du procédé selon l'invention pour lequel les deux traitements algorithmique choisis à la **fig. 83** sont déportés dans l'unité **6.** Selon un tel exemple, lors de l'exécution dans le système de traitement de données **3** de la première partie d'exécution **2pes** du logiciel protégé **2p** et en présence de l'unité **6,** il apparaît, comme expliqué ci-dessus, l'exécution des commandes déclenchantes à consignes renommées **CDCR₁** à **CDCR_{N}** correspondant à la détermination de **Z** et l'exécution des commandes déclenchantes à consignes renommées **CDCR'₁** à **CDCR'_{M}** correspondant à la détermination de **Z'.** Comme illustré, les commandes déclenchantes à consignes renommées **CDCR₁** à **CDCR_{N}** ne sont pas exécutées consécutivement, dans la mesure où les commandes déclenchantes à consignes renommées **CDCR'₁** à **CDCR'_{M}** ainsi que d'autres portions de code sont intercalées. Dans l'exemple, il est ainsi réalisé l'ordonnancement suivant : **CDCR₁,** portion de code intercalé, **CDCR'₁**, **CDCR₂**, portion de code intercalé, **CDCR'₂**, **CDCR'₃**, portion de code intercalé, **CDCR'₄**, **CDCR₃**, **CDCR₄**, ..., **CDCR_{N}**, **CDCR'_{M}**.

Il est à noter que, lors de l'exécution d'une portion de la première partie d'exécution **2pes** du logiciel protégé **2p,** les commandes déclenchantes à consignes renommées exécutées dans le système de traitement de données **3,** déclenchent dans l'unité **6** le rétablissement de l'identité des fonctions dépendantes correspondantes puis l'exécution de celles-ci. Ainsi, il apparaît qu'en présence de l'unité **6,** cette portion est exécutée correctement et que, par conséquent, le logiciel protégé **2p** est complètement fonctionnel.

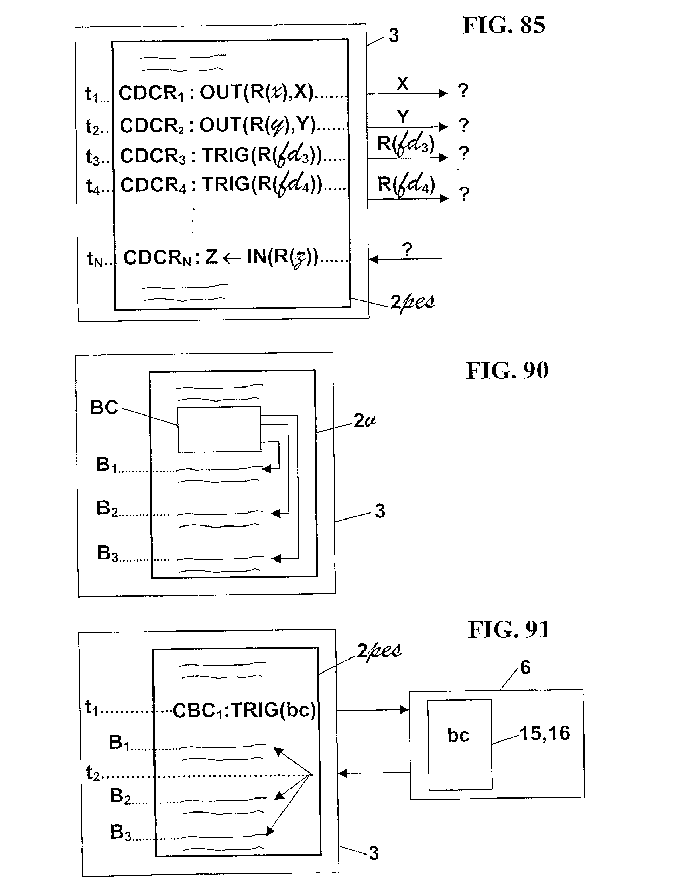

La **fig. 85** illustre un exemple de tentative d'exécution du logiciel protégé **2p,** alors que l'unité **6** est absente. Dans cet exemple, lors de l'exécution dans le système de traitement de données **3** de la première partie d'exécution **2pes** du logiciel protégé **2p**, à tous les instants, l'exécution d'une commande déclenchante à consigne renommée ne peut pas déclencher le rétablissement de la consigne ni l'exécution de la fonction dépendante correspondante, en raison de l'absence de l'unité **6.** La valeur à affecter à la variable **Z** ne peut donc pas être déterminée correctement.

Il apparaît donc, qu'en l'absence de l'unité **6,** au moins une demande d'une portion de la première partie d'exécution **2pes** du logiciel protégé **2p,** de déclencher le rétablissement d'une consigne et l'exécution d'une fonction dépendante dans l'unité **6** ne peut pas être satisfaite correctement, de sorte qu'au moins cette portion n'est pas exécutée correctement et que, par conséquent, le logiciel protégé **2p** n'est pas complètement fonctionnel.

Grâce à ce principe de protection par renommage, l'examen dans le logiciel protégé **2p** des commandes déclenchantes à consignes renommées ne permet pas de déterminer l'identité des fonctions dépendantes devant être exécutées dans l'unité **6.** Il est à noter que le renommage des consignes est effectué lors de la modification du logiciel vulnérable **2v** en un logiciel protégé **2p.**

Selon une variante du principe de protection par renommage, il est défini pour au moins une fonction dépendante, une famille de fonctions dépendantes algorithmiquement équivalentes mais déclenchées par des commandes déclenchantes à consignes renommées différentes. Selon cette variante, pour au moins un traitement algorithmique utilisant des fonctions dépendantes, ce traitement algorithmique est décomposé en fonctions dépendantes qui pour au moins l'une d'entre elles est remplacée par une fonction dépendante de la même famille au lieu de conserver plusieurs occurrences de la même fonction dépendante. A cette fin, des commandes déclenchantes à consignes renommées sont modifiées pour tenir compte du remplacement de fonctions dépendantes par des fonctions dépendantes de la même famille. En d'autres termes, deux fonctions dépendantes de la même famille ont des consignes différentes et par conséquent des commandes déclenchantes à consignes renommées différentes et, il n'est pas possible, à l'examen du logiciel protégé **2p,** de déceler que les fonctions dépendantes appelées sont algorithmiquement équivalentes.

Selon une première réalisation préférée de la variante du principe de protection par renommage, il est défini pour au moins une fonction dépendante, une famille de fonctions dépendantes algorithmiquement équivalente, en concaténant un champ de bruit à l'information définissant la partie fonctionnelle de la fonction dépendante à exécuter dans l'unité **6.**

Selon une deuxième réalisation préférée de la variante du principe de protection par renommage, il est défini pour au moins une fonction dépendante, une famille de fonctions dépendantes algorithmiquement équivalente en utilisant des champs d'identification.

Selon une variante préférée de réalisation du principe de protection par renommage, il est défini comme méthode de renommage des consignes une méthode de chiffrement permettant de chiffrer les consignes pour les transformer en consignes renommées. Il est rappelé que le renommage des consignes est effectué dans la phase de protection **P.** Pour cette variante préférée, les moyens de rétablissement **20** sont des moyens mettant en oeuvre une méthode de déchiffrement permettant de déchiffrer les consignes renommées et de rétablir ainsi l'identité des fonctions dépendantes à exécuter dans l'unité **6.** Ces moyens de rétablissement sont mis en oeuvre dans l'unité **6** et peuvent être de nature logicielle ou matérielle. Ces moyens de rétablissement **20** sont sollicités dans la phase d'utilisation **U** à chaque fois qu'une commande déclenchante à consigne renommée est exécutée dans le système de traitement de données **3** dans le but de déclencher dans l'unité **6,** l'exécution d'une fonction dépendante.

Selon une autre caractéristique avantageuse de l'invention, le procédé de protection vise à mettre en oeuvre un principe de protection dit par "branchement conditionnel" dont la description est effectuée en relation des **fig. 90** à **92****.**

Pour la mise en oeuvre du principe de protection par branchement conditionnel, il est choisi dans le source du logiciel vulnérable **2vs**, au moins un branchement conditionnel **BC**. Il est aussi choisi au moins une portion du source du logiciel vulnérable **2vs** contenant au moins un branchement conditionnel **BC** choisi.

Au moins une portion choisie du source du logiciel vulnérable **2vs** est alors modifié, de manière à obtenir le source du logiciel protégé **2ps.** Cette modification est telle que notamment lors de l'exécution du logiciel protégé **2p :**
- au moins une portion de la première partie d'exécution **2pes,** qui est exécutée dans le système de traitement de données **3,** prend en compte que la fonctionnalité d'au moins un branchement conditionnel **BC** choisi est exécutée dans l'unité **6,**
- et la seconde partie d'exécution **2peu,** qui est exécutée dans l'unité **6,** exécute au moins la fonctionnalité d'au moins un branchement conditionnel **BC** choisi et met à la disposition du système de traitement de données **3,** une information permettant à la première partie d'exécution **2pes,** de poursuivre son exécution à l'endroit choisi.

La première partie d'exécution **2pes** du logiciel protégé **2p,** exécutée dans le système de traitement de données **3,** exécute des commandes de branchements conditionnels, déclenchant dans l'unité **6,** l'exécution au moyen de la seconde partie d'exécution **2peu,** de branchements conditionnels déportés **bc** dont la fonctionnalité est équivalente à la fonctionnalité des branchements conditionnels **BC** choisis.

La **fig. 90** illustre un exemple d'exécution d'un logiciel vulnérable **2v**. Dans cet exemple, il apparaît, au cours de l'exécution du logiciel vulnérable **2v** dans le système de traitement de données **3** à un instant donné, un branchement conditionnel **BC** indiquant au logiciel vulnérable **2v** l'endroit où poursuivre son déroulement, à savoir l'un des trois endroits possibles **B₁**, **B₂** ou **B₃**. Il doit être compris que le branchement conditionnel **BC** prend la décision de poursuivre l'exécution du logiciel à l'endroit **B₁**, **B₂** ou **B₃**.

La **fig**. **91** illustre un exemple de mise en oeuvre de l'invention pour lequel le branchement conditionnel choisi pour être déporté dans l'unité **6,** correspond au branchement conditionnel **BC**. Dans cet exemple, lors de l'exécution dans le système de traitement de données **3** de la première partie d'exécution **2pes** du logiciel protégé **2p** et en présence de l'unité **6,** il apparaît :
- à l'instant **t₁**, l'exécution de la commande de branchement conditionnel **CBC₁** déclenchant dans l'unité **6,** l'exécution au moyen de la seconde partie d'exécution **2peu,** du branchement conditionnel déporté **bc** algorithmiquement équivalent au branchement conditionnel **BC,** cette commande de branchement conditionnel **CBC₁** étant représentée par **TRIG(bc)**,
- et à l'instant **t₂**, le transfert de l'unité **6** vers le système de traitement de données **3,** de l'information permettant à la première partie d'exécution **2pes,** de poursuivre son exécution à l'endroit choisi, à savoir l'endroit **B₁**, **B₂** ou **Bb**₃.

Il est à noter que lors de l'exécution d'une portion de la première partie d'exécution **2pes** du logiciel protégé **2p,** les commandes de branchements conditionnels exécutées dans le système de traitement de données **3** déclenchent l'exécution des branchements conditionnels déportés correspondants dans l'unité **6.** Ainsi, il apparaît qu'en présence de l'unité **6,** cette portion est exécutée correctement et que par conséquent, le logiciel protégé **2p** est complètement fonctionnel.

La **fïg**. **92** illustre une tentative d'exécution du logiciel protégé **2p,** alors que l'unité **6** est absente. Dans cet exemple, lors de l'exécution dans le système de traitement de données **3** de la première partie d'exécution **2pes** du logiciel protégé **2p:**
- à l'instant **t₁**, l'exécution de la commande de branchement conditionnel **CBC₁**, ne peut déclencher l'exécution du branchement conditionnel déporté **bc,** compte tenu de l'absence de l'unité **6,**
- et à l'instant **t₂**, le transfert de l'information permettant à la première partie d'exécution **2pes** de poursuivre à l'endroit choisi échoue compte tenu de l'absence de l'unité **6.**

Il apparaît donc qu'en l'absence de l'unité **6,** au moins une demande d'une portion de la première partie d'exécution **2pes** de déclencher l'exécution d'un branchement conditionnel déporté dans l'unité **6,** ne peut pas être satisfaite correctement, de sorte qu'au moins cette portion n'est pas exécutée correctement et que, par conséquent, le logiciel protégé **2p** n'est pas complètement fonctionnel.

Dans la description qui précède en relation des **fig**. **90** à **92****,** l'objet de l'invention vise à déporter dans l'unité **6,** un branchement conditionnel. Bien entendu, une réalisation préférée de l'invention peut consister à déporter dans l'unité **6,** une série de branchements conditionnels dont la fonctionnalité globale est équivalente à l'ensemble des fonctionnalités des branchements conditionnels qui ont été déportés. L'exécution de la fonctionnalité globale de cette série de branchements conditionnels déportés aboutit à la mise à disposition, pour le système de traitement de données **3,** d'une information permettant à la première partie d'exécution **2pes** du logiciel protégé **2p** de poursuivre son exécution à l'endroit choisi.

Dans la description qui précède en relation des **fig. 40** à **92****,** quatre principes différents de protection d'un logiciel ont été explicités de manière générale indépendamment les uns des autres. Le procédé de protection conforme à l'invention, est mis en oeuvre en utilisant le principe de protection par détection et coercition, éventuellement associé à un ou plusieurs autres principes de protection. Dans le cas où le principe de protection par détection et coercition est complété par la mise en oeuvre d'au moins un autre principe de protection, le principe de protection par détection et coercition est complété avantageusement par le principe de protection par variable et/ou le principe de protection par renommage et/ou le principe de protection par branchement conditionnel.

Et lorsque le principe de protection par renommage est aussi mis en oeuvre, celui-ci peut être complété à son tour par le principe de protection par branchement conditionnel.

Selon la variante préférée de réalisation, le principe de protection par détection et coercition est complété par le principe de protection par variable et par le principe de protection par renommage, complété par le principe de protection par branchement conditionnel.

Dans le cas où un principe de protection est appliqué, en complément du principe de protection par détection et coercition, sa description effectuée précédemment doit comporter, pour tenir compte de sa mise en oeuvre combinée, les modifications suivantes :
- la notion de logiciel vulnérable doit être comprise comme logiciel vulnérable vis-à-vis du principe de protection en cours de description. Ainsi, dans le cas où un principe de protection a déjà été appliqué au logiciel vulnérable, l'expression « logiciel vulnérable » doit être interprétée par le lecteur comme l'expression « logiciel protégé par le ou les principes de protection déjà appliqué(s)» ;
- la notion de logiciel protégé doit être comprise comme logiciel protégé vis-à-vis du principe de protection en cours de description. Ainsi, dans le cas où un principe de protection a déjà été appliqué, l'expression « logiciel protégé » doit être interprétée par le lecteur comme l'expression « nouvelle version du logiciel protégé »;
- et le ou les choix effectué(s) pour la mise en oeuvre du principe de protection en cours de description doit(vent) tenir compte du ou des choix effectué(s) pour la mise en oeuvre du ou des principe(s) de protection déjà appliqué(s).

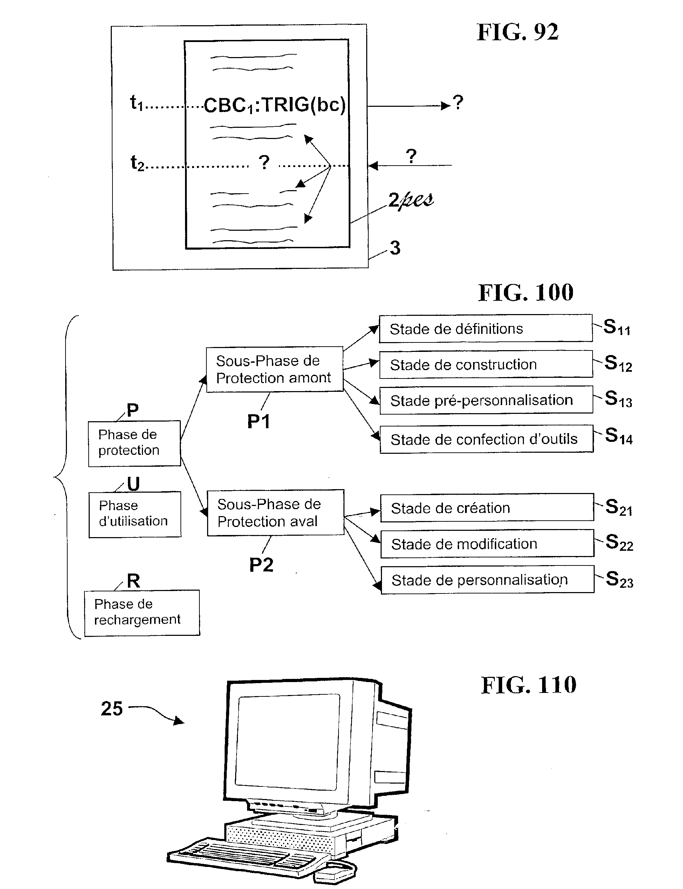

La suite de la description permet de mieux comprendre la mise en oeuvre du procédé de protection conforme à l'invention. Ce procédé de protection selon l'invention fait intervenir, comme cela apparaît plus précisément à la **fig. 100** **:**
- d'abord, une phase de protection **P** au cours de laquelle un logiciel vulnérable **2v** est modifié en un logiciel protégé **2p**,
- ensuite, une phase d'utilisation **U** au cours de laquelle le logiciel protégé **2p** est mis en oeuvre. Dans cette phase d'utilisation **U :**
   - en présence de l'unité **6** et à chaque fois qu'une portion de la première partie d'exécution **2pes** exécutée dans le système de traitement de données **3** l'impose, une fonctionnalité imposée est exécutée dans l'unité **6,** de sorte que cette portion est exécutée correctement et que, par conséquent, le logiciel protégé **2p** est complètement fonctionnel,
   - en l'absence de l'unité **6** et malgré la demande d'une portion de la première partie d'exécution **2pes** d'exécuter une fonctionnalité dans l'unité **6,** cette demande ne peut pas être honorée correctement, de sorte qu'au moins cette portion n'est pas exécutée correctement et que par conséquent, le logiciel protégé **2p** n'est pas complètement fonctionnel,
- et éventuellement une phase de rechargement **R** au cours de laquelle est créditée au moins une utilisation supplémentaire d'une fonctionnalité protégée par la mise en oeuvre de la deuxième variante préférée de réalisation du principe de protection par détection et coercition utilisant comme caractéristique, une variable de mesure.

La phase de protection **P** peut être décomposée en deux sous-phases de protection **P₁** et **P₂**. La première, dite sous-phase de protection amont **P₁**, est mise en oeuvre indépendamment du logiciel vulnérable **2v** à protéger. La deuxième, dite sous-phase de protection aval **P₂** est dépendante du logiciel vulnérable **2v** à protéger. Il est à noter que les sous-phases de protection amont **P₁** et aval **P₂** peuvent être réalisées avantageusement par deux personnes différentes ou deux équipes différentes. Par exemple, la sous-phase de protection amont **P₁** peut être réalisée par une personne ou une société assurant le développement de systèmes de protection de logiciels, tandis que la sous-phase de protection aval **P₂** peut être réalisée par une personne ou une société assurant le développement de logiciels devant être protégés. Bien entendu, il est clair que les sous-phases de protection amont **P₁** et aval **P₂** peuvent aussi être réalisées par la même personne ou la même équipe.

La sous-phase de protection amont **P₁** fait intervenir plusieurs stades **S₁₁**, **..., S₁₁** pour chacun desquels différentes tâches ou travaux sont à effectuer.

Le premier stade de cette sous-phase de protection amont **P₁** est appelé "stade de défnitions **S₁₁**". Lors de ce stade de définitions **S₁₁** :
- il est choisi :
   - le type de l'unité **6.** A titre illustratif, il peut-être choisi en tant qu'unité **6,** un lecteur **8** de cartes à puce et la carte à puce **7** associée au lecteur,
   - et les moyens de transfert **12, 13** destinés à être mis en oeuvre respectivement dans le système de traitement de données **3** et dans l'unité **6,** au cours de la phase d'utilisation **U** et aptes à assurer le transfert de données entre le système de traitement de données **3** et l'unité **6,**
- il est défini :
   - au moins une caractéristique d'exécution de logiciel, susceptible d'être surveillée au moins en partie dans une unité **6,**
   - au moins un critère à respecter pour au moins une caractéristique d'exécution de logiciel,
   - des moyens de détection **17** à mettre en oeuvre dans une unité **6** et permettant de détecter qu'au moins une caractéristique d'exécution de logiciel ne respecte pas au moins un critère associé,
   - et des moyens de coercition **18** à mettre en oeuvre dans une unité **6** et permettant d'informer le système de traitement de données **3** et/ou de modifier l'exécution d'un logiciel lorsqu'au moins un critère n'est pas respecté,
- et dans le cas où le procédé de protection selon l'invention met en oeuvre le principe de protection par détection et coercition utilisant comme caractéristique une variable de mesure de l'exécution du logiciel, il est aussi défini :
   - en tant que caractéristique d'exécution de logiciel susceptible d'être surveillée, une variable de mesure de l'utilisation d'une fonctionnalité d'un logiciel,
   - en tant que critère à respecter, au moins un seuil associé à chaque variable de mesure,
   - et des moyens d'actualisation permettant de mettre à jour au moins une variable de mesure,
- et dans le cas où le procédé de protection selon l'invention met en oeuvre une première variante préférée de réalisation du principe de protection par détection et coercition utilisant comme caractéristique une variable de mesure de l'exécution du logiciel, il est aussi défini :
   - pour au moins une variable de mesure, plusieurs seuils associés,
   - et des moyens de coercition différents correspondant à chacun de ces seuils,
- et dans le cas où le procédé de protection selon l'invention met en oeuvre une seconde variante préférée de réalisation du principe de protection par détection et coercition utilisant comme caractéristique une variable de mesure de l'exécution du logiciel, il est aussi défini des moyens de rechargement permettant de créditer au moins une utilisation supplémentaire pour au moins une fonctionnalité de logiciel surveillée par une variable de mesure,
- et dans le cas où le procédé de protection selon l'invention met en oeuvre le principe de protection par détection et coercition utilisant comme caractéristique un profil d'utilisation de logiciel, il est aussi défini :
   - en tant que caractéristique d'exécution de logiciel susceptible d'être surveillée, un profil d'utilisation de logiciel,
   - et en tant que critère à respecter, au moins un trait d'exécution de logiciel,
- et dans le cas où le procédé de protection selon l'invention met en oeuvre le principe de protection par détection et coercition utilisant comme trait d'exécution à respecter, la surveillance de l'enchaînement d'exécution, il est aussi défini :
   - un jeu d'instructions dont les instructions sont susceptibles d'être exécutées dans l'unité **6,**
   - un jeu de commandes d'instructions pour ce jeu d'instructions, ces commandes d'instructions étant susceptibles d'être exécutées dans le système de traitement de données **3** et de déclencher dans l'unité **6** l'exécution des instructions,
   - en tant que profil d'utilisation, l'enchaînement des instructions,
   - en tant que trait d'exécution, un enchaînement souhaité pour l'exécution des instructions,
   - en tant que moyens de détection **17,** des moyens permettant de détecter que l'enchaînement des instructions ne correspond pas à celui souhaité,
   - et en tant que moyens de coercition **18,** des moyens permettant d'informer le système de traitement de données **3** et/ou de modifier le fonctionnement de la portion de logiciel protégé **2p** lorsque l'enchaînement des instructions ne correspond pas à celui souhaité,
- et dans le cas où le procédé de protection selon l'invention met en oeuvre une variante préférée de réalisation du principe de protection par détection et coercition utilisant comme trait d'exécution à respecter, la surveillance de l'enchaînement d'exécution, il est aussi défini :
   - en tant que jeu d'instructions, un jeu d'instructions dont au moins certaines instructions travaillent sur des registres et utilisent au moins un opérande en vue de rendre un résultat,
   - pour au moins une partie des instructions travaillant sur des registres :
      ➢ une partie **PF** définissant la fonctionnalité de l'instruction,
      ➢ et une partie définissant l'enchaînement souhaité pour l'exécution des instructions et comportant des champs de bits correspondant à :
         ◊ un champ d'identification de l'instruction **CII**,
         ◊ et pour chaque opérande de l'instruction :
            * un champ drapeau **CDₖ**,
            * et un champ d'identification prévue **CIPₖ** de l'opérande,
   - pour chaque registre appartenant aux moyens d'exploitation et utilisé par le jeu d'instructions, un champ d'identification générée **CIGᵥ** dans lequel est automatiquement mémorisée l'identification de la dernière instruction ayant rendu son résultat dans ce registre,
   - en tant que moyens de détection **17,** des moyens permettant, lors de l'exécution d'une instruction, pour chaque opérande, lorsque le champ drapeau **CDₖ** l'impose, de contrôler l'égalité entre le champ d'identification générée **CIGᵥ** correspondant au registre utilisé par cet opérande, et le champ d'identification prévue **CIPₖ** de l'origine de cet opérande,
   - et en tant que moyens de coercition **18,** des moyens permettant de modifier le résultat des instructions, si au moins une des égalités contrôlées est fausse,
- et dans le cas où le procédé de protection selon l'invention met en oeuvre le principe de protection par renommage, il est aussi défini :
   - en tant qu'une commande déclenchante, une commande d'instruction,
   - en tant qu'une fonction dépendante, une instruction,
   - en tant qu'une consigne, au moins un argument pour une commande déclenchante, correspondant au moins en partie à l'information transmise par le système de traitement de données **3** à l'unité **6,** afin de déclencher l'exécution de la fonction dépendante correspondante,
   - une méthode de renommage des consignes permettant de renommer les consignes afin d'obtenir des commandes déclenchantes à consignes renommées,
   - et des moyens de rétablissement **20** destinés à être mis en oeuvre dans l'unité **6** au cours de la phase d'utilisation **U,** et permettant de retrouver la fonction dépendante à exécuter, à partir de la consigne renommée,
- et dans le cas où le procédé de protection selon l'invention met en oeuvre une variante du principe de protection par renommage, il est aussi défini pour au moins une fonction dépendante, une famille de fonctions dépendantes algorithmiquement équivalentes, mais déclenchées par des commandes déclenchantes dont les consignes renommées sont différentes,
- et dans le cas où le procédé de protection selon l'invention met en oeuvre l'une ou l'autre des réalisations préférées de la variante du principe de protection par renommage, il est aussi défini pour au moins une fonction dépendante, une famille de fonctions dépendantes algorithmiquement équivalentes :
   - en concaténant un champ de bruit à l'information définissant la partie fonctionnelle de la fonction dépendante à exécuter dans l'unité **6,**
   - ou en utilisant le champ d'identification de l'instruction **CII** et les champs d'identification prevue **CIPₖ** des opérandes,
- et dans le cas où le procédé de protection selon l'invention met en oeuvre une variante préférée du principe de protection par renommage, il est aussi défini :
   - en tant que méthode de renommage des consignes, une méthode de chiffrement pour chiffrer les consignes,
   - et en tant que moyens de rétablissement **20,** des moyens mettant en oeuvre une méthode de déchiffrement pour déchiffrer les consignes renommées et rétablir ainsi l'identité des fonctions dépendantes à exécuter dans l'unité **6.**

Lors de la sous-phase de protection amont, le stade de définition **S₁₁** est suivi par un stade appelé "stade de construction **S₁₂**". Lors d'un tel stade **S₁₂**, sont construits les moyens de transfert **12**, **13** et les moyens d'exploitation correspondant aux définitions du stade de définition **S₁₁**.

Lors de ce stade de construction **S₁₂**, il est donc procédé:
- à la construction des moyens de transfert **12, 13** permettant, au cours de la phase d'utilisation **U,** le transfert de données entre le système de traitement de données **3** et l'unité **6,**
- à la construction :
   - des moyens d'exploitation permettant à l'unité **6,** au cours de la phase d'utilisation **U** de mettre en oeuvre les moyens de détection **17** et les moyens de coercition **18,**
   - et éventuellement des moyens d'exploitation permettant à l'unité **6,** au cours de la phase d'utilisation **U** de mettre aussi en oeuvre les moyens d'actualisation,
   - et éventuellement des moyens d'exploitation permettant à l'unité **6,** au cours de la phase de rechargement de mettre aussi en oeuvre les moyens de rechargement,
   - et éventuellement des moyens d'exploitation permettant aussi à l'unité **6,** au cours de la phase d'utilisation **U** d'exécuter les instructions du jeu d'instruction,
- et lorsque le principe de protection par renommage est aussi mis en oeuvre, à la construction des moyens d'exploitation permettant à l'unité **6,** au cours de la phase d'utilisation **U** de mettre aussi en oeuvre les moyens de rétablissement.

La construction des moyens d'exploitation est réalisée de manière classique, par l'intermédiaire d'une unité de développement de programme en prenant en compte les définitions intervenues au stade de définitions **S₁₁**. Une telle unité est décrite dans la suite de la description à la **fig**. **110****.**

Lors de la sous-phase de protection amont **P₁**, le stade de construction **S₁₂** peut être suivi par un stade appelé "stade de pré-personnalisation **S₁₃**". Lors de ce stade de pré-personnalisation **S₁₃** au moins une partie des moyens de transfert **13** et/ou les moyens d'exploitation sont chargés dans au moins une unité vierge **60** en vue d'obtenir au moins une unité pré-personnalisée **66.** Il est à noter qu'une partie des moyens d'exploitation, une fois transférée dans une unité pré-personnalisée **66,** n'est plus directement accessible de l'extérieur de cette unité pré-personnalisée **66.** Le transfert des moyens d'exploitation dans une unité vierge **60** peut être réalisé par l'intermédiaire d'une unité de pré-personnalisation adaptée, qui est décrite dans la suite de la description à la **fig**. **120****.** Dans le cas d'une unité pré-personnalisée **66,** constituée d'une carte à puce **7** et de son lecteur **8,** la pré-personnalisation ne concerne que la carte à puce **7.**

Lors de la sous-phase de protection amont **P₁**, il peut être mis en oeuvre, après le stade de définition **S₁₁** et, éventuellement après le stade de construction **S₁₂**, un stade appelé "stade de confection d'outils **S₁₄**". Lors de ce stade de confection d'outils **S₁₄** sont confectionnés des outils permettant d'aider à la génération de logiciels protégés ou d'automatiser la protection de logiciels. De tels outils permettent :
- d'aider à choisir ou de choisir automatiquement dans le logiciel vulnérable **2v** à protéger :
   - la ou les caractéristiques d'exécution à surveiller et, éventuellement, le ou les traitements algorithmiques susceptibles d'être décomposées en instructions déportables dans l'unité **6,**
   - la ou les portions susceptibles d'être modifiées,
   - et lorsque le principe de protection par variable est aussi mis en oeuvre, la ou les variables susceptibles d'être déportées dans l'unité **6,**
   - et lorsque le principe de protection par renommage est aussi mis en oeuvre, le ou les traitements algorithmiques susceptibles d'être décomposées en fonctions dépendantes déportables dans l'unité **6** et pour lesquelles les consignes des commandes déclenchantes peuvent être renommées,
   - et lorsque le principe de protection par branchement conditionnel est aussi mis en oeuvre, le ou les branchements conditionnels dont la fonctionnalité est susceptible d'être déportée dans l'unité **6,**
- et, éventuellement, d'aider à générer des logiciels protégés ou d'automatiser la protection de logiciels.

Ces différents outils peuvent être réalisés indépendamment ou en combinaison et chaque outil peut prendre diverses formes, comme par exemple préprocesseur, assembleur, compilateur, etc.

La sous-phase de protection amont **P₁** est suivie par une sous-phase de protection aval **P₂** dépendante du logiciel vulnérable **2v** à protéger. Cette sous-phase de protection aval **P₂** fait intervenir également plusieurs stades. Le premier stade correspondant à la mise en oeuvre du principe de protection par détection et coercition est appelé "stade de création **S₂₁**". Lors de ce stade de création **S₂₁,** il est utilisé les choix intervenus au stade de définition **S₁₁**. A l'aide de ces choix et éventuellement d'outils construits au stade de confection d'outils **S₁₄**, il est créé le logiciel protégé **2p :**
- en choisissant au moins une caractéristique d'exécution de logiciel à surveiller, parmi les caractéristiques d'exécution susceptibles d'être surveillées,
- en choisissant au moins un critère à respecter pour au moins une caractéristique d'exécution de logiciel choisie,
- en choisissant, au moins un traitement algorithmique qui, lors de l'exécution du logiciel vulnérable **2v,** utilise au moins un opérande et permet d'obtenir au moins un résultat, et pour lequel au moins une caractéristique d'exécution de logiciel choisie, est à surveiller,
- en choisissant au moins une portion du source du logiciel vulnérable **2vs** contenant, au moins un traitement algorithmique choisi,
- en produisant le source du logiciel protégé **2ps** à partir du source du logiciel vulnérable **2vs,** en modifiant au moins une portion choisie du source du logiciel vulnérable **2vs** pour obtenir au moins une portion modifiée du source du logiciel protégé **2ps,** cette modification étant telle que :
   - lors de l'exécution du logiciel protégé **2p** une première partie d'exécution **2pes** est exécutée dans le système de traitement de données **3** et une seconde partie d'exécution **2peu** est exécutée dans une unité **6,** obtenue à partir de l'unité vierge **60** après chargement d'informations,
   - la seconde partie d'exécution **2peu** exécute au moins la fonctionnalité d'au moins un traitement algorithmique choisi,
   - et lors de l'exécution du logiciel protégé **2p,** au moins une caractéristique d'exécution choisie est surveillée au moyen de la seconde partie d'exécution **2peu** et le non respect d'un critère aboutit à une modification de l'exécution du logiciel protégé **2p,**
- et en produisant :
   - une première partie objet **2pos** du logiciel protégé **2p,** à partir du source du logiciel protégé **2ps,** cette première partie objet **2pos** étant telle que lors de l'exécution du logiciel protégé **2p,** apparaît une première partie d'exécution **2pes** qui est exécutée dans le système de traitement de données 3 et dont au moins une portion prend en compte qu'au moins une caractéristique d'exécution de logiciel choisie est surveillée,
   - et une seconde partie objet **2pou** du logiciel protégé **2p,** contenant les moyens d'exploitation mettant en oeuvre les moyens de détection **17** et les moyens de coercition **18**, cette seconde partie objet **2pou** étant telle que, après chargement dans l'unité vierge **60** et lors de l'exécution du logiciel protégé **2p,** apparaît la seconde partie d'exécution **2peu** au moyen de laquelle au moins une caractéristique d'exécution de logiciel est surveillée et au moyen de laquelle le non respect d'un critère aboutit à une modification de l'exécution du logiciel protégé **2p**,.

Bien entendu, le principe de protection par détection et coercition selon l'invention peut être appliqué directement lors du développement d'un nouveau logiciel sans nécessiter la réalisation préalable d'un logiciel vulnérable **2v.** De cette manière, il est obtenu directement un logiciel protégé **2p.**

Pour la mise en oeuvre du principe de protection par détection et coercition utilisant comme caractéristique une variable de mesure de l'exécution du logiciel, le logiciel protégé **2p** est modifié :
- en choisissant en tant que caractéristique d'exécution de logiciel à surveiller, au moins une variable de mesure de l'utilisation d'une fonctionnalité d'un logiciel,
- en choisissant :
   - au moins une fonctionnalité du logiciel protégé **2p** dont l'utilisation est susceptible d'être surveillée grâce à une variable de mesure,
   - au moins une variable de mesure servant à quantifier l'utilisation de ladite fonctionnalité,
   - au moins un seuil associé à une variable de mesure choisie correspondant à une limite d'utilisation de ladite fonctionnalité,
   - et au moins une méthode de mise à jour d'une variable de mesure choisie en fonction de l'utilisation de ladite fonctionnalité,
- et en modifiant au moins une portion choisie du source du logiciel protégé **2ps,** cette modification étant telle que, lors de l'exécution du logiciel protégé **2p,** la variable de mesure est actualisée au moyen de la seconde partie d'exécution **2peu**, en fonction de l'utilisation de ladite fonctionnalité et au moins un dépassement de seuil est pris en compte.

Pour la mise en oeuvre d'une première variante préférée de réalisation du principe de protection par détection et coercition utilisant, comme caractéristique, une variable de mesure, le logiciel protégé **2p** est modifié :
- en choisissant dans le source du logiciel protégé **2ps,** au moins une variable de mesure choisie à laquelle doivent être associés plusieurs seuils correspondants à des limites différentes d'utilisation de la fonctionnalité,
- en choisissant au moins deux seuils associés à la variable de mesure choisie,
- et en modifiant au moins une portion choisie du source du logiciel protégé **2ps,** cette modification étant telle que, lors de l'exécution du logiciel protégé **2p,** les dépassements des divers seuils sont pris en compte, au moyen de la seconde partie d'exécution **2peu,** de manière différente.

Pour la mise en oeuvre d'une seconde variante préférée de réalisation du principe de protection par détection et coercition utilisant comme caractéristique, une variable de mesure, le logiciel protégé **2p** est modifié :
- en choisissant dans le source du logiciel protégé **2ps,** au moins une variable de mesure choisie permettant de limiter l'utilisation d'une fonctionnalité à laquelle au moins une utilisation supplémentaire doit pouvoir être créditée,
- et en modifiant au moins une portion choisie, cette modification étant telle que dans une phase dite de rechargement, au moins une utilisation supplémentaire d'au moins une fonctionnalité correspondant à une variable de mesure choisie peut être créditée.

Pour la mise en oeuvre du principe de protection par détection et coercition utilisant comme caractéristique, un profil d'utilisation de logiciel, le logiciel protégé **2p** est modifié :
- en choisissant en tant que caractéristique d'exécution de logiciel à surveiller au moins un profil d'utilisation de logiciel,
- en choisissant au moins un trait d'exécution qu'au moins un profil d'utilisation choisi doit respecter,
- et en modifiant au moins une portion choisie du source du logiciel protégé **2ps,** cette modification étant telle que, lors de l'exécution du logiciel protégé **2p,** la seconde partie d'exécution **2peu** respecte tous les traits d'exécution choisis.

Pour la mise en oeuvre du principe de protection par détection et coercition utilisant comme trait d'exécution à respecter, la surveillance de l'enchaînement d'exécution, le logiciel protégé **2p** est modifié :
- en modifiant au moins une portion choisie du source du logiciel protégé **2ps**, cette modification étant telle que :
   - au moins un traitement algorithmique choisi est décomposé de manière que lors de l'exécution du logiciel protégé **2p,** ce traitement algorithmique est exécuté au moyen de la seconde partie d'exécution **2peu,** en utilisant des instructions,
   - pour au moins un traitement algorithmique choisi, des commandes d'instructions sont intégrées dans le source du logiciel protégé **2ps,** de manière que lors de l'exécution du logiciel protégé **2p,** chaque commande d'instruction est exécutée par la première partie d'exécution **2pes** et déclenche dans l'unité **6,** l'exécution au moyen de la seconde partie d'exécution **2peu,** d'une instruction,
   - un ordonnancement des commandes d'instructions est choisi parmi l'ensemble des ordonnancements permettant l'exécution du logiciel protégé **2p,**
   - et l'enchaînement que doivent respecter au moins certaines des instructions lors de leur exécution dans l'unité **6** est spécifié.

Lors de la sous-phase de protection aval **P₂**, et lorsqu'au moins un autre principe de protection est appliqué en plus du principe de protection par détection et coercition, il est mis en oeuvre un "stade de modification **S₂₂**". Lors de ce stade de modification **S₂₂**, il est utilisé les définitions intervenues au stade de définitions **S₁₁**. A l'aide de ces définitions et éventuellement d'outils construits au stade de confection d'outils **S₁₄**, le logiciel protégé **2p** est modifié pour permettre la mise en oeuvre des principes de protection selon l'un des arrangements définis ci-avant.

Lorsque le principe de protection par variable est mis en oeuvre, le logiciel protégé **2p** est modifié :
- en choisissant au moins une variable utilisée dans au moins un traitement algorithmique choisi, qui lors de l'exécution du logiciel protégé **2p,** définit partiellement l'état du logiciel protégé **2p,**
- en modifiant au moins une portion choisie du source du logiciel protégé **2ps,** cette modification étant telle que lors de l'exécution du logiciel protégé **2p,** au moins une variable choisie ou au moins une copie de variable choisie réside dans l'unité **6,**
- et en produisant :
   - la première partie objet **2pos** du logiciel protégé **2p,** cette première partie objet **2pos** étant telle que lors de l'exécution du logiciel protégé **2p,** au moins une portion de la première partie d'exécution **2pes** prend aussi en compte qu'au moins une variable ou au moins une copie de variable réside dans l'unité **6,**
   - et la seconde partie objet **2pou** du logiciel protégé **2p,** cette seconde partie objet **2pou** étant telle que, après chargement dans l'unité **6** et lors de l'exécution du logiciel protégé **2p,** apparaît la seconde partie d'exécution **2peu** au moyen de laquelle au moins une variable choisie, ou au moins une copie de variable choisie réside aussi dans l'unité **6.**

Lorsque le principe de protection par renommage est mis en oeuvre, le logiciel **2p** est modifié :
- en choisissant dans le source du logiciel protégé **2ps,** des commandes déclenchantes,
- en modifiant au moins une portion choisie du source du logiciel protégé **2ps** en renommant les consignes des commandes déclenchantes choisies, afin de dissimuler l'identité des fonctions dépendantes correspondantes,
- et en produisant :
   - la première partie objet **2pos** du logiciel protégé **2p,** cette première partie objet **2pos** étant telle que lors de l'exécution du logiciel protégé **2p,** les commandes déclenchantes à consignes renommées sont exécutées,
   - et la seconde partie objet **2pou** du logiciel protégé **2p** contenant les moyens d'exploitation mettant aussi en oeuvre les moyens de rétablissement **20,** cette seconde partie objet **2pou** étant telle que, après chargement dans l'unité **6** et lors de l'exécution du logiciel protégé **2p,** l'identité des fonctions dépendantes dont l'exécution est déclenchée par la première partie d'exécution **2pes** est rétablie au moyen de la seconde partie d'exécution **2peu**, et les fonctions dépendantes sont exécutées au moyen de la seconde partie d'exécution **2peu.**

Pour la mise en oeuvre d'une variante du principe de protection par renommage, le logiciel protégé **2p** est modifié :
- en choisissant dans le source du logiciel protégé **2ps** au moins une commande déclenchante à consigne renommée,
- et en modifiant au moins une portion choisie du source du logiciel protégé **2ps** en remplaçant au moins la consigne renommée d'une commande déclenchante à consigne renommée choisie, par une autre consigne renommée, déclenchant une fonction dépendante de la même famille.

Lorsque le principe de protection par branchement conditionnel est mis en oeuvre, le logiciel protégé **2p** est modifié :
- en choisissant dans le source du logiciel protégé **2ps,** au moins un branchement conditionnel effectué dans au moins un traitement algorithmique choisi,
- en modifiant au moins une portion choisie du source du logiciel protégé **2ps,** cette modification étant telle que lors de l'exécution du logiciel protégé **2p,** la fonctionnalité d'au moins un branchement conditionnel choisi, est exécutée, au moyen de la seconde partie d'exécution **2peu,** dans l'unité **6,**
- et en produisant :
   - la première partie objet **2pos** du logiciel protégé **2p,** cette première partie objet **2pos** étant telle que lors de l'exécution du logiciel protégé **2p,** la fonctionnalité d'au moins un branchement conditionnel choisi est exécutée dans l'unité **6,**
   - et la seconde partie objet **2pou** du logiciel protégé **2p,** cette seconde partie objet **2pou** étant telle que, après chargement dans l'unité **6** et lors de l'exécution du logiciel protégé **2p,** apparaît la seconde partie d'exécution **2peu** au moyen de laquelle la fonctionnalité d'au moins un branchement conditionnel choisi est exécutée.

Pour la mise en oeuvre d'une réalisation préférée du principe de protection par branchement conditionnel, le logiciel protégé **2p** est modifié :
- en choisissant, dans le source du logiciel protégé **2ps** au moins une série de branchements conditionnels choisis,
- en modifiant au moins une portion choisie du source du logiciel protégé **2ps,** cette modification étant telle que lors de l'exécution du logiciel protégé **2p,** la fonctionnalité globale d'au moins une série choisie de branchements conditionnels est exécutée au moyen de la seconde partie d'exécution **2peu**, dans l'unité **6,**
- et en produisant :
   - la première partie objet **2pos** du logiciel protégé **2p,** cette première partie objet **2pos** étant telle que lors de l'exécution du logiciel protégé **2p,** la fonctionnalité d'au moins une série choisie de branchements conditionnels est exécutée dans l'unité **6,**
   - et la seconde partie objet **2pou** du logiciel protégé **2p,** cette seconde partie objet **2pou** étant telle que, après chargement dans l'unité **6** et lors de l'exécution du logiciel protégé **2p,** apparaît la seconde partie d'exécution **2peu** au moyen de laquelle la fonctionnalité globale d'au moins une série choisie de branchements conditionnels est exécutée.

Bien entendu, les principes de protection selon l'invention peuvent être appliqués directement lors du développement d'un nouveau logiciel sans nécessiter la réalisation préalable de logiciels protégés intermédiaires. De cette façon, les stades de création **S₂₁** et de modification **S₂₂** peuvent être effectués concomitamment de manière à obtenir directement le logiciel protégé **2p.**

Lors de la sous-phase de protection aval **P₂**, il est mis en oeuvre après le stade de création **S₂₁** du logiciel protégé **2p,** et éventuellement après le stade de modification **S₂₂**, un stade appelé "stade de personnalisation **S₂₃**". Lors de ce stade de personnalisation **S₂₃**, la seconde partie objet **2pou** contenant les moyens d'exploitation est chargée dans au moins une unité vierge **60,** en vue d'obtenir au moins une unité **6,** ou une partie de la seconde partie objet **2pou** contenant éventuellement les moyens d'exploitation est chargée dans au moins une unité pré-personnalisée **66,** en vue d'obtenir au moins une unité **6.** Le chargement de ces informations de personnalisation permet de rendre opérationnelle au moins une unité **6.** Il est à noter qu'une partie de ces informations, une fois transférée dans une unité **6,** n'est pas directement accessible de l'extérieur de cette unité **6.** Le transfert des informations de personnalisation dans une unité vierge **60** ou une unité pré-personnalisée **66** peut être réalisé par l'intermédiaire d'une unité de personnalisation adaptée qui est décrite dans la suite de la description à la **fig**. **150****.** Dans le cas d'une unité **6,** constituée d'une carte à puce **7** et de son lecteur **8,** la personnalisation ne concerne quela carte à puce **7.**

Pour la mise en oeuvre de la phase de protection **P,** différents moyens techniques sont décrits plus précisément en relation des **fig**. **110****,** **120, 130, 140** et **150****.**

La **fig. 110** illustre un exemple de réalisation d'un système **25** permettant de mettre en oeuvre le stade de construction **S₁₂** prenant en compte les définitions intervenues au stade de définitions **S₁₁** et au cours duquel sont construits les moyens de transfert **12, 13** et éventuellement, les moyens d'exploitation destinés à l'unité **6.** Un tel système **25** comporte une unité de développement de programme ou station de travail se présentant classiquement sous la forme d'un ordinateur comprenant une unité centrale, un écran, des périphériques du type clavier-souris, et comportant, notamment, les programmes suivants : éditeurs de fichiers, assembleurs, pré-processeurs, compilateurs, interpréteurs, debuggers et éditeurs de liens.

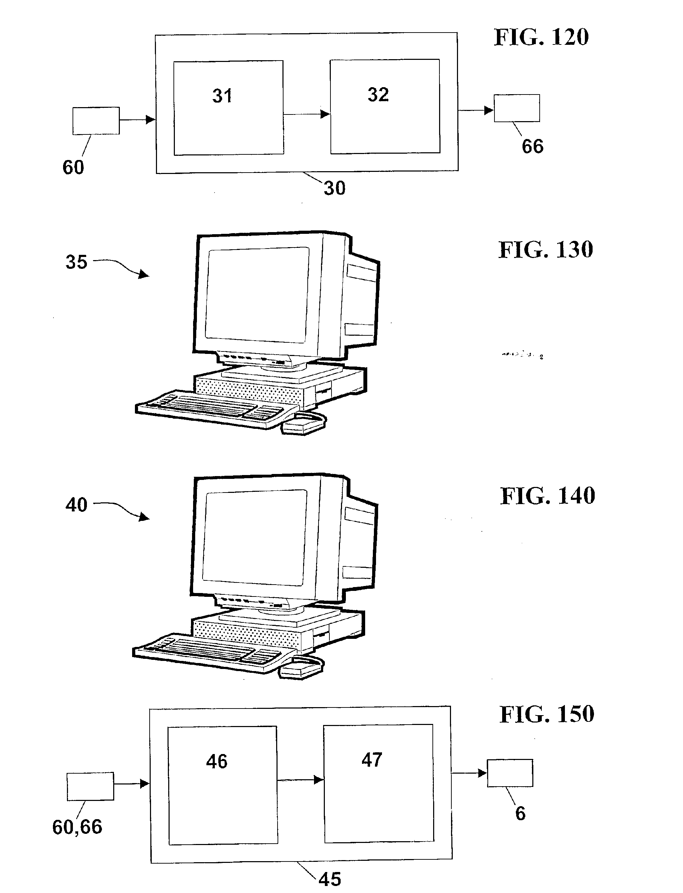

La **fig. 120** illustre un exemple de réalisation d'une unité de pré-personnalisation **30** permettant de charger au moins en partie les moyens de transfert **13** et/ou les moyens d'exploitation dans au moins une unité vierge **60** en vue d'obtenir au moins une unité pré-personnalisée **66.** Cette unité de pré-personnalisation **30** comporte un moyen de lecture et d'écriture **31** permettant de pré-personnaliser de manière électrique, une unité vierge **60,** de manière à obtenir une unité pré-personnalisée **66** dans laquelle les moyens de transfert **13** et/ou d'exploitation ont été chargés. L'unité de pré-personnalisation **30** peut aussi comporter des moyens de personnalisation physique **32** de l'unité vierge **60** pouvant se présenter par exemple, sous la forme d'une imprimante. Dans le cas où l'unité **6** est constituée par une carte à puce **7** et son lecteur **8,** la pré-personnalisation concerne généralement uniquement la carte à puce **7.**

La **fig. 130** illustre un exemple de réalisation d'un système **35** permettant d'effectuer la confection des outils permettant d'aider à générer des logiciels protégés ou d'automatiser la protection de logiciels. Un tel système **35** comporte une unité de développement de programme ou station de travail se présentant classiquement sous la forme d'un ordinateur comprenant une unité centrale, un écran, des périphériques du type clavier-souris, et comportant, notamment, les programmes suivants : éditeurs de fichiers, assembleurs, pré-processeurs, compilateurs, interpréteurs, debuggers et éditeurs de liens.

La **fig. 140** illustre un exemple de réalisation d'un système **40** permettant de créer directement un logiciel protégé **2p** ou de modifier un logiciel vulnérable **2v** en vue d'obtenir un logiciel protégé **2p.** Un tel système **40** comporte une unité de développement de programme ou station de travail se présentant classiquement sous la forme d'un ordinateur comprenant une unité centrale, un écran, des périphériques du type clavier-souris, et comportant, notamment, les programmes suivants : éditeurs de fichiers, assembleurs, pré-processeurs, compilateurs, interpréteurs, debuggers et éditeurs de liens, ainsi que des outils permettant d'aider à générer des logiciels protégés ou d'automatiser la protection de logiciels.

La **fig. 150** illustre un exemple de réalisation d'une unité de personnalisation **45** permettant de charger la seconde partie objet **2pou** dans au moins une unité vierge **60** en vue d'obtenir au moins une unité **6** ou une partie de la seconde partie objet **2pou** dans au moins une unité pré-personnalisée **66** en vue d'obtenir au moins une unité **6.** Cette unité de personnalisation **45** comporte un moyen de lecture et d'écriture **46** permettant de personnaliser de manière électrique, au moins une unité vierge **60** ou au moins une unité pré-personnalisée **66,** de manière à obtenir au moins une unité **6.** A l'issue de cette personnalisation, une unité **6** comporte les informations nécessaires à l'exécution du logiciel protégé **2p.** L'unité de personnalisation **45** peut aussi comporter des moyens de personnalisation physique **47** pour au moins une unité **6** pouvant se présenter par exemple, sous la forme d'une imprimante. Dans le cas où une unité **6** est constituée par une carte à puce **7** et son lecteur **8,** la personnalisation concerne généralement uniquement la carte à puce **7.**

Le procédé de protection de l'invention peut être mis en oeuvre avec les améliorations suivantes :
- Il peut être prévu d'utiliser conjointement plusieurs unités de traitement et de mémorisation dans lesquelles est répartie la seconde partie objet **2pou** du logiciel protégé **2p** de manière que leur utilisation conjointe permette d'exécuter le logiciel protégé **2p,** l'absence d'au moins une de ces unités de traitement et de mémorisation empêchant l'utilisation du logiciel protégé **2p.**
- De même, après le stade de pré-personnalisation **S₁₃** et lors du stade de personnalisation **S₂₃,** la partie de la seconde partie objet **2pou** nécessaire pour transformer l'unité pré-personnalisée **66** en une unité **6** peut être contenue dans une unité de traitement et de mémorisation utilisée par l'unité de personnalisation **45** afin de limiter l'accès à cette partie de la seconde partie objet **2pou.** Bien entendu, cette partie de la seconde partie objet **2pou** peut être répartie dans plusieurs unités de traitement et de mémorisation de manière que cette partie de la seconde partie objet **2pou** soit accessible uniquement lors de l'utilisation conjointe de ces unités de traitement et de mémorisation.

## Revendications

1. Procédé pour protéger, à partir d'au moins une unité vierge **(60)** comportant au moins des moyens de mémorisation **(15)** et des moyens de traitement **(16),** un logiciel vulnérable **(2v)** contre son utilisation non autorisée, ledit logiciel vulnérable **(2v)** fonctionnant sur un système de traitement de données **(3), caractérisé en ce qu'**il consiste :
→ dans une phase de protection **(P) :**
• à définir :
- au moins une caractéristique d'exécution de logiciel, susceptible d'être surveillée au moins en partie dans une unité **(6),**
- au moins un critère à respecter pour au moins une caractéristique d'exécution de logiciel,
- des moyens de détection **(17)** à mettre en oeuvre dans une unité **(6)** et permettant de détecter qu'au moins une caractéristique d'exécution de logiciel ne respecte pas au moins un critère associé,
- et des moyens de coercition **(18)** à mettre en oeuvre dans une **unité (6)** et permettant d'informer le système de traitement de données **(3)** et/ou de modifier l'exécution d'un logiciel lorsqu'au moins un critère n'est pas respecté,
• à construire des moyens d'exploitation permettant de transformer l'unité vierge **(60)** en une unité **(6)** capable de mettre en oeuvre les moyens de détection **(17)** et les moyens de coercition **(18),**
• à créer un logiciel protégé **(2p) :**
- en choisissant au moins une caractéristique d'exécution de logiciel à surveiller, parmi les caractéristiques d'exécution susceptibles d'être surveillées,
- en choisissant au moins un critère à respecter pour au moins une caractéristique d'exécution de logiciel choisie,
- en choisissant, au moins un traitement algorithmique qui, lors de l'exécution du logiciel vulnérable **(2v),** utilise au moins un opérande et permet d'obtenir au moins un résultat, et pour lequel au moins une caractéristique d'exécution de logiciel choisie, est à surveiller,
- en choisissant au moins une portion du source du logiciel vulnérable **(2vs)** contenant, au moins un traitement algorithmique choisi,
- en produisant le source du logiciel protégé **(2ps)** à partir du source du logiciel vulnérable **(2vs),** en modifiant au moins une portion choisie du source du logiciel vulnérable **(2vs)** pour obtenir au moins une portion modifiée du source du logiciel protégé **(2ps),** cette modification étant telle que :
➢ lors de l'exécution du logiciel protégé **(2p)** une première partie d'exécution **(2pes)** est exécutée dans le système de traitement de données **(3)** et une seconde partie d'exécution **(2peu)** est exécutée dans une unité **(6),** obtenue à partir de l'unité vierge **(60)** après chargement d'informations,
➢ la seconde partie d'exécution **(2peu)** exécute au moins la fonctionnalité d'au moins un traitement algorithmique choisi,
➢ et lors de l'exécution du logiciel protégé **(2p),** au moins une caractéristique d'exécution choisie est surveillée au moyen de la seconde partie d'exécution **(2peu)** et le non respect d'un critère aboutit à une modification de l'exécution du logiciel protégé **(2p),**
- et en produisant :
➢ une première partie objet **(2pos)** du logiciel protégé **(2p),** à partir du source du logiciel protégé **(2ps),** cette première partie objet **(2pos)** étant telle que lors de l'exécution du logiciel protégé **(2p)**, apparaît une première partie d'exécution **(2pes)** qui est exécutée dans le système de traitement de données **(3)** et dont au moins une portion prend en compte qu'au moins une caractéristique d'exécution de logiciel choisie est surveillée,
➢ et une seconde partie objet **(2pou)** du logiciel protégé **(2p)**, contenant les moyens d'exploitation mettant en oeuvre les moyens de détection **(17)** et les moyens de coercition **(18),** cette seconde partie objet **(2pou)** étant telle que, après chargement dans l'unité vierge **(60)** et lors de l'exécution du logiciel protégé **(2p),** apparaît la seconde partie d'exécution **(2peu)** au moyen de laquelle au moins une caractéristique d'exécution de logiciel est surveillée et au moyen de laquelle le non respect d'un critère aboutit à une modification de l'exécution du logiciel protégé **(2p),**
• et à charger la seconde partie objet **(2pou)** dans l'unité vierge **(60),** en vue d'obtenir l'unité **(6),**
→ et dans une phase d'utilisation (U) au cours de laquelle est exécuté le logiciel protégé **(2p)**:
• en présence de l'unité **(6)** :
- et tant que tous les critères correspondant à toutes les caractéristiques d'exécution surveillées de toutes les portions modifiées du logiciel protégé **(2p)** sont respectés, à permettre le fonctionnement nominal de ces portions du logiciel protégé **(2p)** et par conséquent à permettre le fonctionnement nominal du logiciel protégé **(2p),**
- et si au moins un des critères correspondant à une caractéristique d'exécution surveillée d'une portion du logiciel protégé **(2p)** n'est pas respecté, à en informer le système de traitement de données **(3)** et/ou à modifier le fonctionnement de la portion du logiciel protégé **(2p),** de sorte que le fonctionnement du logiciel protégé **(2p)** est modifié,
• et en l'absence de l'unité **(6),** malgré la demande d'une portion de la première partie d'exécution **(2pes)** de déclencher l'exécution dans l'unité **(6),** de la fonctionnalité d'un traitement algorithmique choisi, à ne pas pouvoir répondre correctement à cette demande, de sorte qu'au moins cette portion n'est pas exécutée correctement et que, par conséquent, le logiciel protégé **(2p)** n'est pas complètement fonctionnel.

2. Procédé selon la revendication 1, pour limiter l'utilisation d'un logiciel protégé **(2p), caractérisé en ce qu'**il consiste :
→ dans la phase de protection **(P) :**
• à définir :
- en tant que caractéristique d'exécution de logiciel susceptible d'être surveillée, une variable de mesure de l'utilisation d'une fonctionnalité d'un logiciel,
- en tant que critère à respecter, au moins un seuil associé à chaque variable de mesure,
- et des moyens d'actualisation permettant de mettre à jour au moins une variable de mesure,
• à construire les moyens d'exploitation permettant à l'unité **(6)** de mettre aussi en oeuvre les moyens d'actualisation,
• et à modifier le logiciel protégé **(2p) :**
- en choisissant en tant que caractéristique d'exécution de logiciel à surveiller, au moins une variable de mesure de l'utilisation d'une fonctionnalité d'un logiciel,
- en choisissant:
➢ au moins une fonctionnalité du logiciel protégé **(2p)** dont l'utilisation est susceptible d'être surveillée grâce à une variable de mesure,
➢ au moins une variable de mesure servant à quantifier l'utilisation de ladite fonctionnalité,
➢ au moins un seuil associé à une variable de mesure choisie correspondant à une limite d'utilisation de ladite fonctionnalité,
➢ et au moins une méthode de mise à jour d'une variable de mesure choisie en fonction de l'utilisation de ladite fonctionnalité,
- et en modifiant au moins une portion choisie du source du logiciel protégé **(2ps),** cette modification étant telle que, lors de l'exécution du logiciel protégé **(2p),** la variable de mesure est actualisée au moyen de la seconde partie d'exécution **(2peu), en** fonction de l'utilisation de ladite fonctionnalité et au moins un dépassement de seuil est pris en compte,
→ et dans la phase d'utilisation **(U),** en présence de l'unité **(6),** et dans le cas où il est détecté au moins un dépassement de seuil correspondant à au moins une limite d'utilisation, à en informer le système de traitement de données **(3)** et/ou à modifier le fonctionnement de la portion du logiciel protégé **(2p),** de sorte que le fonctionnement du logiciel protégé **(2p)** est modifié.

3. Procédé selon la revendication 2, **caractérisé en ce qu'**il consiste :
→ dans la phase de protection **(P) :**
• à définir :
- pour au moins une variable de mesure, plusieurs seuils associés,
- et des moyens de coercition différents correspondant à chacun de ces seuils,
• et à modifier le logiciel protégé **(2p) :**
- en choisissant dans le source du logiciel protégé **(2ps),** au moins une variable de mesure choisie à laquelle doivent être associés plusieurs seuils correspondants à des limites différentes d'utilisation de la fonctionnalité,
- en choisissant au moins deux seuils associés à la variable de mesure choisie,
- et en modifiant au moins une portion choisie du source du logiciel protégé **(2ps),** cette modification étant telle que, lors de l'exécution du logiciel protégé **(2p),** les dépassements des divers seuils sont pris en compte, au moyen de la seconde partie d'exécution **(2peu),** de manière différente,
→ et dans la phase d'utilisation **(U) :**
• en présence de l'unité **(6) :**
- dans le cas où il est détecté le dépassement d'un premier seuil, à enjoindre le logiciel protégé **(2p)** de ne plus utiliser la fonctionnalité correspondante,
- et dans le cas où il est détecté le dépassement d'un deuxième seuil, à rendre inopérante la fonctionnalité correspondante et/ou au moins une portion du logiciel protégé **(2p).**

4. Procédé selon la revendication 2 ou 3, **caractérisé en ce qu'**il consiste :
→ dans la phase de protection **(P) :**
• à définir des moyens de rechargement permettant de créditer au moins une utilisation supplémentaire pour au moins une fonctionnalité de logiciel surveillée par une variable de mesure,
• à construire les moyens d'exploitation permettant aussi à l'unité **(6)** de mettre en oeuvre les moyens de rechargement,
• et à modifier le logiciel protégé **(2p) :**
- en choisissant dans le source du logiciel protégé **(2ps),** au moins une variable de mesure choisie permettant de limiter l'utilisation d'une fonctionnalité à laquelle au moins une utilisation supplémentaire doit pouvoir être créditée,
- et en modifiant au moins une portion choisie, cette modification étant telle que dans une phase dite de rechargement, au moins une utilisation supplémentaire d'au moins une fonctionnalité correspondant à une variable de mesure choisie peut être créditée,
→ et dans la phase de rechargement :
• à réactualiser au moins une variable de mesure choisie et/ou au moins un seuil associé, de manière à permettre au moins une utilisation supplémentaire de la fonctionnalité.

5. Procédé selon la revendication 1, **caractérisé en ce qu'**il consiste :
→ dans la phase de protection **(P) :**
• à définir :
- en tant que caractéristique d'exécution de logiciel susceptible d'être surveillée, un profil d'utilisation de logiciel,
- et en tant que critère à respecter, au moins un trait d'exécution de logiciel,
• et à modifier le logiciel protégé **(2p) :**
- en choisissant en tant que caractéristique d'exécution de logiciel à surveiller au moins un profil d'utilisation de logiciel,
- en choisissant au moins un trait d'exécution qu'au moins un profil d'utilisation choisi doit respecter,
- et en modifiant au moins une portion choisie du source du logiciel protégé **(2ps),** cette modification étant telle que, lors de l'exécution du logiciel protégé **(2p),** la seconde partie d'exécution **(2peu)** respecte tous les traits d'exécution choisis,
→ et dans la phase d'utilisation **(U)** en présence de l'unité **(6),** et dans le cas où il est détecté qu'au moins un trait d'exécution n'est pas respecté, à en informer le système de traitement de données **(3)** et/ou à modifier le fonctionnement de la portion du logiciel protégé **(2p),** de sorte que le fonctionnement du logiciel protégé **(2p)** est modifié.

6. Procédé selon la revendication 5, **caractérisé en ce qu'**il consiste :
→ dans la phase de protection **(P) :**
• à définir :
- un jeu d'instructions dont les instructions sont susceptibles d'être exécutées dans l'unité **(6),**
- un jeu de commandes d'instructions pour ce jeu d'instructions, ces commandes d'instructions étant susceptibles d'être exécutées dans le système de traitement de données **(3)** et de déclencher dans l'unité **(6)** l'exécution des instructions,
- en tant que profil d'utilisation, l'enchaînement des instructions,
- en tant que trait d'exécution, un enchaînement souhaité pour l'exécution des instructions,
- en tant que moyens de détection **(17),** des moyens permettant de détecter que l'enchaînement des instructions ne correspond pas à celui souhaité,
- et en tant que moyens de coercition **(18),** des moyens permettant d'informer le système de traitement de données **(3)** et/ou de modifier le fonctionnement de la portion de logiciel protégé **(2p)** lorsque l'enchaînement des instructions ne correspond pas à celui souhaité,
• à construire les moyens d'exploitation permettant aussi à l'unité **(6)** d'exécuter les instructions du jeu d'instructions, l'exécution de ces instructions étant déclenchée par l'exécution dans le système de traitement de données **(3),** des commandes d'instructions,
• et à modifier le logiciel protégé **(2p) :**
- en modifiant au moins une portion choisie du source du logiciel protégé **(2ps),** cette modification étant telle que :
➢ au moins un traitement algorithmique choisi est décomposé de manière que lors de l'exécution du logiciel protégé **(2p),** ce traitement algorithmique est exécuté au moyen de la seconde partie d'exécution **(2peu),** en utilisant des instructions,
➢ pour au moins un traitement algorithmique choisi, des commandes d'instructions sont intégrées dans le source du logiciel protégé **(2ps),** de manière que lors de l'exécution du logiciel protégé **(2p),** chaque commande d'instruction est exécutée par la première partie d'exécution **(2pes)** et déclenche dans l'unité **(6),** l'exécution au moyen de la seconde partie d'exécution **(2peu),** d'une instruction,
➢ un ordonnancement des commandes d'instructions est choisi parmi l'ensemble des ordonnancements permettant l'exécution du logiciel protégé **(2p),**
➢ et l'enchaînement que doivent respecter au moins certaines des instructions lors de leur exécution dans l'unité **(6)** est spécifié,
→ et dans la phase d'utilisation **(U),** en présence de l'unité **(6),** dans le cas où il est détecté que l'enchaînement des instructions exécutées dans l'unité **(6)** ne correspond pas à celui souhaité, à en informer le système de traitement de données **(3)** et/ou à modifier le fonctionnement de la portion du logiciel protégé **(2p),** de sorte que le fonctionnement du logiciel protégé **(2p)** est modifié.

7. Procédé selon la revendication 6, **caractérisé en ce qu'**il consiste :
→ dans la phase de protection **(P) :**
• à définir :
- en tant que jeu d'instructions, un jeu d'instructions dont au moins certaines instructions travaillent sur des registres et utilisent au moins un opérande en vue de rendre un résultat,
- pour au moins une partie des instructions travaillant sur des registres :
➢ une partie **(PF)** définissant la fonctionnalité de l'instruction,
➢ et une partie définissant l'enchaînement souhaité pour l'exécution des instructions et comportant des champs de bits correspondant à :
◊ un champ d'identification de l'instruction **(CII),**
◊ et pour chaque opérande de l'instruction :
* un champ drapeau **(CDₖ),**
* et un champ d'identification prévue **(CIPₖ)** de l'opérande,
- pour chaque registre appartenant aux moyens d'exploitation et utilisé par le jeu d'instructions, un champ d'identification générée **(CIGᵥ)** dans lequel est automatiquement mémorisée l'identification de la dernière instruction ayant rendu son résultat dans ce registre,
- en tant que moyens de détection **(17),** des moyens permettant, lors de l'exécution d'une instruction, pour chaque opérande, lorsque le champ drapeau **(CDₖ)** l'impose, de contrôler l'égalité entre le champ d'identification générée **(CIGᵥ)** correspondant au registre utilisé par cet opérande, et le champ d'identification prévue **(CIPₖ)** de l'origine de cet opérande,
- et en tant que moyens de coercition **(18)**, des moyens permettant de modifier le résultat des instructions, si au moins une des égalités contrôlées est fausse.

8. Procédé selon l'une des revendications 1 à 7, **caractérisé en ce qu'**il consiste :
→ dans la phase de protection **(P) :**
• à modifier le logiciel protégé **(2p):**
- en choisissant au moins une variable utilisée dans au moins un traitement algorithmique choisi, qui lors de l'exécution du logiciel protégé **(2p),** définit partiellement l'état du logiciel protégé **(2p),**
- en modifiant au moins une portion choisie du source du logiciel protégé **(2ps),** cette modification étant telle que lors de l'exécution du logiciel protégé **(2p),** au moins une variable choisie ou au moins une copie de variable choisie réside dans l'unité **(6),**
- et en produisant :
➢ la première partie objet **(2pos)** du logiciel protégé **(2p),** cette première partie objet **(2pos)** étant telle que lors de l'exécution du logiciel protégé **(2p),** au moins une portion de la première partie d'exécution **(2pes)** prend aussi en compte qu'au moins une variable ou au moins une copie de variable réside dans l'unité **(6),**
➢ et la seconde partie objet **(2pou) du** logiciel protégé **(2p)**, cette seconde partie objet **(2pou)** étant telle que, après chargement dans l'unité **(6)** et lors de l'exécution du logiciel protégé **(2p),** apparaît la seconde partie d'exécution **(2peu)** au moyen de laquelle au moins une variable choisie, ou au moins une copie de variable choisie réside aussi dans l'unité **(6),**
→ et dans la phase d'utilisation **(U) :**
• en présence de l'unité **(6)** à chaque fois qu'une portion de la première partie d'exécution **(2pes)** l'impose, à utiliser une variable ou une copie de variable résidant dans l'unité **(6),** de sorte que cette portion est exécutée correctement et que, par conséquent, le logiciel protégé **(2p)** est complètement fonctionnel,
• et en l'absence de l'unité **(6),** malgré la demande d'une portion de la première partie d'exécution **(2pes)** d'utiliser une variable ou une copie de variable résidant dans l'unité **(6),** à ne pouvoir répondre correctement à cette demande, de sorte qu'au moins cette portion n'est pas exécutée correctement et que, par conséquent, le logiciel protégé **(2p)** n'est pas complètement fonctionnel.

9. Procédé selon la revendication 6 **caractérisé en ce qu'**il consiste :
→ dans la phase de protection **(P) :**
• à définir :
- en tant qu'une commande déclenchante, une commande d'instruction,
- en tant qu'une fonction dépendante, une instruction,
- en tant qu'une consigne, au moins un argument pour une commande déclenchante, correspondant au moins en partie à l'information transmise par le système de traitement de données **(3)** à l'unité **(6),** afin de déclencher l'exécution de la fonction dépendante correspondante,
- une méthode de renommage des consignes permettant de renommer les consignes afin d'obtenir des commandes déclenchantes à consignes renommées,
- et des moyens de rétablissement **(20)** destinés à être mis en oeuvre dans l'unité **(6)** au cours de la phase d'utilisation **(U),** et permettant de retrouver la fonction dépendante à exécuter, à partir de la consigne renommée,
• à construire des moyens d'exploitation permettant à l'unité **(6)** de mettre aussi en oeuvre les moyens de rétablissement,
• et à modifier le logiciel protégé **(2p) :**
- en choisissant dans le source du logiciel protégé **(2ps),** des commandes déclenchantes,
- en modifiant au moins une portion choisie du source du logiciel protégé **(2ps)** en renommant les consignes des commandes déclenchantes choisies, afin de dissimuler l'identité des fonctions dépendantes correspondantes,
- et en produisant :
➢ la première partie objet **(2pos)** du logiciel protégé **(2p),** cette première partie objet **(2pos)** étant telle que lors de l'exécution du logiciel protégé **(2p),** les commandes déclenchantes à consignes renommées sont exécutées,
➢ et la seconde partie objet **(2pou)** du logiciel protégé **(2p)** contenant les moyens d'exploitation mettant aussi en oeuvre les moyens de rétablissement **(20),** cette seconde partie objet **(2pou)** étant telle que, après chargement dans l'unité **(6)** et lors de l'exécution du logiciel protégé **(2p),** l'identité des fonctions dépendantes dont l'exécution est déclenchée par la première partie d'exécution **(2pes)** est rétablie au moyen de la seconde partie d'exécution **(2peu),** et les fonctions dépendantes sont exécutées au moyen de la seconde partie d'exécution **(2peu),**
→ et dans la phase d'utilisation **(U) :**
• en présence de l'unité **(6)** et à chaque fois qu'une commande déclenchante à consigne renommée, contenue dans une portion de la première partie d'exécution **(2pes)** impose, à rétablir dans l'unité **(6),** l'identité de la fonction dépendante correspondante et à exécuter celle-ci, de sorte que cette portion est exécutée correctement et que, par conséquent, le logiciel protégé **(2p)** est complètement fonctionnel,
• et en l'absence de l'unité **(6),** malgré la demande d'une portion de la première partie d'exécution **(2pes),** de déclencher l'exécution d'une fonction dépendante dans l'unité **(6),** à ne pas pouvoir répondre correctement à cette demande, de sorte qu'au moins cette portion n'est pas exécutée correctement et que, par conséquent, le logiciel protégé **(2p)** n'est pas complètement fonctionnel.

10. Procédé selon la revendication 9, **caractérisé en ce qu'**il consiste :
→ dans la phase de protection **(P) :**
• à définir pour au moins une fonction dépendante, une famille de fonctions dépendantes algorithmiquement équivalentes, mais déclenchées par des commandes déclenchantes dont les consignes renommées sont différentes,
• et à modifier le logiciel protégé **(2p) :**
- en choisissant dans le source du logiciel protégé **(2ps)** au moins une commande déclenchante à consigne renommée,
- et en modifiant au moins une portion choisie du source du logiciel protégé **(2ps)** en remplaçant au moins la consigne renommée d'une commande déclenchante à consigne renommée choisie, par une autre consigne renommée, déclenchant une fonction dépendante de la même famille.

11. Procédé selon la revendication 10, **caractérisé en ce qu'**il consiste :
→ dans la phase de protection **(P),** à définir, pour au moins une fonction dépendante, une famille de fonctions dépendantes algorithmiquement équivalentes :
- en concaténant un champ de bruit à l'information définissant la partie fonctionnelle de la fonction dépendante à exécuter dans l'unité **(6),**
- ou en utilisant le champ d'identification de l'instruction **(CII)** et les champs d'identification prévue **(CIPₖ)** des opérandes.

12. Procédé selon la revendication 9, 10 ou 11, **caractérisé en ce qu'**il consiste :
→ dans la phase de protection **(P)** :
• à définir :
- en tant que méthode de renommage des consignes, une méthode de chiffrement pour chiffrer les consignes,
- et en tant que moyens de rétablissement **(20),** des moyens mettant en oeuvre une méthode de déchiffrement pour déchiffrer les consignes renommées et rétablir ainsi l'identité des fonctions dépendantes à exécuter dans l'unité **(6).**

13. Procédé selon l'une des revendications 1 à 12, **caractérisé en ce qu'**il consiste :
→ dans la phase de protection **(P)** :
• à modifier le logiciel protégé **(2p)** : ₁
- en choisissant dans le source du logiciel protégé (2ps), au moins un branchement conditionnel effectué dans au moins un traitement algorithmique choisi,
- en modifiant au moins une portion choisie du source du logiciel protégé **(2ps),** cette modification étant telle que lors de l'exécution du logiciel protégé **(2p)**, la fonctionnalité d'au moins un branchement conditionnel choisi, est exécutée, au moyen de la seconde partie d'exécution **(2peu),** dans l'unité **(6),**
- et en produisant
➢ la première partie objet **(2pos)** du logiciel protégé **(2p)**, cette première partie objet **(2pos)** étant telle que lors de l'exécution du logiciel protégé **(2p),** la fonctionnalité d'au moins un branchement conditionnel choisi est exécutée dans l'unité **(6),**
➢ et la seconde partie objet **(2pou)** du logiciel protégé **(2p),** cette seconde partie objet **(2pou)** étant telle que, après chargement dans l'unité **(6)** et lors de l'exécution du logiciel protégé **(2p),** apparaît la seconde partie d'exécution **(2peu)** au moyen de laquelle la fonctionnalité d'au moins un branchement conditionnel choisi est exécutée,
→ et dans la phase d'utilisation **(U)** :
• en présence de l'unité **(6)** et à chaque fois qu'une portion de la première partie d'exécution **(2pes)** l'impose, à exécuter la fonctionnalité d'au moins un branchement conditionnel dans l'unité **(6),** de sorte que cette portion est exécutée correctement et que, par conséquent, le logiciel protégé (**2p**) est complètement fonctionnel,
• et en l'absence de l'unité **(6)** et malgré la demande d'une portion de la première partie d'exécution **(2pes)** d'exécuter la fonctionnalité d'un branchement conditionne dans l'unité **(6),** à ne pas pouvoir répondre correctement à cette demande, de sorte qu'au moins cette portion n'est pas exécutée correctement et que par conséquent, le logiciel protégé **(2p)** n'est pas complètement fonctionnel.

14. Procédé selon la revendication 13, **caractérisé en ce qu'**il consiste, dans la phase de protection (**P**), à modifier le logiciel protégé **(2p) :**
- en choisissant, dans le source du logiciel protégé **(2ps)** au moins une - série de branchements conditionnels choisis,
- en modifiant au moins une portion choisie du source du logiciel protégé (**2ps**), cette modification étant telle que lors de l'exécution du logiciel protégé (**2p**), la fonctionnalité globale d'au moins une série choisie de branchements conditionnels est exécutée au moyen de la seconde partie d'exécution **(2peu),** dans l'unité **(6),**
- et en produisant :
➢ la première partie objet **(2pos)** du logiciel protégé **(2p),** cette première partie objet **(2pos)** étant telle que lors de l'exécution du logiciel protégé **(2p),** la fonctionnalité d'au moins une série choisie de branchements conditionnels est exécutée dans l'unité, (**6**),
➢ et la seconde partie objet **(2pou)** du logiciel protégé **(2p),** cette seconde partie objet **(2pou)** étant telle que, après chargement dans l'unité **(6)** et lors de l'exécution du logiciel protégé **(2p),** apparaît la seconde partie d'exécution **(2peu)** au moyen de laquelle la fonctionnalité globale d'au moins une série choisie de branchements conditionnels est exécutée.

15. Procédé selon l'une des revendications 1 à 14, **caractérisé en ce qu'**il consiste à décomposer la phase de protection **(P)** en une sous-phase de protection amont **(P1)**, indépendante du logiciel à protéger et une sous-phase de protection aval **(P2),** dépendante du logiciel à protéger.

16. Procédé selon la revendication 15, **caractérisé en ce qu'**il consiste, lors de la sous-phase de protection amont (**P1**), à faire intervenir un stade de définitions **(S11)** dans lequel sont effectuées toutes les définitions.

17. Procédé selon la revendication 16, **caractérisé en ce qu'**il consiste, après le stade de définitions **(S11)**, à faire intervenir un stade de construction **(S12)** dans lequel sont construits les moyens d'exploitation.

18. Procédé selon la revendication 17, **caractérisé en ce qu'**il consiste, après le stade de construction **(S12), à** faire intervenir un stade de pré-personnalisation **(S13)**, consistant à charger dans une unité vierge **(60),** au moins une partie des moyens d'exploitation en vue d'obtenir une unité pré-personnalisée **(66).**

19. Procédé selon la revendication 16 ou 17, **caractérisé en ce qu'**il consiste, lors de la sous-phase de protection amont (**P1**), à faire intervenir un stade de confection d'outils **(S14)** dans lequel sont confectionnés des outils permettant d'aider à générer des logiciels protégés ou d'automatiser la protection de logiciels.

20. Procédé selon les revendications 15 et 18, **caractérisé en ce qu'**il consiste à décomposer la sous-phase de protection aval **(P2),** en :
• un stade de création **(S21)** dans lequel est créé le logiciel protégé **(2p)**, à partir du logiciel vulnérable **(2v),**
• éventuellement, un stade de modification **(S22)** dans lequel est modifié le logiciel protégé **(2p),**
• et un stade de personnalisation **(S23)** dans lequel :
- la seconde partie objet **(2pou)** du logiciel protégé **(2p)** contenant les moyens d'exploitation est chargée dans au moins une unité vierge **(60)** en vue d'obtenir au moins une unité **(6),**
- ou une partie de la seconde partie objet (**2pou**) du logiciel protégé **(2p)** contenant éventuellement les moyens d'exploitation est chargée dans au moins une unité pré-personnalisée **(66)** en vue d'obtenir au moins une unité **(6).**

21. Procédé selon les revendications 19 et 20, **caractérisé en ce qu'**il consiste, lors du stade de création **(S21)** et éventuellement du stade de modification **(S22),** à utiliser au moins l'un des outils d'aide à la génération de logiciels protégés ou d'automatisation de la protection de logiciels.

## Patentansprüche

1. Verfahren, um mittels wenigstens einer Leereinheit (60), die wenigstens Speichermittel (15) und Verarbeitungsmittel (16) umfasst, eine gefährdete Software (2v) genen ihre unbefugte Verwindung zu schützen, wobei die gefährdete Software (2v) auf einem Datenverarbeitungssystem (3) arbeitet, dadurch gekenntzeichnet, dass es darin besteht:
→ in einer Schutzphase (P):
• zu definieren:
- wenigstens eine Softwareausführungscharakteristik, die geeignet ist, wenigstens teilweise in einer Einheit (6) überwacht zu werden,
- wenigstens ein einzubauendes Kriterium für wenigstens eine Softwareausführungscharakteristik,
- Detektionsmittel (17), die in einer Einheit (6) anzuwenden sind und die ermöglichen, zu erfassen, dass wenigstens eine Softwareausführungscharakteristik wenigstens ein zugeordnetes Kriterium nicht einhalt, und
- Zwangsmittel (18), die in einer Einheit (6) anzuwenden sind und die ermöglichten, das Datenverarbeitungssystem (3) zu informieren und/oder die Ausführung einer Software zu modifizieren, wenn wenigstens ein Kriterium nicht eingehakten wird,
• Auswertungsmittel zu erstellen, die ermöglichten, die Leereinheit (60) in eine Einheit (6) umzuwandeln, welche in der Lage ist, die Detektionsmittel (17) und die Zwangsmittel (18) anzuwenden,
• eine geschützte Software (2p) zu erzeugen:
- durch Auswählen wenigstens einer zu überwachenden Softwareausführungscharakteristik aus den überwachbaren Ausführungscharakteristiken,
- durch Auswählen wenigstens eines einzuhaltenden Kriteriums für wenigstens eine ausgewählte Softwareausführungscharakteristik,
- durch Auswählen wenigstens einer algorithmischen Verarbeitung, die bei der Ausführung der gefährdeten Software (2v) wenigstens einen Operanden verwendet und ermöglicht, wenigstens ein Ergebnis zu erhalten, und bei der wenigstens eine ausgewählte Softwareausführungscharakteristik zu überwachen ist,
- durch Auswählen wenigstens eines Teils des Quellcodes der gefährdeten Software (2vs), der wenigstens eine ausgewählte algorithmische Verarbeitung enthält,
- durch Erzeugen des Quellcodes der geschützten Software (2ps) anhand des Quellcodes der gefährdeten Software (2vs), unter Modifizieren wenigstens eines ausgewählten Teils des Quellcodes der gefährdeten Software (2vs), um wenigstens einen modifizierten Teil des Quellcodes der geschützten Software (2ps) zu erhalten, wobei diese Modifikation derart ist, dass:
> bei der Ausführung der geschützten Software (2p) ein erster Ausführungsteil (2pes) in dem Datenverarbeitungssystem (3) ausgeführt wird und ein zweiter Ausführungsteil (2peu) in einer Einheit (6) ausgeführt wird, die mittels der Leereinheit (60) nach Laden von Informationen erhalten wird,
> der zweite Ausführungsteil (2peu) wenigstens die Funktionalität wenigstens einer ausgewählten algorithmischen Verarbeitung ausführt, und
> bei der Ausführung der geschützten Software (2p) wenigstens eine ausgewählte Ausführungscharakteristik mittels des zweiten Ausführungsteils (2peu) überwacht wird, und die Nichteinhaltung eines Kriteriums zu einer Modifizierung der Ausführung der geschützten Software (2p) führt,
- und durch Erzeugen:
> eines ersten Objektteils (2pos) der geschützten Software (2p) anhand des Quellcodes der geschützten Software (2ps), wobei dieser erste Objektteil (2pos) derart ist, dass bei der Ausführung der geschützten Software (2p) ein erster Ausführungsteil (2pes) auftritt, der in dem Datenverarbeitungssystem (3) ausgeführt wird und von dem wenigstens ein Teil berücksichtigt, dass wenigstens eine ausgewählte Softwareausführungscharakteristik überwacht wird, und
> eines zweiten Objektteils (2pou) der geschützten Software (2p), der die Auswertungsmittel, welch die Detektionsmittel (17) und die Zwangsmittel (18) anwendet, enthält, wobei dieser zweite Objektteil (2pou) derart ist, dass nach dem Laden in die Leereinheit (60) und bei der Ausführung der geschützten Software (2p) der zweite Ausführungsteil (2peu) auftritt, mit Hilfe dessen wenigstens eine Softwareausführungscharakteristik überwacht wird und mit Hilfe dessen die Nichteinhaltung eines Kriteriums zu einer Modifizierung der Ausführung der geschützten Software (2p) führt,
• und den zweiten Objektteil (2pou) in die Leereinheit (60) zu laden, um die Einheit (6) zu erhalten,
→ und in einer Verwendungsphase (U), im Laufe derer die geschützte Software (2p) ausgeführt wird:
• in Gegenwart der Einheit (6):
- und solange alle Kriterien, die allen überwachten Ausführungskriterien aller modifizieren Teile der geschützten Software (2p) entsprechen, eingehakten werden, den Nennbetrieb dieser Teile der geschützten Software (2p) zu ermöglichen und demzufolge den Nennbetrieb der geschützten Software (2p) zu ermöglichen, und,
- wenn wenigstens eines der Kriterien, das einer überwachten Ausführungscharakteristik eines Teils der geschützten Software (2p) entspricht, nicht eingehalten wird, das Datenverarbeitungssystem (3) darüber zu informieren und/oder den Betrieb des Teils der geschützten Software (2p) zu modifizieren, so dass der Betrieb der geschützten Software (2p) modifiziert ist,
• und in Anwesenheit der Einheit (6), trotz der Anforderung eines Teils des ersten Ausführungsteils (2pes), die Ausführung der Funktionalität einer ausgewählten algorithmischen Verarbeitung in der Einheit (6) auszulösen, dieser Anforderung nicht richtig entsprechen zu können, so dass wenigstens dieser Teil nicht korrekt ausgeführt wird und dass demzufolge die geschützte Software (2p) nicht vollkommen funktionell ist.

2. Verfahren nach Anspruch 1, zum Begrenzen der Verwerdung einer geschützten Software (2p), dadurch gekenntzeichnet, dass es darin besteht:
→ in der Schutzphase (P):
• zu definierten:
- als überwachbare Softwareausführungscharakteristik, eine Variable zur Messung der Verwindung einer Funktionalität einer Software,
- als einzuhaltendes Kriterium, wenigstens einen Schwellwert, der jeder Messvariablen zugeordnet ist, und
- Aktualisierungsmittel, die ermöglichten, wenigstens eine Messvariable zu aktualisieren,
• die Auswertungsmittel zu erstellen, die der Einheit (6) ermöglichten, auch die Aktualisierungsmittel anzuwenden, und
• die geschützte Software (2p) zu modifizieren:
- durch Auswählen, als zu überwachende Softwareausführungscharakteristik, wenigstens einer Variablen zur Messung der Verwerdung einer Funktionalität einer Software,
- durch Auswählen:
> wenigstens einer Funktionalität der geschützten Software (2p), deren Verwerdung mit Hilfe einer Messvariablen überwachbar ist,
> wenigstens einer Messvariablen, die dazu dient, die Verwendung der Funktionalität zu quantifizieren,
> wenigstens eines einer ausgewählten Messvariablen zugeordneten Schwellwertes, der einer Grenze zur Verwendung der Funkticanalität entspricht, und
> wenigstens eines Verfahrens zur Aktualisierung einer ausgewählten Messvariablen in Abhangigkeit der Verwindung der Funktionalität,
- und durch Modifizieren wenigstens eines ausgewählten Teils des Quellcodes der geschützten Software (2ps), wobei diese Modifikation derart ist, dass bei der Ausführung der geschützten Software (2p) die Messvariable mittels des zweiten Ausführungsteils (2peu) in Ahängigkeit der Afenrvendung der Funktionalität aktualisiert wird und wenigstens eine Schwellwertüberschreitung berücksichtigt wird,
→ und in der Verwendungsphase (U), in Gegenwert der Einheit (6) sowie in dem Fall, in dem wenigstens eine Überschreitung des Schwellwertes, der wenigstens einer Verwendungsgrenze entspricht, erfasst wird, das Datenverarbeitungssystem (3) darüber zu informieren und/oder den Betrieb des Teils der geschützten Software (2p) zu modifizierten, so dass der Betrieb der geschützten Software (2p) modifiziert ist.

3. Verfahren nach Anspruch 2, **dadurch gekennzeichnet, dass** es darin besteht:
→ in der Schutzphase (P):
• zu definieren:
- für wenigstens eine Messvariable mehrere zugeordnete Schwellwerte, und
- unterschiedliche Zwangsmittel, die jedem dieser Schwellwerte entsprechen,
• und die geschützte Software (2p) zu modifizieren:
- durch Auswählen, in dem Quellcode der geschützten Software (2ps), wenigstens einer ausgewählten Messvariablen, der mehrere Schwellwerte, die unterschiedlichen Verwendungsgrenzen der Funktionalität entsprechen, zugeordnet werden sollen,
- durch Auswählen von wenigstens zwei Schwellwerten, die der ausgewählten Messvariablen zugeordnet sind, und
- durch Modifizieren wenigstens eines ausgewählten Teils des Quellcodes der geschützten Software (2ps), wobei diese Modifikation derart ist, dass bei der Ausführung der geschützten Software (2p) die Überschreitungen der verschiedenen Schwellwerte mittels des zweiten Ausführungsteils (2peu) unterschiedlich berücksichtigt werden,
→ und in der Verwendungsphase (U):
• in Gegenwart der Einheit (6):
- in dem Fall, in dem die Überschreitung eines ersten Schwellwerts erfasst wird, der geschützten Software (2p) ausdrücklich zu befehlen, die entsprechende Funktionalität nicht mehr zu versenden, und
- in dem Fall, in dem die überschreitung eines zweiten Schwellwertes erfasst wird, die entsprechende Funktionalität und/oder wenigstens einen Teil der geschützten Software (2p) unwirksam zu machen.

4. Verfahren nach Anspruch 2 oder 3, **dadurch gekennzeichnet, dass** es darin besteht:
→ in der Schutzphase (P):
• Wiederauflademittel zu definieren, die ermöglichen, wenigstens eine zusätzliche Verwerdung für wenigstens eine Softwarefunktionalität, die durch eine Messvariable überwacht wird, gutzuschreiben,
• die Auswertungsmittel zu erstellen, die auch der Einheit (6) ermöglichen, die Wiederauflademittel anzuwenden, und
• die geschützte Software (2p) zu modifizierten:
- durch Auswählen, in dem Quellcode der geschützten Software (2ps), wenigstens einer ausgewählten Messvariablen, die ermöglicht, die Verwerdung einer Funktionalität, der wenigstens eine zusätzliche Verwendung gutgeschrieben werden können muss, zu begrenzen, und
- durch Modifizieren wenigstens eines ausgewählten Teils, wobei diese Modifikation derart ist, dass in einer sogenannten Wiederaufladephase wenigstens eine zusätzliche Verwendung wenigstens einer Funktionalität, die einer ausgewählten Messvariablen entspricht, gutgeschrieben werden kann,
→ und in der Wiederaufladephase:
• wenigstens eine ausgewählte Messvariable und/oder wenigstens einen zugeordneten Schwellwert erneut zu aktualisieren, um wenigstens eine zusätzliche Verwendung der Funktionalität zu ermöglichen.

5. Verfahren nach Anspruch 1, **dadurch gekennzeichnet, dass** es darin besteht:
→ in der Schutzphase (P):
• zu definieren:
- als überwachbare Softwareausführungscharakteristik, ein Softwareverwendungsprofil und,
- als einzuhaltende Kriterium, wenigstens ein Softwareausführungsmerkmal,
• und die geschützte Software (2p) zu modifizieren:
- durch Auszählen, als zu überwachende Softwareausführungscharakteristik, wenigstens eines Softwareverwendungsprofils,
- durch Auswählen wenigstens eines Ausführungsmerkmals, das wenigstens ein ausgewähltes Verwendungsprofil einhalten muss, und
- durch Modifizieren wenigstens eines ausgewählten Teils des Quellcodes der geschützten Software (2ps), wobei diese Modifikation derart ist, dass bei der Ausführung der geschützten Software (2p) der zweite Ausführungsteil (2peu) alle ausgewählten Ausführungsmerkmale einhält,
→ und in der Verwendungsphase (U), in Gegenwart der Einheit (6) sowie in dem Fall, in dem erfasst wird, dass wenigstens ein Ausführungsmerkmal nicht eingehalten wird, das Datenverarbeitungssystem (3) darüber zu informieren und/oder den Betrieb des Teils der geschützten Software (2p) zu modifizieren, so dass der Betrieb der geschützten Software (2p) modifiziert ist.

6. Verfahren nach Anspruch 5, **dadurch gekennzeichnet, dass** es darin besteht:
→ in der Schutzphase (P):
• zu definieren:
- einen Befehlssatz, dessen Befehle geeignet sind, in der Einheit (6) ausgeführt zu werden,
- einen Satz von Befehlsanweisungen für diesen Befehlssatz, wobei diese Befehlsanweisungen geeignet sind, in dem Datenverarbeitungssystem (3) ausgeführt zu werden und in der Einheit (6) die Ausführung der Befehle auszulösen,
- als Verwendungsprofil, die Verkettung der Befehle,
- als Ausführungsmerkmal eine gewünsche Verkettung für die Ausführung der Befehle,
- als Detektionsmittel (17), Mittel, die ermöglichten, zu erfassen, dass die Verkettung der Befehle nicht der gewünschten entspricht, und
- als Zwangsmittel (18), Mittel, die ermöglichen, das Datenverarbeitungssystem (3) zu informieren und/oder den Betrieb des Teils der geschützten Software (2p) zu modifizieren, wenn die Verkettung der Befehle nicht der gewünschten entspricht,
• die Auswertungsmittel zu erstellen, die auch der Einheit (6) ermöglichen, die Befehle des Befehlssatzes auszuführen, wobei die Ausführung dieser Befehle durch die Ausführung der Befehlsanweisungen in dem Datenverarbeitungssystem (3) ausgelöst wird,
• und die geschützte Software (2p) zu modifizieren:
- durch Modifizieren wenigstens eines ausgewählten Teils des Quellcodes der geschützten Software (2ps), wobei diese Modifikation derart ist, dass:
> wenigstens eine ausgewählte algorithmische Verarbeitung derart zerlegt wird, dass bei der Ausführung der geschützten Software (2p) diese algorithmische Verarbeitung mittels des zweiten Ausführungsteils (2peu), unter Verwendung von Befehlen ausgeführt wird,
> für wenigstens eine ausgewählte algorithmische Verarbeitung Befehlsanweisungen in den Quellecode der geschützten Software (2ps) integriert werden, derart, dass bei der Ausführung der geschützten Software (2p) jede Befehlsanweisung durch den ersten Ausführungsteil (2pes) ausgeführt wird und in der Einheit (6) die Ausführung eines Befehls mittels des zweiten Ausführungsteils (2peu) auslöst,
> eine Reihung der Befehlsanweisungen aus allen Reihungen, die die Ausführung der geschützten Software (2p) ermöglichen, ausgewählt wird, und
> die Verkettung, die wenigstens einige der Befehle bei ihrer Ausführung in der Einheit (6) einhalten müssen, spezifiziert wird,
→ und in der Verwendungsphase (U), in Gegenwert der Einheit (6), in dem Fall, in dem erfasst wird, dass die Verkettung der in der Einheit (6) ausgeführten Befehle nicht der gewünschen entspricht, das Datenverarbeitungssystem (3) darüber zu informieren und/oder den Betrieb des Teils der geschützten Software (2p) zu modifizieren, so dass der Betrieb der geschützten Software (2p) modifiziert ist.

7. Verfahren nach Anspruch 6, dadurch gekenntzeichnet, dass es darin besteht:
→ in der Schutzphase (P):
• zu definierten:
- als Befehlssatz, einen Satz von Befehlen, von denen wenigstens einige Befehle auf Registern arbeiten und wenigstens einen Operanden verwenden, um ein Ergebnis zurückzugeben,
- für wenigstens einen Teil der auf Registern arbeitenden Befehle:
> einen Teil (PF), der die Funktionalität des Befehls definiert, und
> einen Teil, der die gewünschte Verkettung für die Ausführung der Befehle definiert und Bit-Felder umfasst, die entsprechen:
◊ einem Feld zur Identifikation des Befehls (CII), und
◊ für jeden Operanden des Befehls:
* einem Flag-Feld (CDₖ) und
* einem Feld vorgesehener Identifikation (CIPₖ) des Ciparanden,
- für jedes Register, das zu den Auswertungsmitteln gehört und durch den Befehlssatz verwendet wird, ein Feld generierten Identifikation (CIGᵥ), in dem die Identifikation des letzten Befehls, der sein Ergebnis in dieses Register zurückgegeben hat, automatisch gespeichert wird,
- als Detektionsmittel (17), Mittel, die ermöglichten, bei der Ausführung eines Befehls, für jeden Operanden, wenn das Flag-Feld (CDₖ) dies auferlegt, die Gleichheit zwischen dem Feld generierter Identifikation (CIGv), das dem durch diesen Operanden verwendeten Register entspricht, und dem Feld vorgesehener Identifikation (CIPₖ) des Ursprungs dieses Operanden zu kontrollierten, und
- als Zwangsmittel (18), Mittel, die ermöglichen, das Ergebnis der Befehle zu modifizieren, wenn wenigstens eine der kontrollierten Gleichheiten falsch ist.

8. Verfahren nach einem der Ansprüche 1 bis 7, dadurch gekenntzeichnet, dass es darin besteht:
→ in der Schutzphase (P):
• die geschützte Software (2p) zu modifizierten:
- durch Auswählen wenigstens einer Variablen, die bei wenigstens einer ausgewählten algorithmischen Verarbeitung verwender wird, die bei der Ausführung der geschützten Software (2p) den Zustand der geschützten Software (2p) teilweise definiert,
- durch Modifizieren wenigstens eines ausgewählten Teils des Quellcodes der geschützten Software (2ps), wobei diese Modifikation derart ist, dass bei der Ausführung der geschützten Software (2p) wenigstens eine ausgewählte Variable oder wenigstens eine Kopie einer ausgewählten Variablen in der Einheit (6) resident ist,
- und durch Erzeugten:
> des ersten Objektteils (2pos) der geschützten Software (2p), wobei dieser erste Objektteil (2pos) derart ist, dass bei der Ausführung der geschützten Software (2p) wenigstens ein Teil des ersten Ausführungsteils (2pes) auch berücksichtigt, dass wenigstens eine Variable oder wenigstens eine Variablenkopie in der Einheit (6) resident ist, und
> des zweiten Objektteils (2pou) der geschützten Software (2p), wobei dieser zweite Objektteil (2pou) derart ist, dass nach dem Laden in die Einheit (6) und bei der Ausführung der geschützten Software (2p) der zweite Ausführungsteil (2peu) auftritt, mit Hilfe dessen wenigstens eine ausgewählte Variable oder wenigstens eine Kopie einer ausgewählten Variablen auch in der Einheit (6) resident ist,
→ und in der Verwendungsphase (U):
• in Gegenwart der Einheit (6), jedes Mal, wenn ein Teil des ersten Ausführungsteils (2pes) dies auferlegt, eine Variable oder eine Variablenkopie, die in der Einheit (6) resident ist, zu verwenden, so dass dieser Teil korrekt ausgeführt wird und dass demzufolge die geschützte Software (2p) vollkommen funktionell ist, und
• bei Anwesenheit der Einheit (6), trotz der Anforderung eines Teils des ersten Ausführungsteil (2pes), eine Variable oder eine Variablenkopie, die in der Einheit (6) resident ist, zu verwunden, dieser Anforderung nicht richtig entsprechen zu können, so dass wenigstens dieser Teil nicht korrekt ausgeführt wird und dass demzufolge die geschützte Software (2p) nicht vollkommen funktionell ist.

9. Verfahren nach Anspruch 6, **dadurch gekennzeichnet, dass** es darin besteht:
→ in der Schutzphase (P):
• zu definieren:
- als eine auslösende Anweisung, eine Befehlsanweisung,
- als eine abhängige Funktion, einen Befehl,
- als eine Zuweisung, wenigstens ein Argument für eine auslösende Anweisung, das wenigstens teilsweise der Information entspricht, die durch das Datenverarbeitungssystem (3) an die Einheit (6) übertragen wird, um die Ausführung der entsprechenden abhängigen Funktion auszulösen,
- ein Verfahren zur Umbenennung der Zuweisungen, das ermöglicht, die Zuweisungen umzubenennen, um auslösend Anweisungen mit umbenannten Zuweisungen zu erhalten, und
- Wiederherstellungsmittel (20), die dazu bestimmt sind, in der Einheit (6) im Laufe der Verwendungsphase (U) eingesetzt zu werden, und die ermöglichten, die auszuführende abhängige Funktion anhand der umbenannten Zuweisung wiederzufinden,
• Auswertungsmittel zu ersehen, die der Einheit (6) ermöglichten, auch die Wiederherstellungsmittel anzuwenden, und
• die geschützte Software (2p) zu modifizieren:
- durch Auswählen, in dem Quellcode der geschützten Software (2ps), von auslösenden Anweisungen,
- durch Modifizieren wenigstens eines ausgewählten Teils des Quellcodes der geschützten Software (2ps), indem die Zuweisungen der ausgewählten auslösenden Anweisungen umbenannt werden, um die Identität der entsprechenden abhängigen Funktionen zu verbergen,
- und durch Erzeugen:
> des ersten Objektteils (2pos) der geschützten Software (2p), wobei dieser erste Objektteil (2pos) derart ist, dass bei der Ausführung der geschützten Software (2p) die auslösenden Anweisungen mit umbenannten Zuweisungen ausgeführt werden, und
> des zweiten Objektteils (2pou) der geschützten Software (2p), der die Auswertungsmittel enthält, die auch die Wiederherstellungsmittel (20) anwenden, wobei dieser zweite Objektteil (2pou) derart ist, dass nach dem Laden in die Einheit (6) und bei der Ausführung der geschützten Software (2p) die Identität der abhängigen Funktionen, deren Ausführung durch den ersten Ausführungsteil (2pes) ausgelöst wird, mittels des zweiten Ausführungsteils (2peu) wiederhergestellt wird und die abhängigen Funktionen mittels des zweiten Ausführungsteils (2peu) ausgeführt werden,
→ und in der Verwendungsphase (U):
• in Gegenwart der Einheit (6) sowie jedes Mal, wenn eine auslösende Anweisung mit umbenannter Zuweisung, die in einem Teil des ersten Ausführungsteils (2pes) enthalten ist, dies auferlegt, in der Einheit (6) die Identität der entsprechenden abhängigen Funktion wiederherzustellen und diese auszuführen, so dass dieser Teil richtig ausgeführt wird und dass demzufolge die geschützte Software (2p) vollkommen funktionell ist, und
• bei Abwesenheit der Einheit (6), trotz der Anforderung eines Teils des ersten Ausführungsteils (2pes), die Ausführung einer abhängigen Funktion in der Einheit (6) auszulösen, dieser Anforderung nicht richtig entsprechen zu können, so dass wenigstens dieser Teil nicht korrekt ausgeführt wird und dass demzufolge die geschützte Software (2p) nicht vollkommen funktionell ist.

10. Verfahren nach Anspruch 9, **dadurch gekennzeichnet, dass** es darin besteht:
→ in der Schutzphase (P):
• für wenigstens eine abhängige Funktion eine Familie von abhängigen Funktionen zu definieren, die algorithmisch äquivalent sind, aber durch auslösende Anweisungen, deren umbenannte Zuweisungen unterschiedlich sind, ausgelöst werden, und
• die geschützte Software (2p) zu modifizieren:
- durch Auswählen, in dem Quellcode der geschützten Software (2ps), wenigstens einer auslösenden Anweisung mit umbenannter Zuweisung, und
- durch Modifizieren wenigstens eines ausgewählten Teils des Quellcodes der geschützten Software (2ps) dadurch, dass wenigstens die umbenannte Zuweisung einer ausgewählten auslösenden Anweisung mit umbenannter Zuweisung durch eine andere umbenannte Zuweisung ersetzt wird, die eine abhängige Funktion der gleichen Familie auslöst.

11. Verfahren nach Anspruch 10, **dadurch gekennzeichnet, dass** es darin besteht:
→ in der Schutzphase (P) für wenigstens eine abhängige Funktion eine Familie von algorithmisch äquivalenten abhängigen Funktionen zu definieren:
- durch Verketten eines Rauschfeldes mit der Information, welche den Funktionsteil der in der Einheit (6) auszuführenden abhängigen Funktion definiert, oder
- durch Verwerdung des Feldes zur Identifikation des Befehls (CII) und der Felder vorgesehener Identifikation (CIPₖ) der Operanden.

12. Verfahren nach Anspruch 9,10 oder 11, dadurch gekenntzeichnet, dass es darin besteht:
→ in der Schutzphase (P):
• zu definieren:
- als Verfahren zur Umbenennung der Zuweisungen, ein Chiffrierverfahren zum Chiffrieren der Zuweisungen, und
- als Wiederherstellungsmittel (20), Mittel, die ein Dechiffrierverfahren einsetzen, um die umbenannten Zuweisungen zu dechiffrieren und um somit die Identität der in der Einheit (6) auszuführende abhängigen Funktionen wiederherzustellen.

13. Verfahren nach einem der Ansprüche 1 bis 12, dadurch gekennzeichet, dass es darin besteht:
→ in der Schutzphase (P):
• die geschützte Software (2p) zu modifizieren:
- durch Auswählen, in dem Quellcode der geschützten Software (2ps), wenigstens einer bedingten Verzweigung, die bei wenigstens einer ausgewählten algorithmischen Verarbeitung durchgeführt wird,
- durch Modifizieren wenigstens eines ausgewählten Teils des Quellcodes der geschützten Software (2ps), wobei diese Modifikation derart ist, dass bei der Ausführung der geschützten Software (2p) die Funktionalität wenigstens einer ausgewählte bedingten Verzweigung mittels des zweiten Ausführungsteils (2peu) in der Einheit (6) ausgeführt wird, und
- durch Erzeugen:
> des ersten Objektteils (2pos) der geschützten Software (2p), wobei dieser erste Objektteil (2pols) derart ist, dass bei der Ausführung der geschützten Software (2p) die Funktionalität wenigstens einer ausgewählten bedingten Verzweigung in der Einheit (6) ausgeführt wird, und
> des zweiten Objektteils (2pou) der geschützten Software (2p), wobei dieser zweite Objektteil (2pou) derart ist, dass nach dem Laden in die Einheit (6) und bei der Ausführung der geschützten Software (2p) der zweite Ausführungsteil (2peu) auftritt, mit Hilfe dessen die Funktionalität wenigstens einer ausgewählten bedingten Verzweigung ausgeführt wird,
→ und in der Verwendungsphase (U):
• in Gegenwert der Einheit (6) sowie jedes Mal, wenn ein Teil des ersten Ausführungsteils (2pes) dies auferlegt, die Funktionalität wenigstens einer bedingten Verzweigung in der Einheit (6) auszuführen, so dass dieser Teil richtig ausgeführt wird und dass demzufolge die geschützte Software (2p) vollkommen funktionell ist, und
• bei Anwesenheit der Einheit (6) und trotz der Anforderung eines Teils des ersten Ausführungsteils (2pes), die Funktionalität einer bedingten Verzweigung in der Einheit (6) auszuführen, dieser Anforderung nicht richtig entsprechen zu könnten, so dass wenigstens dieser Teil nicht korrekt ausgeführt wird und dass demzufolge die geschützte Software (2p) nicht vollkommen funktionell ist.

14. Verfahren nach Anspruch 13, **dadurch gekennzeichnet, dass** es darin besteht, in der Schutzphase (P) die geschützte Software (2p) zu modifizierten:
- durch Auswählen, in dem Quellcode der geschützten Software (2ps), wenigstens einer Reihe von ausgewählten bedingten Verzweigungen,
- durch Modifizieren wenigstens eines ausgewählten Teils des Quellcodes der geschützten Software (2ps), wobei diese Modifikation derart ist, dass bei der Ausführung der geschützten Software (2p) die Gesamtfunktionalität wenigstens einer ausgewählten Reihe von bedingten Verzweigungen mit Hilfe des zweiten Ausführungsteils (2peu) in der Einheit (6) ausgeführt wird, und
- durch Erzeugen:
> des ersten Objektteils (2pos) der geschützten Software (2p), wobei dieser erste Objektteil (2pols) derart ist, dass bei der Ausführung der geschützten Software (2p) die Funktionalität wenigstens einer ausgewählten Reihe von bedingten Verzweigungen in der Einheit (6) ausgeführt wird, und
> des zweiten Objektteils (2pou) der geschützten Software (2p), wobei dieser zweite Objektteil (2pou) derart ist, dass nach dem Laden in die Einheit (6) und bei der Ausführung der geschützten Software (2p) der zweite Ausführungsteil (2peu) auftritt, mit Hilfe dessen die Gesamtfunktionalität wenigstens einer ausgewählten Reihe von bedingten Verzweigungen ausgeführt wird.

15. Verfahren nach einem der Ansprüche 1 bis 14, **dadurch gekennzeichnet, dass** es darin besteht, die Schutzphase (P) in eine vorgeschaltete Schutzunterphase (P1), welche von der zu schützenden Software unabhängig ist, und eine nachgeschaltete Schutzunterphase (P2), welche von der zu schützenden Software abhängig ist, zu zerlegten.

16. Verfahren nach Anspruch 15, **dadurch gekennzeichnet, dass** es darin besteht, währen der vorgeschalteten Schutzunterphase (P1) ein Definitionen-Stadium (S11) einzusetzen, in dem alle Definitionen vollzogen werden.

17. Verfahren nach Anspruch 16, **dadurch gekennzeichnet, dass** es darin besteht, nach dem Definitionen-Stadium (S11) ein Erstellungsstadium (S12) einzusetzen, in dem die Auswertungsmittel erstellt werden.

18. Verfahren nach Anspruch 17, **dadurch gekennzeichnet, dass** es darin besteht, nach dem Erstellungsstadium (S12) ein Vorpersonalisierungsstadium (S13) einzusetzen, das darin besteht, in eine Leereinheit (60) wenigstens einen Teil der Auswertungsmittel zu laden, um eine Vorpersonalisierungseinheit (66) zu erhalten.

19. Verfahren nach Anspruch 16 oder 17, **dadurch gekennzeichnet, dass** es darin besteht, während der vorgeschalteten Schutzunterphase (P1) ein Stadium zur Konfektionierung von Werkzeuge (S14) einzusetzen, in dem Werkzeuge konfektioniert werden, die ermöglichen, bei der Generierung von geschützten Software zu hellen oder den Schutz von Softwares zu automatisieren.

20. Verfahren nach den Ansprüche 15 und 18, dadurch gekenntzeichnet, dass es darin besteht, die nachgeschaltete Schutzunterphase (P2) zu zerlegen in:
• ein Erstellungsstadium (S21), in dem die geschützte Software (2p) anhand der gefährdeten Software (2v) erstellt wird,
• eventuell ein Modifizierungsstadium (S22), in dem die geschützte Software (2p) modifiziert wird, und
• ein Personalisierungsstadium (S23), in dem:
- der zweite Objektteil (2pou) der geschützten Software (2p), der die Auswertungsmittel enthält, in wenigstens eine Leereinheit (60) geladen wird, um wenigstens eine Einheit (6) zu erhalten, oder
- ein Teil des zweiten Objektteils (2pou) der geschützten Software (2p), der eventuell die Auswertungsmittel enthält, in wenigstens eine vorpersonalisierte Einheit (66) geladen wird, um wenigstens eine Einheit (6) zu erhalten.

21. Verfahren nach den Ansprüchen 19 und 20, **dadurch gekennzeichnet, dass** es darin besteht, während des Erstellungsstadiums (S21) und eventuell des Modifizierungsstadiums (S22) wenigstens eines der Werkzeuge zur Hilfe bei der Generierung von geschützten Softwares oder zur Automatisierung des Schutzes von Software zu versenden.

## Claims

1. Process to protect, using at least one blank unit **(60)** including at least memorization means **(15)** and processing means **(16),** a vulnerable software **(2v)** against its unauthorized usage, said vulnerable software **(2v)** working on a data processing system **(3),** said protection process comprising:
→ during a protection phase **(P):**
• defining:
- at least one Software execution characteristic, liable to be monitored at least in part in a unit **(6),**
- at least one criterion to abide by for at least one software execution characteristic,
- detection means **(17)** to implement in a unit **(6)** and enabling to detect that at least one Software execution characteristic does not abide by at least one associated criterion,
- and coercion means **(18)** to implement in a unit **(6)** and enabling to inform the data processing system **(3)** and/or modify the execution of a software when at least one criterion is not abided by,
• constricting exploitation means enabling to transform the blank unit **(60)** into a unit **(6)** able to implement the detection means **(17)** and the coercion means **(18),**
• creating a protected Software **(2p):**
- by choosing at least one software execution characteristic to monitor, among the Software execution characteristics liable to be monitored,
- by choosing at least one criterion to abide by for at least one chosen Software execution characteristic,
- by choosing, at least one algorithmic processing which, during the execution of the vulnerable Software **(2v),** uses at least one operand and enables to obtain at least one result, and for which at least one chosen Software execution characteristic, is to be monitored,
- by choosing at least one portion of the source of the vulnerable Software **(2vs)** containing, at least one chosen algorithmic processing,
- by producing the source of the protected software **(2ps)** from the source of the vulnerable Software **(2vs),** by modifying at least one chosen portion of the source of the vulnerable software **(2vs)** to obtain at least one modified portion of the source of the protected software **(2ps),** this modification being such that:
➢ during the execution of the protected software **(2p)** a first execution part **(2pes)** is executed in the data processing system **(3)** and a second execution part **(2peu)** is executed in a unit **(6),** obtained from the blank unit **(60)** after upload of information,
➢ the second execution part **(2peu)** executes at least the functionality of at least one chosen algorithmic processing,
➢ and during the execution of the protected Software **(2p),** at least one chosen execution characteristic is monitored by means of the second execution part **(2peu)** and the fact that a criterion is not abided by leads to a modification of the execution of the protected software **(2p),**
- and by producing:
➢ a first object part **(2pos)** of the protected software **(2p),** from the source of the protected software **(2ps),** said first object part **(2pos)** being such that during the execution of the protected Software **(2p),** appears a first execution part **(2pes)** which is executed in the data processing system **(3)** and whose at least a portion takes into account that at least one chosen software execution characteristic is monitored,
➢ and a second object part **(2pou)** of the protected software **(2p),** containing the exploitation means implementing the detection means **(17)** and the coercion means **(18),** said second object part **(2pou)** being such that, after upload to the blank unit **(60)** and during the execution of the protected software **(2p),** appears the second execution part **(2peu)** by means of which at least one chosen software execution characteristic is monitored and by means of which the fact that a criterion is not abided by leads to a modification of the execution of the protected software **(2p),**
• and uploading the second object part **(2pou)** to the blank unit **(60),** with the intention of obtaining the unit **(6),**
→ and during a usage phase **(U)** during which the protected software **(2p)** is executed:
• in the presence of the unit **(6):**
- and as long as all the criteria corresponding to all the monitored execution characteristics of all the modified portions of the protected Software **(2p)** are abided by, enabling said portions of the protected software **(2p)** to work nominally and consequently enabling the protected software **(2p)** to work nominally,
- and if at least one of the criteria corresponding to a monitored execution characteristic of a portion of the protected software **(2p)** is not abided by, informing the data processing system **(3)** of it and/or modifying the functioning of the portion of the protected software **(2p),** so that the functioning of the protected software **(2p)** is modified,
• and in the absence of the unit **(6),** in spite of the request by a portion of the first execution part **(2pes)** to trigger the execution in the unit **(6),** of the functionality of a chosen algorithmic processing, in not being able to fulfill said request correctly, so that at least said portion is not executed correctly and that, consequently, the protected software **(2p)** is not completely functional.

2. Process according to claim 1, to limit usage of a protected Software **(2p),** comprising:
→ during the protection phase **(P):**
• defining:
- as Software execution characteristic liable to be monitored, a variable of measurement of the usage of a functionality of a software,
- as criterion to abide by, at least one threshold associated to each variable of measurement,
- and actualization means enabling to update at least one variable of measurement,
• constructing the exploitation means enabling the unit **(6)** to also implement the actualization means,
• and modifying the protected software **(2p):**
- by choosing as software execution characteristic to monitor, at least one variable of measurement of the usage of at least one functionality of a software,
- by choosing:
➢ at least one functionality of the protected software **(2p)** whose usage is liable to be monitored using a variable of measurement,
➢ at least one variable of measurement used to quantify the usage of said functionality,
➢ at least one threshold associated to a chosen variable of measurement corresponding to a limit of usage of said functionality,
➢ and at least one method of update of a chosen variable of measurement depending on the usage of said functionality,
- and by modifying at least one chosen portion of the source of the protected software **(2ps),** this modification being such that, during the execution of the protected Software **(2p),** the variable of measurement is actualized by means of the second execution part **(2peu)** depending on the usage of said functionality, and at least one threshold crossing is taken into account,
→ and during the usage phase **(U),** in the presence of the unit **(6),** and in the case where at least one threshold crossing corresponding to at least one limit of usage is detected, informing the data processing system **(3)** of it and/or modifying the functioning of the portion of the protected software **(2p),** so that the functioning of the protected software **(2p)** is modified.

3. Process according to claim 2, comprising:
→ during the protection phase **(P):**
• defining:
- for at least one variable of measurement, several associated thresholds,
- and different coercion means corresponding to each of said thresholds,
• and modifying the protected software **(2p):**
- by choosing in the source of the protected software **(2ps),** at least one chosen variable of measurement to which must be associated several thresholds corresponding to different limits of usage of the functionality,
- by choosing at least two thresholds associated to the chosen variable of measurement,
- and by modifying at least one chosen portion of the source of the protected Software **(2ps),** this modification being such that, during the execution of the protected Software **(2p),** the crossings of the various thresholds are taken into account differently, by means of the second execution part **(2peu),**
→ and during the usage phase **(U):**
• in the presence of the unit **(6):**
- in the case where the crossing of a first threshold is detected, enjoining the protected software **(2p)** not to use the corresponding functionality anymore,
- and in the case where the crossing of a second threshold is detected, making ineffective the corresponding functionality and/or at least one portion of the protected Software **(2p).**

4. Process according to claim 2 or 3, comprising:
→ during the protection phase **(P):**
• defining refilling means enabling to credit at least one software functionality monitored by a variable of measurement with at least one additional usage,
• constricting the exploitation means also allowing the unit **(6)** to implement the refilling means,
• and modifying the protected software **(2p):**
- by choosing in the source of the protected Software **(2ps),** at least one chosen variable of measurement enabling to limit the usage of a functionality and which must be able to be credited with at least one additional usage,
- and by modifying at least one chosen portion, this modification being such that during a phase called of refilling, at least one additional usage of at least one functionality corresponding to a chosen variable of measurement can be credited,
→ and during the phase of refilling:
• reactualizing at least one chosen variable of measurement and/or at least one associated threshold, so as to allow at least one additional usage of the functionality.

5. Process according to claim 1, comprising:
→ during the protection phase **(P):**
• defining:
- as Software execution characteristic liable to be monitored, a profile of software usage,
- and as criterion to abide by, at least one feature of Software execution,
• and modifying the protected Software **(2p):**
- by choosing as Software execution characteristic to monitor at least one profile of Software usage,
- by choosing at least one feature of execution by which at least one chosen profile of usage must abide,
- and by modifying at least one chosen portion of the source of the protected software **(2ps),** this modification being such that, during the execution of the protected Software **(2p),** the second execution part **(2peu)** abides by all the chosen features of execution,
→ and during the usage phase **(U)** in the presence of the unit **(6),** and in the case where it is detected that at least one feature of execution is not abided by, informing the data processing system **(3)** of it and/or modifying the functioning of the portion of the protected software **(2p),** so that the functioning of the protected Software **(2p)** is modified.

6. Process according to claim 5, comprising:
→ during the protection phase **(P):**
• defining:
- an instructions set whose instructions are liable to be executed in the unit **(6),**
- a set of instructions commands for said instructions set, said instructions commands being liable to be executed in the data processing system **(3)** and to trigger in the unit **(6)** the execution of the instructions,
- as profile of usage, the chaining of the instructions,
- as feature of execution, an expected chaining for the execution of the instructions,
- as detection means **(17),** means enabling to detect that the chaining of the instructions does not correspond to the expected one,
- and as coercion means **(18),** means enabling to inform the data processing system **(3)** and/or to modify the functioning of the portion of protected Software **(2p)** when the chaining of the instructions does not correspond to the expected one,
• constructing the exploitation means also enabling the unit **(6)** to execute the instructions of the instructions set, the execution of said instructions being triggered by the execution in the data processing system **(3),** of the instructions commands,
• and modifying the protected software **(2p):**
- by modifying at least one chosen portion of the source of the protected Software **(2ps),** this modification being such that:
➢ at least one chosen algorithmic processing is split so that during the execution of the protected software **(2p),** said algorithmic processing is executed by means of the second execution part **(2peu),** using instructions,
➢ for at least one chosen algorithmic processing, instructions commands are integrated to the source of the protected software **(2ps),** so that during the execution of the protected software **(2p),** each instruction command is executed by the first execution part **(2pes)** and triggers in the unit **(6),** the execution by means of the second execution part **(2peu),** of an instruction,
➢ a sequence of the instructions commands is chosen among the set of sequences allowing the execution of the protected software **(2p),**
➢ and the chaining by which must abide at least some of the instructions during their execution in the unit (6) is specified,
→ and during the usage phase **(U),** in the presence of the unit **(6),** in the case where it is detected that the chaining of the instructions executed in the unit **(6)** does not correspond to the expected one, informing the data processing system **(3)** of it and/or modifying the functioning of the portion of the protected software **(2p),** so that the functioning of the protected Software **(2p)** is modified.

7. Process according to claim 6, comprising:
→ during the protection phase **(P):**
• defining:
- as instructions set, an instructions set whose at least some instructions work with registers and use at least one operand with the invention of returning a result,
- for at least some of the instructions working with registers:
➢ a part **(PF)** defining the functionality of the instruction,
➢ and a part defining the expected chaining for the execution of the instructions and including bits fields corresponding to:
◊ an identification field of the instruction **(CII),**
◊ and for each operand of the instruction:
* a flag field **(CDₖ),**
* and an expected identification field **(CIPₖ)** of the operand,
- for each register belonging to the exploitation means and used by the instructions set, a generated identification field **(CIGᵥ)** in which is automatically memorized the identification of the last instruction which has returned its result in said register,
- as detection means **(17),** means enabling, during the execution of an instruction, for each operand, when the flag field **(CDₖ)** imposes it, to check the equality of the generated identification field **(CIGᵥ)** corresponding to the register used by said operand, and the expected identification field **(CIPₖ)** of the origin of said operand,
- and as coercion means **(18),** means enabling to modify the result of the instructions, if at least one of the checked equalities is false.

8. Process according to one of the claims 1 to 7, comprising:
→ during the protection phase **(P):**
• modifying the protected software **(2p):**
- by choosing at least one variable used in at least one chosen algorithmic processing, which during the execution of the protected software **(2p),** partially defines the state of the protected software **(2p),**
- by modifying at least one chosen portion of the source of the protected software **(2ps),** this modification being such that during the execution of the protected software **(2p),** at least one chosen variable or at least one copy of chosen variable resides in the unit **(6),**
- and by producing:
➢ the first object part **(2pos)** of the protected Software **(2p),** said first object part **(2pos)** being such that during the execution of the protected Software **(2p),** at least one portion of the first execution part **(2pes)** takes also into account that at least one variable or at least one copy of variable resides in the unit **(6),**
➢ and the second object part **(2pou)** of the protected software **(2p),** said second object part **(2pou)** being such that, after upload to the unit **(6)** and during the execution of the protected Software **(2p),** appears the second execution part **(2peu)** by means of which at least one chosen variable, or at least one copy of chosen variable resides too in the unit **(6),**
→ and during the usage phase **(U):**
• in the presence of the unit **(6)** each time a portion of the first execution part **(2pes)** imposes it, using a variable or a copy of variable residing in the unit **(6),** so that said portion is executed correctly and that, consequently, the protected Software **(2p)** is completely functional,
• and in the absence of the unit **(6),** in spite of the request by a portion of the first execution part **(2pes)** to use a variable or a copy of variable residing in the unit **(6),** not being able to fulfill said request correctly, so that at least said portion is not executed correctly and that, consequently the protected Software **(2p)** is not completely functional.

9. Process according to claim 6 comprising:
→ during the protection phase **(P):**
• defining:
- as a triggering command, an instruction command,
- as a dependent function, an instruction,
- as an order, at least one argument for a triggering command, corresponding at least in part to the information transmitted by the data processing system **(3)** to the unit **(6),** so as to trigger the execution of the corresponding dependent function,
- a method of renaming of the orders enabling to rename the orders so as to obtain triggering commands with renamed orders,
- and restoring means **(20)** designed to be used in the unit **(6)** during the usage phase **(U),** and enabling to restore the dependent function to execute, from the renamed order,
• constructing exploitation means enabling the unit **(6)** to also implement the restoring means,
• and modifying the protected Software **(2p):**
- by choosing in the source of the protected Software **(2ps),** triggering commandes,
- by modifying at least one chosen portion of the source of the protected Software **(2ps)** by renaming the orders of the chosen triggering commands, so as to conceal the identity of the corresponding dependent functions,
- and by producing:
➢ the first object part **(2pos)** of the protected Software **(2p),** said first object part **(2pos)** being such that during the execution of the protected software **(2p),** the triggering commands with renamed orders are executed,
➢ and the second object part **(2pou)** of the protected software **(2p)** containing the exploitation means also implementing the restoring means **(20),** said second object part **(2pou)** being such that, after upload to the unit **(6)** and during the execution of the protected Software **(2p),** the identity of the dependent functions whose execution is triggered by the first execution part **(2pes)** is restored by means of the second execution part **(2peu),** and the dependent functions are executed by means of the second execution part **(2peu),**
→ and during the usage phase **(U):**
• in the presence of the unit **(6)** and each time a triggering command with renamed order, contained in a portion of the first execution part **(2pes)** imposes it, restoring in the unit **(6),** the identity of the corresponding dependent function and executing it, so that said portion is executed correctly and that, consequently, the protected software **(2p)** is completely functional,
• and in the absence of the unit **(6),** in spite of the request by a portion of the first execution part **(2pes),** to trigger the execution of a dependent function in the unit **(6),** not being able to fulfill said request correctly, so that at least said portion is not executed correctly and that, consequently, the protected software **(2p)** is not completely functional.

10. Process according to claim 9, comprising:
→ during the protection phase **(P):**
• defining for at least one dependent function, a family of dependent functions algorithmically equivalent, but triggered by triggering commands whose renamed orders are different,
• and modifying the protected software **(2p):**
- by choosing, in the source of the protected Software **(2ps)** at least one triggering command with renamed order,
- and by modifying at least one chosen portion of the source of the protected Software **(2ps)** by replacing at least the renamed order of one chosen triggering command with renamed order, with another renamed order, triggering a dependent function of the same family.

11. Process according to claim 10, comprising:
→ during the protection phase **(P),** defining, for at least one dependent function, a family of algorithmically equivalent dependent functions:
- by concatenating a field of noise to the information defining the functional part of the dependent function to execute in the unit **(6),**
- or by using the identification field of the instruction **(CII)** and the expected identification fields **(CIPₖ)** of the operands.

12. Process according to claim 9, 10 or 11, comprising:
→ during the protection phase **(P):**
• defining:
- as method of renaming of the orders, a ciphering method to cipher the orders,
- and as restoring means **(20),** means implementing a deciphering method to decipher the renamed orders and thus restore the identity of the dependent functions to execute in the unit **(6).**

13. Process according to one of the claims 1 to 12, comprising:
→ during the protection phase **(P):**
• modifying the protected software **(2p):**
- by choosing, in the source of the protected software **(2ps),** at least one conditional branch carried out in at least one chosen algorithmic processing,
- by modifying at least one chosen portion of the source of the protected Software **(2ps),** this modification being such that during the execution of the protected software **(2p),** the functionality of at least one chosen conditional branch is executed, by means of the second execution part **(2peu),** in the unit **(6),**
- and by producing:
➢ the first object part **(2pos)** of the protected Software **(2p),** said first object part **(2pos)** being such that during the execution of the protected Software **(2p),** the functionality of at least one chosen conditional branch is executed in the unit **(6),**
➢ and the second object part **(2pou)** of the protected Software **(2p),** said second object part **(2pou)** being such that, after upload to the unit **(6)** and during the execution of the protected Software **(2p),** appears the second execution part **(2peu)** by means of which the functionality of at least one chosen conditional branch is executed,
→ and during the usage phase **(U):**
• in the presence of the unit **(6)** and each time a portion of the first execution part **(2pes)** imposes it, executing the functionality of at least one conditional branch in the unit **(6),** so that said portion is executed correctly and that, consequently, the protected software **(2p)** is completely functional,
• and in the absence of the unit **(6)** and in spite of the request by a portion of the first execution part **(2pes)** to execute the functionality of a conditional branch in the unit **(6),** not being able to fulfill said request correctly, so that at least said portion is not executed correctly and that consequently, the protected software **(2p)** is not completely functional.

14. Process according to claim 13, comprising, during the protection phase **(P),** modifying the protected software **(2p):**
- by choosing, in the source of the protected software **(2ps),** at least one series of chosen conditional branches,
- by modifying at least one chosen portion of the source of the protected software **(2ps),** this modification being such that during the execution of the protected Software **(2p),** the overall functionality of at least one chosen series of conditional branches is executed, by means of the second execution part **(2peu),** in the unit **(6),**
- and by producing:
➢ the first object part **(2pos)** of the protected software **(2p),** said first object part **(2pos)** being such that during the execution of the protected software **(2p),** the functionality of at least one chosen series of conditional branches is executed in the unit **(6),**
> and the second object part **(2pou)** of the protected software **(2p),** said second object part **(2pou)** being such that, after upload to the unit **(6)** and during the execution of the protected software **(2p),** appears the second execution part **(2peu)** by means of which the overall functionality of at least one chosen series of conditional branches is executed.

15. Process according to one of the claims 1 to 14, comprising splitting the protection phase **(P)** into a prior protection sub-phase **(P1),** independent of the software to protect and a subsequent protection sub-phase **(P2),** dependent of the software to protect.

16. Process according to claim 15, comprising, during the prior protection sub-phase **(P1),** making intervene a definitions stage **(S11)** during which are carried out all the definitions.

17. Process according to claim 16, comprising, after the definitions stage **(S11),** making intervene a construction stage **(S12)** during which are constructed the exploitation means.

18. Process according to claim 17, comprising, after the construction stage **(S12),** making intervene a pre-customization stage **(S13),** comprising uploading to a blank unit **(60),** at least a part of the exploitation means with the intention of obtaining a pre-customized unit **(66).**

19. Process according to claim 16 or 17, comprising, during the prior protection sub-phase **(P1),** making intervene a tools making stage **(S14)** during which are made tools enabling to help generate protected software or to automate software protection.

20. Process according to claims 15 and 18, comprising splitting the subsequent protection sub-phase **(P2),** into:
• a creation stage **(S21)** during which the protected Software **(2p)** is created, from the vulnerable Software **(2v),**
• possibly, a modification stage **(S22)** during which the protected Software **(2p)** is modified,
• and a customization stage **(S23)** during which:
- the second object part **(2pou)** of the protected Software **(2p)** containing the exploitation means is uploaded to at least one blank unit **(60)** with the invention of obtaining at least one unit **(6),**
- or a part of the second object part **(2pou)** of the protected software **(2p)** possibly containing the exploitation means is uploaded to at least one pre-customized unit **(66)** with the invention of obtaining at least one unit **(6).**

21. Process according to claims 19 and 20, comprising, during the creation stage **(S21)** and possibly during the modification stage **(S22),** using at least one tool which help generate protected software or which automate software protection.
